(19) Europäisches Patentamt
European Patent Office
Office européen des brevets

(11) **EP 3 425 909 B1**

(12) **EUROPEAN PATENT SPECIFICATION**

(45) Date of publication and mention
of the grant of the patent:
**01.04.2020  Bulletin 2020/14**

(51) Int Cl.:
*H04N 17/00* (2006.01)          *H04N 21/24* (2011.01)
*H04N 21/442* (2011.01)          *H04L 29/06* (2006.01)

(21) Application number: **18188775.3**

(22) Date of filing: **31.07.2015**

(54) **VIDEO QUALITY MONITORING**

VIDEOQUALITÄTSÜBERWACHUNG

SURVEILLANCE DE QUALITÉ VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.08.2014   US 201462031893 P**

(43) Date of publication of application:
**09.01.2019   Bulletin 2019/02**

(62) Document number(s) of the earlier application(s) in
accordance with Art. 76 EPC:
**15827003.3 / 3 175 625**

(73) Proprietor: **Ineoquest Technologies, Inc.
Westwood, MA 02090 (US)**

(72) Inventors:
• **DION, Gino Louis
Quispamsis, New Brunswick E2G 0E6 (CA)**
• **NEWTON, Stuart W.
Oxford, Oxfordshire OX2 9QE (GB)**
• **HARRISON, Calvin W.
Franklin, MA 02038 (US)**
• **WELCH, James T.
Wake Forest, NC North Carolina 27587 (US)**
• **DAWSON, Peter S.
East Falmouth, MA 02536 (US)**

(74) Representative: **Findlay, Alice Rosemary
Reddie & Grose LLP
The White Chapel Building
10 Whitechapel High Street
London E1 8QS (GB)**

(56) References cited:
EP-A2- 2 480 001          WO-A1-2007/128097
US-A1- 2006 088 035          US-A1- 2006 184 670
US-A1- 2008 089 239          US-A1- 2009 097 413
US-A1- 2009 300 688

**Description**

BACKGROUND

The present disclosure relates generally to the field of video quality monitoring, and in particular streaming media using Internet Protocol (IP) and General Packet Radio System Tunneling Protocol (GTP) or any similar current or future standards. More specifically, the present disclosure is related to monitoring and/or enhancing the video quality, such as for streaming media as seen by an end user on a mobile device 118.

Streaming media is an increasingly popular method for providing, and consuming, media products including various video and audio products, such as video on demand, Internet & television, streaming radio, and the like. However, data transport requirements for these applications exhibit high sensitivity to data loss and delivery time distortion and there are many factors that may impact the quality of the streaming media performance that can negatively impact the quality of service (QOS) and, thus, the subjective end user experience, quality of experience (QoE). A commonly experienced problem is a delay or freeze-frame experienced during consumption of the streaming media product, in which all media data downloaded to the client has been played, and the client is waiting for the next piece of media data. Such freezes, or hangs, give rise to user frustration and dissatisfaction.

In the interest of maintaining user satisfaction, and therefore user volume, streaming media providers are constantly working towards improving media distribution systems. However, given the complexity of streaming media distribution systems, it may often be difficult for a streaming media provider to determine what portions of the streaming media system are resulting in the greatest number of problems. As such, much resource allocation toward improving media distribution systems may often be expended relatively blindly. One root problem may be tied to the inability of media distribution providers to accurately assess the performance of their media distribution systems and identify the greatest weaknesses of the media distribution system.

As more users interact with streaming media on mobile devices **118** such as smart phones, pad computers, tablets, smart glasses, such as Google Glass, smart watches, and the like, the media distribution system expands to include the mobile telecommunications system where the distribution system used to deliver the streaming media may change as the users move geographically. The distribution system may move between cell towers, micro-cells, and the like and be influenced by the reception capability of the user's device.

There are various schemes to implement quality of service (QOS) on such networks to address the requirements of streaming media, especially when intermixed with conventional, time-insensitive, guaranteed delivery protocol stack data traffic. Furthermore, for efficiency reasons, the streaming media transport often uses a non-guaranteed delivery upper layer protocol stack such as UDP/IP making recovery of data in the presence of packet loss difficult. Regardless of whether QOS-enabled or non-QOS-enabled networks are employed, it is necessary to monitor the behavior of packet loss, delivery time distortion, and other real-time parameters of the network to assure satisfactory quality streaming media delivery. However, these schemes generally look at quality of service, QoS, only with respect to the delivery of individual data packets. Increasingly, videos are being transmitted as individual segments, where the delivery of the entire segment has more impact on video quality of experience than the delivery of individual packets.

Management Information Bases (MIBs) may include definitions for a number of network parameters such as packet loss, inter-arrival times, errors, percentage of network utilization, etc., whose purpose is to indicate to a network manager the general operating conditions of the network. Such traditional forms of monitoring network behavior cannot easily indicate the effects that network performance has on a single or a group of individual streaming media streams. Data gathering from MIBs operating across a range of network layers combined with a highly skilled and experienced practitioner would be required to simply determine the jitter imposed on a single MPEG video stream, for instance, and would only be possible by post-processing data gathered while the network was in operation. Determining the cause of a fault in a streaming media stream may be possible through such analysis but lacks the real-time indication of a network fault that is required to maintain high-quality networks such as for video or audio delivery. It also does not address the need to monitor large numbers of streams in real-time such as streams of Video-on-Demand (VoD) networks using less technically skilled operations personnel, as would be necessary to enable implementation of continuous cost-effective quality control procedures for widely deployed networks such as for VoD.

Histograms are often used to present the arrival time behavior of packets on a network, but such histograms may only represent the aggregate behavior of packets arriving at the measurement node due to the need to combine MIB data from a range of network layers to extract sufficient information to track a particular stream's performance. Traditional histograms define the jitter between any two packets. Streaming media requires more in-depth knowledge, such as the time variation across many packets referred to as the "network jitter growth". This network jitter growth affects the streaming media quality as experienced by the user due to intermediate buffer overflow/underflow between the media source and its destination.

Network jitter growth of a media stream due to traffic congestion may also be an indicator of an impending fault condition and determining its presence as it begins to occur may be used to avoid transport failures, rather than simply to react to faults after they occur. Conventional post-processed MIB analysis is inadequate for these purposes as described above.

The concept of regulating stream flow in a network based on the leaky bucket paradigm describes a methodology that might be used to prevent intermediate buffer overflow and packet jitter by regulating the outflow of data based on a set of parameters configured to optimize a particular flow. This does not address the need to analyze and continuously monitor multiple streams as is required during the installation and operation of networks carrying streaming media, especially for those enterprises whose revenue is derived from the high quality delivery of streaming media, such as broadcast and cable television entities.

A common scheme used to effectively monitor multiple video streams is to decode each stream's MPEG content (for the video example) and display the streams on a large group of television screens. Monitoring personnel then watch the screens looking for any anomalous indications and take appropriate corrective action. This is a subjective and error prone process, as there is a possibility that a transient fault might be missed. This is also a reactive process, as corrective action may only be taken after a fault has occurred. Furthermore, this is also a relatively expensive process in terms of both equipment and personnel costs. It also provides little or no indications of the root cause of the fault, thus adding to the time required for implementing corrective action. This approach also does not easily scale to modern video delivery systems based upon emerging, cost-effective high-bandwidth, networks intended to transport thousands of independent video streams simultaneously. In addition, this approach cannot pinpoint the location of the fault. To do so, the personnel and equipment must be replicated at multiple points in the distribution network, greatly increasing the cost. For this to be effective, the personnel must monitor the same stream at exactly the same time for comparison.

Many types of network delivery impairments are transient in nature affecting a limited number of packets during a period of momentary traffic congestion, for example. Such impairments or impairment patterns may be missed using traditional monitoring personnel watching video monitors. By not recognizing possible repeating impairment patterns, faults may exist for much longer periods because after the fault has passed, there is no residual trace information available for analysis. The longer a fault persists, the worse the customer satisfaction levels, and the greater the potential for lost revenues.

Streaming Video-over-IP is a technology that allows the end user to watch video content over an IP network. Examples of Video-over-IP include Video on Demand (VoD), and IPTV (Internet Protocol Television). A Video-over-IP network may include a service provider network including one or more remote video servers a core network (e.g., Internet), and a local hub/edge switch, such as a cable television (CATV) hub or Digital Subscriber Line Access Multiplexers (DSLAMs). This network is then coupled to customer premises equipment (CPE) such as a set top box (STB) and television (often including various other home networking equipment), via a Network Interface Device (NID) typically located at a consumer's home. In addition to delivering streaming media to the consumer's home, the Video-over-IP technology allows the consumer to control the stream through the STB, enabling features such as channel changes (by selecting the particular stream(s) to be delivered), fast forward, pause, and rewind.

A disadvantage of conventional streaming media is that the quality of the IP stream may be degraded as it travels over the network before arriving at the end point (e.g., a consumer's television). Service providers may place monitors at various points along the network to measure the quality of the video stream being provides using one of a variety of quality of service (QOS) metrics. In this manner, service providers may relatively easily measure QOS at points between a remote video server and a customer premise equipment to isolate network problems occurring therein. However, the QOS of ultimate concern is that experienced by the consumer at the video destination or end point, such as the consumer's television.

When responding to a customer complaint of poor video quality, a service provider may initially check the network for QOS issues. In the event an acceptable QOS is detected at hub, service providers generally have no choice but to send a service technician to the consumer's premises to attempt to isolate the problem within the CPE. As many QOS problems are transient, a service technician may be required to make repeated visits to a consumer's home, at various times of day, in order to locate and properly diagnose the problem(s). It has been estimated that in many instances, the total cost to a service provider of sending a service technician to a consumer's home is at least $1,000.00 per visit. The service provider's inability to remotely monitor the quality of service from outside the consumer's home thus tends to be responsible for relatively high customer service costs.

As increasing amounts of audio visual (AV) content is distributed over-the-air to consumer's mobile devices using cellular networks, another layer of complexity is added to the tracking of video QOS on consumer devices. The identification of points of QOS degradation across a media delivery system that spans multiple modalities becomes complex.

Audio visual (AV) content is typically distributed from one or more central locations to local markets over relatively complex networks spanning large geographical areas. This AV content is typically supported by advertisements. However, while the AV content is typically generated for wide distribution, e.g., to national or international markets, advertisements are often intended for comparatively narrow distribution, such as for regional or local audiences. Advertisements are thus often spliced into the AV content at the regional or local level. To accommodate this splicing, the originator of the AV content, e.g., the television network, typically supplies the content with embedded markers, such as those commonly referred to as "avails" and/or SCTE-35 advertisement cue signals. Local content providers, such as network affiliate television stations and/or cable television (CATV) operators may use these avails to properly insert these local advertisements. A typical hour of AV content, for example, may be provided with four avails each corresponding to a 30 second time slot, or two avails each corresponding to a one minute time slot. These time slots are thus available for insertion of local advertisements.

Automated equipment is typically used to detect the avails and to splice in the local advertising content to minimize errors. However, errors may occur due to many factors, including bottlenecks or other traffic issues within the content distribution network, by errors in placement or detection of the avails, or simply by poor quality of the advertisements being supplied to the local insertion point. Local advertisements may thus be spliced in too early or too late, at audio levels that may be too high or too low, or in generally poor condition. This may result in the advertisements overrunning portions of the program, the advertisements being cut off, and/or the advertisements simply being of generally poor quality. These errors are not only problematic from a quality of experience (QoE), the viewer's subjective experience of watching the video which may be represented by a variety of performance metrics, but may also result in substantial refunds being due to advertisers who typically pay sizable fees for the airing of each 30 or 60 second advertisement.

A related problem pertains to verification of correct advertisement insertion. In this regard, it is often difficult for a local television station or CATV company to refute refund claims by advertisers who complain that their advertisements were improperly inserted, or were otherwise of poor quality at particular locations within the distribution network. Even in the event the quality of the program and advertisement are monitored by the television station or CATV company at the central insertion location, there is no guarantee that the quality of the content was satisfactory as experienced by the end user.

In an information-based society, the rate at which information is received and disseminated may prove crucial with respect to the value of that information. The value of this information may be even more greatly impacted in sectors in which the decisions being made that are associated with the data are highly dependent upon the freshness of such information.

For example, advertisers have limited advertising budgets and choose which television/radio stations to advertise on based upon the ratings of that particular television/radio station. Unfortunately, the information provided to the advertisers that is used to make such advertising determinations may be stale. For example, rating information is typically presented in ratings books, which are often only compiled and released every three months. Accordingly, this may result in decisions being made based upon aged data that may have since changed considerably.

US 2009/300688 A1 describes a method for providing Quality of Service (QOS) information regarding video content delivery. The QOS information is related to the location of serviced wireless devices operating within a service area. The QOS/position information of the services wireless devices is collected and consolidated and a QOS map for the service area is produced based upon the consolidated collected QOS/position information.

US 2009/097413 A1 describes a method for analyzing packetized network traffic. The method involves analyzing multi-stream network traffic at a plurality of different locations on the packetized network.

Accordingly, a need exists for monitoring QOS for video content on consumer devices and, when a degradation in QOS is observed, identifying where the degradation occurred across a media distribution system having a plurality of transport modalities, video processing modules and computer systems.

## SUMMARY

The present invention is defined by the appended claims, to which reference should now be made.

In one aspect of the present disclosure, methods, systems and devices for monitoring the quality of traffic transmitted over a mobile network, such as video traffic, is disclosed. Embodiments include tapping into a mobile network traffic stream, organizing the tapped network traffic information into a collection associated with at least one individual video session associated with a single user and determining a video quality parameter for the at least one individual video session based at least in part on the collected information. The video quality parameter may be at least one of packet jitter growth, packet loss, instantaneous flow rate balance (IFRB), delay between packets, a jitter statistic, a total time required to receive all packets needed to fully assemble a segment, a statistic of errors in key frames, Hypertext Transfer Protocol (HTTP) transport issues and errors (such as but not limited to 400 and 500 range HTTP responses), and Domain Name System (DNS) resolution performance and failures. Embodiments may further include aggregating context information for the at least one individual video session, wherein context information may include at least one of the cell tower, smart node, serving gateway node, user, subscriber level, device type, unique device identifier such Mobile Equipment Identifier (MEID), International Mobile Equipment Identity (IMEI), International Mobile Subscriber Identity (IMSI) and the like, application, and/or content provider involved in a situation of delivery of video traffic and transmitting aggregated context information and at least one video quality parameter, such as to a server, such as a video quality server.

The present disclosure describes a method for monitoring video quality transmitted over a mobile video delivery network facility, the method according to one disclosed non-limiting embodiment of the present disclosure can include tapping into a mobile network traffic stream on the mobile video delivery network facility; organizing traffic from the tapped mobile network traffic stream into at least one individual video session; determining a video quality parameter for the at least one individual video session wherein the video quality parameter is at least one of packet jitter growth, packet loss, instantaneous flow rate balance (IFRB), delay between packets, a jitter statistic, a total time required to receive all packets needed to fully assemble a segment, a statistic of errors in key frames, a measure of HTTP transport quality and a measure of DNS resolution performance; aggregating context information for the at least one individual video session wherein the context information includes at least one of a cell tower, smart node, serving gateway node, user, subscriber level, device type, application, and content provider; and transmitting the aggregated context information and at least one video quality parameter to a video quality server.

A further embodiment of any of the foregoing embodiments of the present disclosure may include, wherein the mobile network traffic stream includes General Packet Radio System Tunneling Protocol (GTP) header information.

A further embodiment of any of the foregoing embodiments of the present disclosure may include, wherein the individual video session is associated with at least one of a unique device and a unique mobile account.

A further embodiment of any of the foregoing embodiments of the present disclosure may include, wherein the individual video session is associated with a unique user.

The present disclosure describes a method for monitoring video quality transmitted over a mobile video delivery network facility the method according to one disclosed non-limiting embodiment of the present disclosure can include tapping into a mobile video delivery network facility traffic stream in at least two locations; organizing traffic from the tapped mobile video delivery network traffic stream into at least one individual common video session identified at each location; determining a video quality parameter associated with each location for the at least one individual common video session wherein the video quality parameter is at least one of packet jitter growth, packet loss, instantaneous flow rate balance (IFRB), delay between packets, a jitter statistic, a total time required to receive all packets needed to fully assemble a segment, a statistic of errors in key frames, a measure of HTTP transport quality and a measure of DNS resolution performance; aggregating context information for the at least one individual video session wherein the context information includes at least one of a cell tower, smart node, serving gateway node, user, subscriber level, device type, application, and content provider; and transmitting the aggregated context information and at least one video quality parameter to a video quality server.

A further embodiment of any of the foregoing embodiments of the present disclosure may include, wherein at least one of the locations is in at least one of an LTE mobile core between an S5/S8 interface and an S11 interface and the LTE mobile core between an S1 interface and the S5/S8 interface.

A further embodiment of any of the foregoing embodiments of the present disclosure may include, wherein at least one of the locations is outside of the LTE mobile core.

A further embodiment of any of the foregoing embodiments of the present disclosure may include, wherein at least one of the locations is on a mobile viewing device.

A further embodiment of any of the foregoing embodiments of the present disclosure may include, wherein one of the locations in the LTE mobile core is a virtual probe.

The present disclosure describes a method for monitoring video quality transmitted over a mobile video delivery network facility the method according to one disclosed non-limiting embodiment of the present disclosure can include, tapping into a mobile video delivery network traffic stream in at least two locations wherein at least one of the locations is a passive monitor and at least one of the locations is an active monitor; organizing traffic from the tapped mobile video delivery network traffic stream into at least one individual common video session identified at each location; determining a video quality parameter associated with each location for the at least one individual common video session wherein the video quality parameter is at least one of packet jitter growth, packet loss, instantaneous flow rate balance (IFRB), delay between packets, a jitter statistic, a total time required to receive all packets needed to fully assemble a segment, a statistic of errors in key frames, a measure of HTTP transport quality and a measure of DNS resolution performance; aggregating context information for the at least one individual video session wherein the context information includes at least one of a cell tower, smart node, serving gateway node, user, subscriber level, device type, application, and content provider; and transmitting the aggregated context information and at least one video quality parameter to a video quality server.

A further embodiment of any of the foregoing embodiments of the present disclosure may include, wherein one of the locations is a virtual probe in the LTE mobile core.

The present disclosure describes a method for monitoring video quality transmitted over a mobile video delivery network facility the method according to one disclosed non-limiting embodiment of the present disclosure can include, tapping into a mobile video delivery network traffic stream in at least two locations wherein at least one of the locations is a mobile device using an SDK; organizing traffic from the tapped mobile video delivery network traffic stream into at least one individual common video session identified at each location; determining a video quality parameter associated with each location for the at least one individual common video session wherein the video quality parameter is at least one of packet jitter growth, media delivery quality, packet loss, instantaneous flow rate balance (IFRB), delay between packets, a jitter statistic, a total time required to receive all packets needed to fully assemble a segment, a statistic of errors in key frames, a measure of HTTP transport quality and a measure of DNS resolution performance; aggregating context information for the at least one individual video session wherein the context information includes location and at least one of a cell tower, user, subscriber level, device type, application, and content provider; and transmitting at least location and one media delivery quality metric to a video quality server.

A further embodiment of any of the foregoing embodiments of the present disclosure may include, wherein the video quality server is one of a physical server and a virtual server.

The present disclosure describes a method for monitoring video quality transmitted over a mobile video delivery network the method according to one disclosed non-limiting embodiment of the present disclosure can include, tapping into a mobile video delivery network traffic stream in at least two locations; organizing traffic from the tapped mobile video delivery network traffic stream into at least one individual common video session identified at each location; determining a video quality parameter associated with each location for the at least one individual common video session wherein the video quality parameter is at least one of packet jitter growth, media delivery quality, packet loss, instantaneous flow rate balance (IFRB), delay between packets, a jitter statistic, a total time required to receive all packets needed to fully assemble a segment, a statistic of errors in key frames, a measure of HTTP transport quality and a measure of DNS resolution performance; aggregating user information parameters for the at least one individual video session wherein the user information parameters include location of user, subscriber level, device type, application, user interactions with application; user interactions with device and content provider; and transmitting at least one video quality parameter and one user information parameter to a video quality server.

The present disclosure describes a method for monitoring quality of a video session that uses video traffic transmitted over a mobile video delivery network facility the method according to one disclosed non-limiting embodiment of the present disclosure can include, monitoring a first mobile video delivery network facility that handles at least a portion of the video traffic for the video session for information about the video traffic, wherein the first mobile video delivery network facility is located in an LTE mobile core monitoring a second mobile video delivery network facility that handles at least a portion of the video traffic for the video session for information about the video traffic, wherein the second mobile video delivery network facility is located external to an LTE mobile core; and associating the information collected from the two mobile video delivery network facilities about the video traffic with a common video session; and determining a video quality parameter relating to the quality of the video session based on the collected information about the video traffic.

A further embodiment of any of the foregoing embodiments of the present disclosure may include, wherein the LTE mobile core consists of a packet data network gateway, a serving node gateway, a base station and at least one of a control plane and a user/data plane and wherein a location of the LTE mobile core is at least one of an S5/S8 interface, an S11 interface and an S1 interface.

A further embodiment of any of the foregoing embodiments of the present disclosure may include, wherein the second mobile video delivery network facility is one of the group of a stream ingestion location, cache distribution network, head-end, edge distribution location and Adaptive Bit Rate Sources (ABR).

A further embodiment of any of the foregoing embodiments of the present disclosure may include, wherein the second mobile video delivery network facility is a viewing device.

A further embodiment of any of the foregoing embodiments of the present disclosure may include, wherein the viewing device is at least one of a mobile phone, a laptop computer, a tablet and a television.

The present disclosure describes a method for monitoring quality of a video session that uses traffic transmitted over a core mobile video delivery network facility the method according to one disclosed non-limiting embodiment of the present disclosure can include, tapping into at least one device within the core mobile video delivery network facility using a virtual probe that is disposed within the at least one device, wherein the virtual probe reports at least one of information about operation of the device and performance of the core mobile video delivery network facility to a host system that collects information about the performance of the core mobile video delivery network facility.

A further embodiment of any of the foregoing embodiments of the present disclosure may include, wherein the device is a small cell hardware device.

A further embodiment of any of the foregoing embodiments of the present disclosure may include, wherein the probe performs active media stream monitoring.

A further embodiment of any of the foregoing embodiments of the present disclosure may include, wherein the probe performs passive monitoring.

A further embodiment of any of the foregoing embodiments of the present disclosure may include, wherein the probe performs both active media stream monitoring and passive monitoring.

A further embodiment of any of the foregoing embodiments of the present disclosure may include, wherein reporting the performance of the delivery network includes reporting on at least one of quality of the video stream through the device and quality of the network traffic through the device.

The present disclosure describes a method for monitoring quality of a video session that uses traffic transmitted over a mobile video delivery network facility the method according to one disclosed non-limiting embodiment of the present disclosure can include, monitoring the mobile video delivery network facility that handles at least a portion of video traffic for the video session for information about the video traffic at a location of the mobile video delivery network facility; monitoring at least one user mobile device that plays video delivered by the mobile video delivery network facility using a software development kit (SDK) that reports at least one media delivery quality metric; and delivering information concerning the monitored device and facility from a location of the mobile video delivery network facility and from the SDK to a collection application.

A further embodiment of any of the foregoing embodiments of the present disclosure may include, wherein the collection application is a virtualized application.

A further embodiment of any of the foregoing embodiments of the present disclosure may include, wherein the collection application is deployed on a dedicated server.

A further embodiment of any of the foregoing embodiments of the present disclosure may include, wherein the collection application is used to measure an impact of a state of the monitored user mobile device on the quality of the video played on the mobile device.

The present disclosure describes a method for monitoring quality of a video session that uses video traffic transmitted over a mobile video delivery network facility the method according to one disclosed non-limiting embodiment of the present disclosure can include, monitoring a first mobile delivery network facility that handles at least a portion of the video traffic for a session for information about the video traffic for at least one operational metric; monitoring a second mobile video delivery network facility that handles at least a portion of the video traffic for the session for information about the video traffic for at least one behavioral metric; and reporting the at least one operational metric and the at least one behavioral metric to a collection application.

A further embodiment of any of the foregoing embodiments of the present disclosure may include, wherein the collection application is a virtualized application.

A further embodiment of any of the foregoing embodiments of the present disclosure may include, wherein the collection application is deployed on a dedicated server.

A further embodiment of any of the foregoing embodiments of the present disclosure may include, wherein the collection application is used to measure an impact of a state of a monitored location of the mobile video delivery network facility on the quality of the video session played on a mobile device.

A further embodiment of any of the foregoing embodiments of the present disclosure may include, wherein the at least one operational metric is selected from the group consisting of is at least one of packet jitter growth, media delivery quality, packet loss, instantaneous flow rate balance (IFRB), delay between packets, a jitter statistic, a total time required to receive all packets needed to fully assemble a segment, statistics of errors in key frames, a measure of HTTP transport quality and a measure of DNS resolution performance.

A further embodiment of any of the foregoing embodiments of the present disclosure may include, wherein the at least one behavioral metric is selected from the group consisting of TCP video access time exceeded, TCP video access failure, buffer fill time exceeded, buffer full condition not met, download rate, video terminated by server, video terminated by network, video sessions counted, video startup time exceeded, video startup time failure, service access time exceeded, service access failure, DNS lookup time exceeded, DNS lookup failures, user-communicated video quality, user selected early session termination, and user selected trick modes.

The present disclosure describes a method for monitoring quality of a video session that uses traffic transmitted over a mobile video delivery network facility the method according to one disclosed non-limiting embodiment of the present disclosure can include, monitoring a server that is a source of video traffic for a video session delivered over a mobile video delivery network facility using a passive monitor; monitoring the server that is the source of video traffic using an active monitor that pulls media segments from the server using the mobile video delivery network facility; reporting information from the passive monitor and the active monitor to a remote collection and computing system; and at the remote collection and computing system, correlating response times from the active monitor and the passive monitor to determine performance of at least one of a mobile video delivery network facility and a content delivery network (CDN) facility with respect to at least one metric.

A further embodiment of any of the foregoing embodiments of the present disclosure may include, wherein the remote collection and computing system is a virtualized system.

A further embodiment of any of the foregoing embodiments of the present disclosure may include, wherein the remote collection and computing system is a dedicated system.

A further embodiment of any of the foregoing embodiments of the present disclosure may include, wherein the at least one metric is selected from the group consisting of caching performance and network response time, a media delivery composite metric, a measure of quality of experience, a measure of real-time capacity of a cell tower to deliver video traffic, a quality-of-service tag, and an indicator of prioritization applied to the viewing device.

The present disclosure describes a method for monitoring quality of a video session that uses traffic transmitted over a mobile video delivery network facility the method according to one disclosed non-limiting embodiment of the present disclosure can include, monitoring at least one device within the mobile video delivery network facility using a transparent proxy server that is disposed within the at least one device, wherein the transparent proxy server reports at least one of information about operation of the device and performance of the mobile video delivery network facility to a host system that collects information about the performance of the mobile video delivery network facility.

## BRIEF DESCRIPTION OF THE DRAWINGS

The above and other features and advantages of this disclosure will be more readily apparent from a reading of the following detailed description of various aspects of the disclosure taken in conjunction with the accompanying drawings, in which:

FIG. 1 is a diagrammatic view of a media distribution system.
FIG. 2 is a diagrammatic view of a mobile core within a media distribution system.
FIGS. 3A-3C are diagrammatic views of methods of tapping an existing network traffic flow via the present disclosure's computer element.
FIG. 4 is a diagrammatic view of one embodiment of the present disclosure's video quality probe.
FIG. 5 is a flowchart of the operations of a mobile video quality probe.
FIG. 6 is a flowchart of the operations of a video quality probe.
FIGS. 7 through 12 are diagrammatic views of various streaming media system conditions.
FIG. 13 is a diagrammatic view of a graphical display of various media delivery state metrics.
FIG. 14 is a diagrammatic view of an embodiment of the computing element and its interconnection with the control and logging system.
FIG. 15 is a diagrammatic view of an embodiment of an adder and a counter that form part of the compute engine.
FIG. 16 is a flowchart of filtering network traffic.
FIG. 17 is a diagrammatic view of a conventional MPEG-2 transport stream over IP packet.
FIG. 18 is a diagrammatic view of an embodiment of the present disclosure.
FIG. 19 is a diagrammatic view of an embodiment of the present disclosure.
FIG. 20 is a diagrammatic view of an embodiment of the present disclosure.
FIG. 21 is a screen display of a Graphical User Interface associated with operation of an embodiment of the present disclosure.
FIG. 22 is another screen display of a Graphical User Interface associated with operation of an embodiment of the present disclosure.
FIG. 23 is a diagrammatic view of an embodiment of the present disclosure.
FIG. 24 is a diagrammatic view of an embodiment of the present disclosure.
FIG. 25 is a diagrammatic view of an embodiment of the present disclosure.
FIG. 26 is a diagrammatic view of an embodiment of the present disclosure.
FIG. 27 is a diagrammatic view of an embodiment of the present disclosure.
FIG. 28 is a diagrammatic view of an embodiment of the present disclosure.
FIG. 29 is a diagrammatic view of an embodiment of the present disclosure.
FIG. 30 is a diagrammatic view of an embodiment of the present disclosure.
FIG. 31 is a diagrammatic view of an embodiment of the present disclosure.
FIGS. 32A and 32B are diagrammatic views of an embodiment of the present disclosure.
FIG. 33 is a diagrammatic view of an embodiment of the present disclosure.
FIG. 34 is a flowchart of processing an incoming AV stream.
FIG. 35 is a diagrammatic view of an embodiment of the present disclosure.
FIG. 36 is a flowchart of aggregating information.
FIG. 37 is a flowchart of generating messages.
FIG. 38 is a diagrammatic view of a web page including video content.
FIG. 39 is a diagrammatic view of a web page including video content.

## DETAILED DESCRIPTION

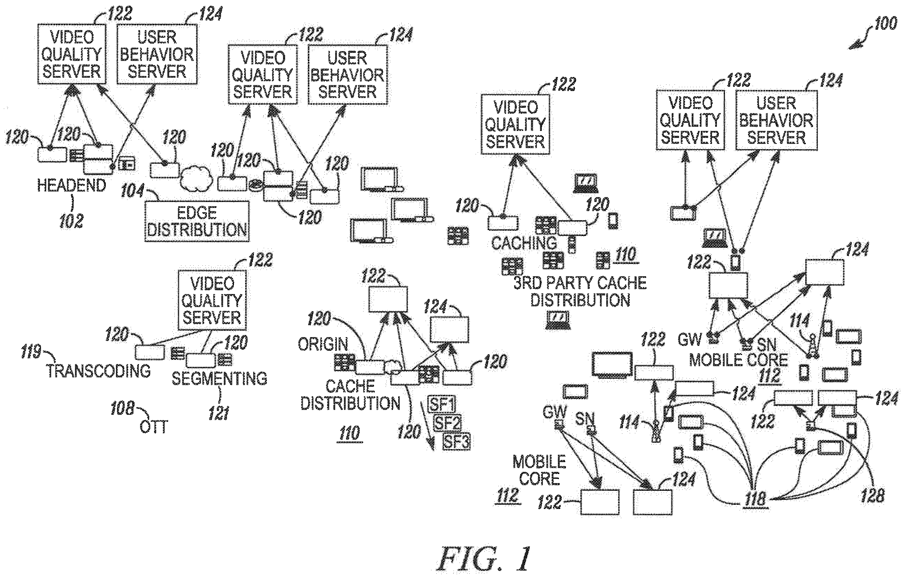

A media distribution system **100** (FIG. 1) such as a video delivery network facility, mobile video delivery network facility, and the like, generally includes a number of elements between an original video source, such as a head end **102** and an end user, such as an end user of a mobile device **118** (e.g., a smartphone). These elements may include one or more video origination sources (head ends **102**); edge distribution sites **104** to support linear video distribution such as the head end of a cable distribution network; elements for multi-screen and over-the-top (OTT) distribution, such as elements **108** for transcoding **119** and segmenting **121** and elements for cache distribution **110.** The media distribution system **100** may have an over-the-air broadcast facility, an internet distribution facility, or other network distribution design, enabling reception by smart phones, tablets, laptops, and smart TVs using networks with time varying bandwidth capabilities, which leverage Adaptive Bit Rate (ABR) sources **108,** where the signal may be divided into segments **121** and transcoded **119** to support a plurality of frame rates and resolutions. The system **100** may have private or third party cache distribution centers **110** where the processed video may be staged closer to the end consumer to ease network congestion by limiting requests for video data from being sent further back up the media distribution system **100.** As the use of mobile devices **118** such as smart phones, pad computers and tablet computers increases, the media distribution system **100** may comprise mobile cores **112,** which may receive incoming video segments from cache distribution centers **110,** edge distribution sites **104,** and the like, and transmit the video segments using one or more of cellular towers **114,** smart cells **128** (such as femto-cells, pico-cells, relay repeaters, and the like), and the like. References herein to smart cells **128** imply one or more of femto-cells, pico-cells, relay repeaters, and the like. The video segments may be transmitted using technology such as 3G, 4G, and the like and wireless communication standards such as Long-Term Evolution (LTE), and the like. The system may comprise a mobile core with components such as a Mobile Management Entity (MME) as the key control node for access to the LTE network, Serving Gateways (SGW), Packet Data Network Gateways (PGW), protocols such as the interface between the SGW and the PGW (S5/S8 interface), the interface between the MME and the Serving Gateway (S11 interface), the control interface between the MME and the transmitter (SI interface), components to provide Radio Access Network (RAN) and the like. The transmitted video segments may be received by mobile devices **118** such as smart phones, pad computers, smart tablets, laptop computers, and the like, and displayed to the end user.

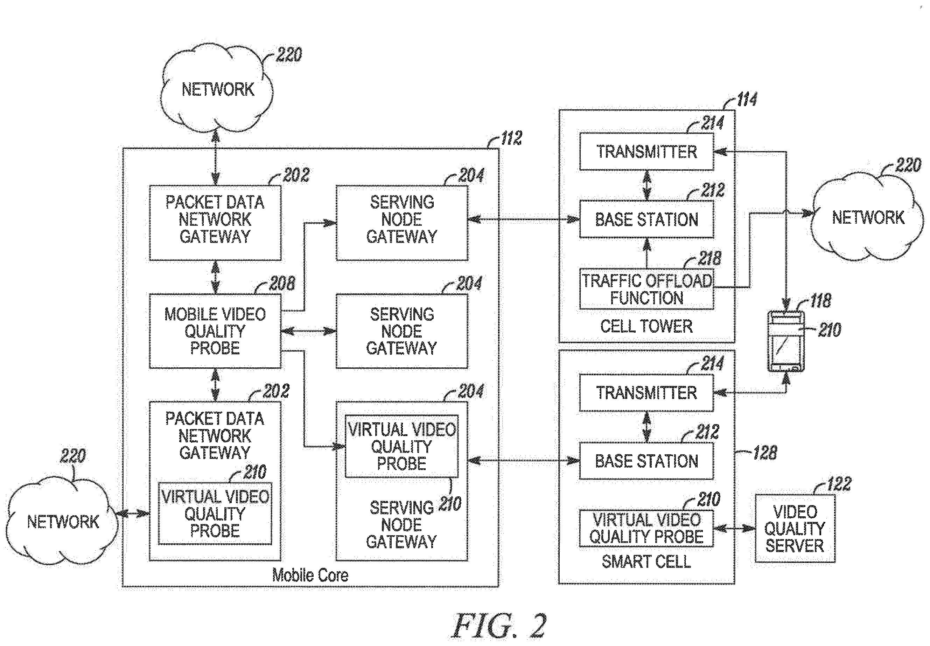

Referring to FIG. 2, the mobile core **112** may include a packet data network gateway **202** which interfaces with common public and private networks **220** such as the Internet, world wide web, private networks, and the like supporting standards such as TCP/IP. The packet data network gateway **202** may receive video data packets from cache distribution networks **110,** edge distribution sites **104,** and the like where a plurality of video data packets may be assembled to form a single video segment. The packet data network gateway **202** may further encapsulate the video data packets in one or more additional suites of protocols, such as the General Packet Radio System Tunneling Protocol (GTP), and the like, to support switching of video data packet delivery among different serving gateways **204** as mobile devices **118** move in and out of range of different cell towers **114,** smart cells **128,** and the like.

Cell towers **114,** smart cells **128,** and the like generally include a base station **212,** which communicates with the mobile core **112** through a serving node gateway **204,** and a transmitter (e.g. a cell tower **214,a** smart cell **128,** small cell nodes such as a femto-cell, and the like) for broadcasting the mobile communications. In some embodiments, a cell tower **114** or smart cell **128** may also include a traffic offload function **218.** The traffic offload function **218** may be used to relieve the load on the mobile core **112** network by providing an alternate means to communicate with content providers such as cache distribution sites **110,** edge distribution sites **104,** video quality servers **122,** user behavior servers **124,** application servers, and the like through interfaces with common public and private networks **220** such as the Internet, world wide web, private networks, and the like supporting standards such as TCP/IP. The traffic offload function **218** may be implemented on a separate computing device or as a virtual device on the computing device used for the base station **212.**

Video quality probes **120** may be positioned at a plurality of locations within the media distribution system **100** such as a head end **102,** edge distribution locations **104,** ABR sites **108** such as after transcoding and segmenting, cache distribution sites **110,** and the like. Video quality probes **120** may be positioned in one or more locations within the mobile core **112** such as between the external network and the packet data network gateway **202,** between the packet data network gateway **202** and one or more serving gateways **204** at the S5/S8 interface, between a serving gateway **204** and a cell tower **214** or smart cell **128,** and the like. Video quality probes **120** positioned in the mobile core **112** may be referred to as mobile video quality probes **208.** Mobile video quality probes **208** may be positioned to monitor traffic at a base station **212.** A video quality probe **120** may be positioned to monitor video traffic being handled by the traffic offload function **218.**

Video quality probes **120** may be passive and monitor the traffic on the network. Video quality probes **120** may be active and request (pull) media segments of the source servers utilizing a mobile delivery network. By correlating response times from the active monitor with response times from a passive monitor, the cache distribution network and the delivery network may be evaluated for caching performance, network response times, media delivery composite, Quality of Experience metrics, real-time capacity of a cell tower to deliver video traffic, Quality-of-Service tagging, prioritization applied to the viewing device and the like. If a source server is repeatedly receiving requests for the same requested data for example, it may be inferred that the cache distribution network is not properly caching the content. One advantage is that the monitored cache distribution network does not require embedded instrumentation to derive performance.

For locations across the mobile core and radio access networks (RAN), a mobile video quality probe **208** may be a virtual video quality probe **210** running on computer hardware associated with other components of the media distribution system **100** such as the packet data network gateway **202,** serving gateway **204,** cell tower **114,** smart cell **128,** final display device such as a mobile device **118,** and the like or elsewhere in an offsite data cloud. For locations handling large volumes of data, a mobile video quality probe **208** may be a physical network interface device connected to one or more computing elements.

Mobile video quality probes **208** or virtual video quality probes **210,** positioned within the mobile core or the radio access network, may strip the information in the GTP packets associated with a given video stream to gather additional information to associate with the video stream such as subscriber ID, cell tower, smart cell, account, supplemental gateway, and the like.

In the discussion herein it should be understood that references to video quality probes **208** are also representative of mobile video quality probes **208** and virtual video quality probes **210.**

Video quality may be monitored at various locations in the media distribution system **100.** In embodiments, video quality may be monitored at two or more locations and changes in video quality between locations may facilitate identifying one or more locations of video quality degradation within a media distribution system **100.** Video quality may be monitored using video quality probes **120** and the data related to video quality measurements transmitted to one or more video quality servers **122.** Additionally, user behavior may be measured and behavioral metrics and data transmitted to user behavior servers **124.** Video quality servers **122,** and user behavior servers **124** may exist on common computer hardware, be virtual servers on other devices, may be distributed in the cloud and the like. User behavior data may be correlated with video quality data at an individual session level to provide enhanced insight into the impact of video quality on user behavior such as switching between applications, switching between video sources for content (e.g. Netflix™ vs. Hulu™) video content, discontinuing video viewing and the like.

In embodiments, video quality may be tracked, at a video session level of awareness, at each point in the system **100** (e.g., by cell node, by cell tower, by cache, by viewing device, by unique device identifier such Mobile Equipment Identity (MEI), International Mobile Equipment Identity (IMEI) and the like, by unique subscriber ID such as International Mobile Subscriber Identity (IMSI) and the like, etc.), and various video quality parameters that impact the end user experience calculated and stored. These parameters may provide insight not just into the packet speed in a given part of a network, but also to a range of other factors that impact the end user's experience of a video session. To achieve this result, packets may be associated with a unique video session, a unique viewing device, a unique user and, in certain optional embodiments, deep packet inspection may be used to determine information, such as the nature of the content that is being delivered. Fields of a packet may be used to classify the type of traffic, which allows generation of parameters and metrics that are relevant to the quality of experience an end user will experience with respect to that particular type of traffic. In contrast to conventional approaches that focus just on the speed at which packets flow through an element of the media distribution system **100,** the methods and systems disclosed herein allow determination, at an individual session level, of metrics representative of actual end user quality for a given type of experience. These metrics in turn allow various analytics relating to the overall experience of users, and what policies, network elements (or absence of elements), and the like are leading to sub-optimal end user experiences. Video quality data and user behavior data may be correlated at the individual session level.

Among other things, tracking end-to-end quality at the session level allows pinpointing of problems, such as where in the network a policy may be resulting in a negative experience, where equipment failures may be leading to problems, and where new equipment, if deployed, might improve a user's experience. Such analytics may be applied at the level of groups of sessions, such as determining that all users with iPads in a given area are typically experiencing buffering delays for a given type of video (e.g., HD) from a given supplier (e.g., Netflix™) in a given area.

Analytics relating to content of packets are particularly beneficial in mobile delivery networks, where video is often sent in many small files that are sent independently to the client mobile device **118** (e. g. smartphone). Metrics described herein identify and quantify various factors throughout the end-to-end system that contribute to potential delay of arrival of related files. Understanding the content of files (as opposed to just counting packet speed) becomes important, because it is not only the speed of arrival of packets, but the relationship of the packets to each other, within the context of the entire session that is important in determining quality of experience. Thus, not just inter-packet delay, but the relationship in timing of all packets in a session to the other packets in that session, determines session quality.

In embodiments the methods and systems disclosed herein take information from deep packet inspection that indicates the routing of packets (e.g., which cell towers **114,** smart cells **128** or the like have been used). This allows analysis of the impact of routes (and the equipment on those routes) on end user video session quality. User session metrics and alarms may include one or more of TCP video access time exceeded, TCP video access failure, buffer fill time exceeded, buffer full condition not met, download rate, video terminated by server, video terminated by network, video sessions counted, video startup time exceeded, video startup time failure, service access time exceeded, service access failure, DNS lookup time exceeded, DNS lookup failures, user device ID, user identification and the like.

In embodiments, the methods and systems disclosed herein may deploy deep packet inspection engines at a plurality of locations within the media distribution system **100** allowing determination as to where in the overall distribution chain a problem may have arisen. For example, a problem may arise at the caching server **110,** rather than at the mobile core **112.** Thus, the methods and systems disclosed herein allow comparison of operational characteristics, relevant to the level of video session quality for the end user, based on deep packet inspection information from multiple, distinct networks (e.g., using DPI data from the mobile core, DPI data from the source/origin network from which the video was originally delivered, and DPI data from a mobile device on which the video is being viewed). In addition, such data may be combined with other information, such as behavioral metrics and analytics data (e.g., indications that users abandoned particular content soon after the start of streaming a particular type of video session), to inform what changes in equipment, policy, or the like will provide the greatest overall improvement to end user experiences. In embodiments, use of DPI data from distinct networks allows comparison of video delivery networks (e.g., comparing Limelight™ and Akamai™ networks for delivery of a particular video session). This in turn allows a provider (e.g., Netflix™) to observe sub-optimal video quality for the end user (e.g., buffering) on one network/application and immediately switch the user to a network/application that has a better experience. Thus, methods and systems disclosed herein enable intelligent switching of a delivery network and/or application for video delivery, based on measures of user experience at the session level, including based on deep packet inspection across multiple network types and multiple types of video delivery equipment.

In embodiments, a DPI engine may be deployed on the client device itself, taking TCP/HTTP statistics from the device itself (as opposed to or in addition to taking data from an application). The DPI engine may be serially in line for packet delivery, allowing corrupt manifest detection. DPI inspection from a client, such as a mobile device **118,** may augment information from the caching server, mobile core, or other locations to provide end-to-end pinpointing of problems in policy, equipment, or the like.

Many streaming media systems, such as VoD, broadcast television control centers, satellite-based video distribution operations, and the like utilize packetized data networks for their low-cost and omnipresence in modern data systems. The present disclosure monitors these existing network conduits by sampling the data contained therein with minimal alteration of its characteristics.

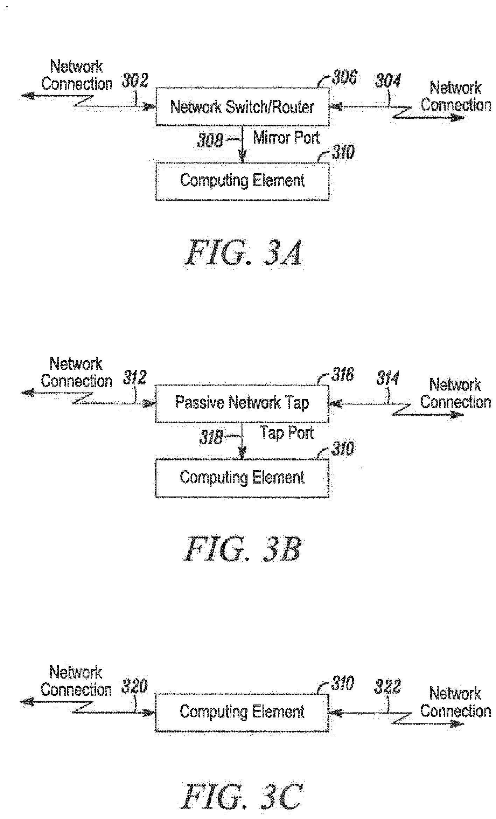

The video quality probes **120** generally include a way to tap into the network traffic flow of the media distribution system **100** with only minimum impact on the throughput of the network traffic flow. FIGS. 3A-3C illustrate several methods of physically tapping an existing network traffic flow to direct network traffic or a copy thereof to the video quality probe **120,** also referenced herein as a computing element **310.** FIG. 3A illustrates a setup wherein an ordinary network switch or router **306,** which, while performing packet switching or routing on the traffic from its many ports, such as **302** and **304,** also provides for a "mirror" or "monitor" port **308.** Mirror port **308** makes all data from a desired port available to the present disclosure's video quality probe **120** or computing element **310.**

Alternatively, as shown in FIG. 3B, a passive network tap **316** diverts a portion of the network traffic flow energy from one network port **312** to the other network port **314** and transmits that portion via a tap port **318** to the present disclosure's video quality probe **120** or computing element **310.** FIG. 3C illustrates yet another method to tap the existing network flow via inserting the present disclosure's video quality probe **120** or computing element **310** directly in-line with the network link to be observed via network ports **320** and **322.** In some embodiments the video quality probe **120** may be a virtual video quality probe **210.** A virtual video quality probe 210 may use tap into the network using a transparent proxy server which transfers network traffic between two applications such as between a video display application and a network communication module while also mirroring or forwarding a copy of the network traffic to a video quality probe **120 208 210.** Network taps may be located at a plurality of locations across the media distribution system **100** such as in the mobile core **112** (e.g. at a cell tower, at a smart cell, between gateway servers, and the like), at Content Distribution Networks (CDNs), at edge distribution sites **104,** at the head end 102 of the mobile distribution system, and the like.

In the examples of FIGS. 3A-3B, the video quality probes **120** and computing elements **310** used in each case are identical. In the example of FIG. 3C, the video quality probe **120** or computing element **310** also actively forwards all traffic from network connection **110** to network connection **111** and vice versa, while simultaneously providing all traffic to the equivalent internal functionality of the video quality probes **120** or computing elements designated **310.**

On mobile devices **118** it is preferable that the examination of the video data packets is done in such a way that there is minimal direct interaction with, or impact on, the functionality of the video player, operating system, and such. Mobile video quality probes **208** and virtual video quality probes **210** may be deployed using a transparent proxy server, which may reduce the need for customization of the video quality probe **120** for different environments. A transparent proxy server may be used to both relay packets between the device's player application and the network interface while providing access to the media stream of interest to the mobile video quality probe **208** for the evaluation of the video packet and transaction timing, video quality metrics, and the like. The transparent proxy server may also collect information on the native video player and the device's operating system. Because the transparent proxy server interacts with the network interface rather than the network it need not be adapted for the specifics of the network type (Wi-Fi, cellular, et.) and has very little impact on overall performance as measured by metrics such as CPU usage, battery usage, and the like.

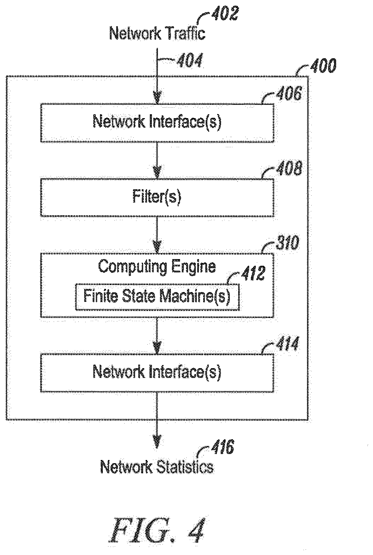

FIG. 4 illustrates one embodiment of the present disclosure's video quality probe **120** that analyzes traffic across the media distribution system **100.** Video quality probe **120** comprises at least one network interface **406** to receive network traffic, one or more filters **408** to filter the received network traffic, at least one computing engine **310** to compute network statistics associated with the filtered network traffic via one or more finite state machines **412,** and at least one network interface **414** to accept control instructions and transmit the computed statistics to a data consumer such as a video quality server **122.** Network interface **406** interfaces with the network link to be monitored via network connections **404.** Network link protocols that support such packet-based transmission include, but are not limited to, 802.3 (Ethernet), 802.4, 802.5, USB, ATM, SONET, 802.11, Fibre-channel, Firewire or 1394, Infiniband, Bluetooth, 802.11, 802.15, 802.16, 802.17, ZigBee, General Packet Radio System Tunneling Protocol (GTP), cellular technologies such as 3G, 4G, LTE and the like, S5/S8 and S11 interfaces within the mobile core, or a native streaming video interface such as DVB-ASI.

The streaming media traffic of interest, which may consist of many individual streams of traffic, is filtered (via one or more filters **408**) from the general incoming network traffic **402** and processed by the finite state machines **412** of computing engine **310** to reduce its measured transmission characteristics to a set of statistics or critical parameters known as an "Index". The Index and other network statistics **416** may be communicated to a logging system via one or more network interfaces **414** with alarm values set for convenient human monitoring such as at the video quality server **122.** For example, warnings may be forwarded to a data consumer when the computed statistics exceeds a predetermined threshold or rate-of-change. It should be noted that one computing engine may be used to track several streams of interest. Similarly, one or more computing engines may be used to track several streams of interest. Hence, the number of computing engines or the number of streams to be tracked should not be used to limit the scope of the present disclosure.

In one preferred embodiment, the Index, known as the Media Delivery Index (MDI) consists of two parts: the Delay Factor (DF) and the Media Loss Rate (MLR). This embodiment is especially valuable for constant bit rate MPEG-2 Transport Streams carried over a network such as a packetized network. The DF represents the Instantaneous Flow Rate Balance (IFRB) and is derived in the computing element. The MLR represents the number of lost or corrupted media packets and is readily derived from tracking the Continuity Counter (CC) for the MPEG-2 transport stream application or from a sequence counter or the like for protocols, such as RTP, which support the same. The MDI (DF:MLR) then represents the two key factors which describe the dynamic behavior of streaming media over packetized networks: packet jitter growth and packet loss. This Index provides at-a-glance determination of traffic impairment as well as an indication of the operating margin of a network. By modifying the calculation of the IFRB, the DF may also be used with variable bit rate streaming media transport over packetized networks.

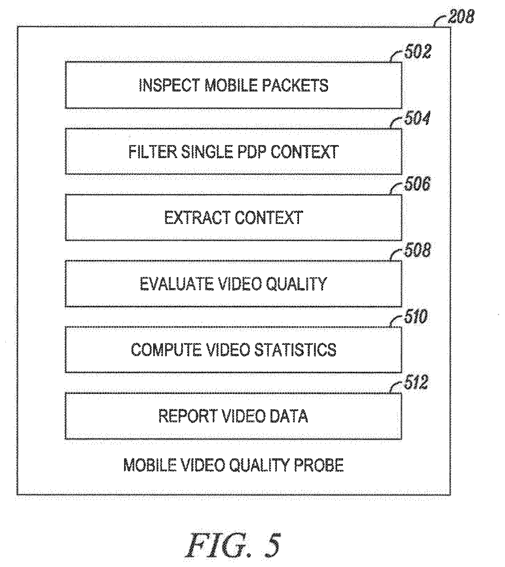

Referring to FIG. 5, mobile video quality probes **208** may first inspect each mobile packet (step **502**) to distinguish between GTP-U (general packet radio system (GPRS) tunneling protocol- user data packets and GTP-C (general packet radio system (GPRS) tunneling protocol- command and control packets. The GTP-U packets are also known as "GPRS-tunneling protocol 'U' " are used for carrying user data within the GPRS core network and between the access network and the core network. The GTP-C packets are also known as "GPRS -tunneling protocol 'C' " packets and are used within the GPRS core network for signaling between gateway GPRS support nodes (GGSN) and serving GPRS support nodes (SGSN). GTP' nodes have the same structure as GTP-C and GTP-U packets, but have an independent function for carrying charge data in certain applications.

GPRS packets may be examined and context information extracted. Context information may be used to filter packets (step **504**) and separate packets into discrete packet streams, each packet stream associated with a single user section or PDP context. Additional context may be extracted (step **508**) from a filtered packet stream such as the type of mobile device **118** for which the associated data packets are bound, the individual cell tower **114** or smart cell **128** to transmit the associated data packets, serving gateway **204** information, and the like. The video quality may be evaluated (step **510**) and statistics may be computed (step **512**) for the video segments such as media delivery index, delay between packets, jitter, total time required to receive all packets need to fully assemble a segment, errors in key frames, and the like. Data regarding the video quality such as delays between segments, buffer overflow or underflow, and the like, may be transmitted to video quality servers (step **514**).

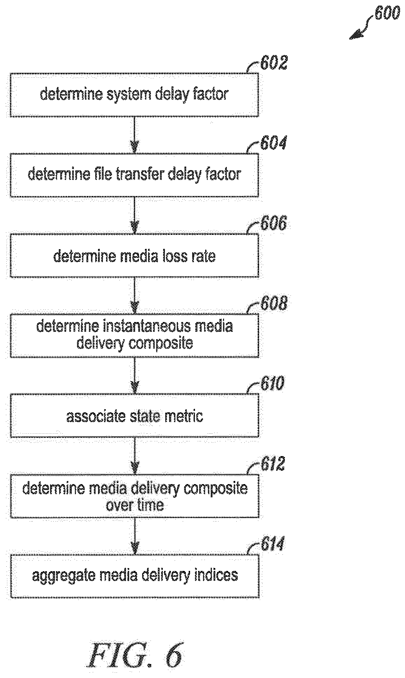

With reference to FIG. 6, a method **600** of evaluating video quality or the steps undertaken by a video quality probe **120** or compute engine **310** (FIG. 3A-3C) after receiving a copy of the network traffic, may include the steps of determining a system delay factor (step **602**) associated with a segment file of a streaming media product. Then a file transfer delay factor may be determined (step **604**) associated with the segment file of the streaming media product. A media delivery composite quality figure may be determined (step **608**) for the segment file of the streaming media product based upon, at least in part, the system delay factor associated with the segment file and the file transfer delay factor associated with the segment file.

As generally discussed above, users may consume a streaming media product via a variety of media consumption devices such as televisions, computing devices, mobile devices **118,** and the like. The streaming media product may include a piece of streaming media content, such as streaming video or streaming audio content embedded in a web page, internet protocol television, video on demand program, or the like. The streaming media product may be encoded in any suitable format (e.g., MPEG2, MPEG4, H.264, etc., in the case of streaming video). Those having skill in the art will understand various other encoding formats.

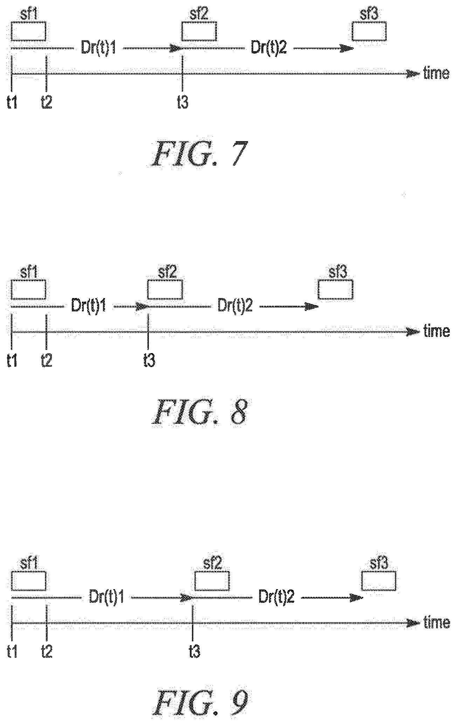

The streaming media product may be transmitted as a series of sequential segment files (e.g., segment files sf**1**, sf**2**, sf**3**, shown in FIG. 7). Each segment file may be a file including a time-wise portion of the streaming media content. For example, the segment file sf**1** may include the first ten seconds of the streaming media product (i.e., from t=0 s to t=10 s). Similarly, the segment file sf**2** may include the next ten seconds of the streaming media product (i.e., from t=10 s to t=20 s), and the segment file sf**3** may include the following ten seconds of the streaming media product (i.e., from t=20 s to t=30 s). In one example, the streaming media product may include a streaming video having a 1.0 Mb/s transport stream (i.e., the rate at which the video is displayed). Accordingly, in the case of a constant bit rate video stream, each segment file may include a 10M bit file (i.e., including 10 s of streaming video encoded at 1.0 Mb/s. While exemplary segment files sf**1**, sf**2**, sf**3** have been described as being of the same size, this is not considered a limitation of the present disclosure. Similarly, while the exemplary streaming video has been described as having a constant bit rate (and therefore each same-size segment file provides the same video playback duration, or drain time), this is also not intended to be a limitation of the present disclosure, as the bit rate of the streaming media may be variable throughout the duration of the streaming media product.

As discussed above, evaluating video quality (step **510**) (alone and or in conjunction with computing video statistics (step **512**) and reporting video data (step **514**) may comprise determining a system delay factor (step **602**) associated with a segment file (e.g., segment file sf**1**) of a streaming media product. Generally, the system delay factor may include various delays associated with the delivery of segment files (e.g., sf**1**, sf**2**, sf**3**) of the streaming media product to a consumption node (i.e., computing device **310**, in the above example). As such, the system delay factor may provide a measure of the entire system's performance, including but not limited to the performance of a consumption client application receiving and/or decoding the streaming media product (e.g., providing an indication of how timely requests for segment files are issued by the viewing device to the server, such as the cache network server **110**), performance of the server (e.g., providing an indication of how timely segment file transmissions are initiated), and network performance (e.g., indicating the time taken for segment files to be transfer through the network, including retransmissions necessitated by lost packets and/or incomplete segment file transfers). Accordingly, the system delay factor associated with the segment file may be based upon, at least in part, a request/fulfill time for a subsequent segment file and a transfer time associated with the segment file of the streaming media product.

In the case of adaptive streaming protocols (e.g., Apple Inc.'s HLS, Microsoft Silverlight™, and Real Time Messaging Protocol by Adobe Systems, Inc., for example) the system delay factor associated with a segment file (e.g., sf**1**) may be updated at beginning of reception of the subsequent segment file (e.g., sf**2** in the above example). In such an embodiment, when a segment file (e.g., sf**1**) is received the drain time (i.e., the drain rate, or rate at which the payload is consumed at the decoding node, multiplied by the payload size) and segment file arrival time may be compared.

For example, and referring also to FIG. 7, segment file sf**1** may begin arriving at the decoding node (i.e., at computing device) at time t**1**. Reception of segment file sf**1** may be complete at time t**2**. Further, segment file sf**1** may have a drain time of Dr(t)**1**, which as discussed above, may be a function of the size of segment file sf**1** and the drain rate of the streaming media product during the time frame included in the content contained in segment file sf**1**. Further the next portion of the streaming media product, contained within segment file sf**2**, may begin arriving at computing device at time t**3**.

Continuing with the above-example the video quality probe **120** and the associated evaluation of video quality **510** may reside on a device other than the consumption node (e.g., the video probe may reside on separate hardware or be a virtual probe), evaluation of video quality **510** may receive information regarding the drain time of segment file sf**1**, the start of reception time of segment file sf**1**, the completion of reception time of segment file sf**1**, and the start of reception time of segment file sf**2** from video quality probe. However, in other embodiments, the evaluation of video quality may reside on, and be executed by the device upon which the streaming media product may be consumed.

According to one embodiment, system delay factor may be determined according to the formula:

$$\mathrm{DFsys}=Dr(t)-[\max(t2,t3)-t1]$$

Wherein:

DFsys is the system delay factor associated with a segment file;
Dr(t) is the drain time for a segment file (as discussed above);
t**1** is the start time for reception of the segment file (e.g., sf**1**);
t**2** is the completion time for reception of the segment file (e.g., sf**1**); and
t**3** is the start time of reception of the next segment file (e.g., sf**2**).

Assuming, for the purpose of example, that segment file sf**1** begins arriving at a time of zero second (i.e., t**1**=0 s), and reception of segment file sf**1** is complete one second later (i.e., t**2**=1 s). Further, and continuing with the previous example of segment file sf**1** having a 10M bit media payload, and the relevant portion of the streaming media product having a drain rate of 1.0 Mb/s, the drain time for the media data of segment file sf**1** may be 10 s (i.e., 10M bit payload divided by 1.0 Mb/s drain rate giving Dr(t)**1**=10 s). Accordingly, the system delay factor associated with segment file sf**1** (in which the maximum of t**2** and t**3** is t**3**=10 s in the example of FIG. 7 in which t**3** is greater than t**2**) would yield:

$$DFsys=10 \text{ s}-(10 \text{ s}-0 \text{ s})$$

DFsys=0 s

The system delay factor of zero may indicate an exactly balanced arrival rate of media data (i.e., data contained within the segment file) and consumption rate of the media data. Accordingly, consumption of the streaming media product at the receiving device may occur without any disruptions in the streaming media, and without any additional media data being buffered by mobile consuming device **118** (e.g., that buffer utilization of consuming the device may remain generally static as long as the arrival rate and consumption rate of media data are remain generally balanced). In these examples, the mobile consuming device may be a mobile phone, smart phone, table computer, and the like. However, as the flow rate of incoming media data and consumed media data is generally balanced, a slight shift to an underflow condition could potentially disrupt consumption of the streaming media product.

Referring next to FIG. 8, as shown, segment file sf**2** may begin arriving before the media data of segment file sf**1** has completely played out (i.e., before the entire media payload of sf**1** has been consumed by the decoding node). As will be appreciated, in an embodiment utilizing the above DFsys equation, the circumstance depicted in FIG. 8 may give rise to a positive system delay factor (i.e., media data may be arriving at the mobile display device at a faster rate than the media data is being consumed). This may give rise to an overflow condition. In an overflow condition consumption of the streaming media product at the mobile display device may occur without any disruptions in the streaming media, and the resulting overflow media data may be buffered by the mobile display device.

Referring next to FIG. 9, there is shown a situation in which the media data is being consumed at a greater rate than the media data is being received by a display device. Specifically, in the example shown in FIG. 9, segment file sf**2** does not begin arriving until sometime after play out of the media data of segment file sf**1** (e.g., t**3** lies after the expiration of Dr(t)**1**). The situation depicted in FIG. 9 may result in a negative system delay factor, or underflow condition, in which media data may be consumed at a higher rate than media data is arriving at the consumption node (i.e., a non-mobile display device **309,** a mobile device **118,** and the like). The underflow condition may result in impaired consumption of the streaming media product at the consumption node (i.e., a stationary display device such as a television, a mobile display device, and the like) such as video freezing, lapses in audio playback, and the like.

While exemplary embodiments of the various system delay factor conditions of balanced, overflow, and underflow, have been shown, it will be appreciated that other situations may similarly give rise to the various system delay factor conditions. For example, a negative system delay factor condition (e.g., an underflow condition) may arise from a late completing of reception of a segment file (e.g., reception of the segment file may not be complete within the drain time of the media data contained within the segment file). As such, the particular embodiments have been presented only to illustrate the various system delay factor conditions, and should not be construed as a limitation on the possible situations that may give rise to such system delay factor conditions.

In addition to determining the system delay factor (step **602**), determining the media loss rate (step **606**) may include determining a file transfer delay factor (step **604**) associated with the segment file of the streaming media product. Generally the file transfer delay factor associated with a segment file may be indicative of the time delays associated with the actual transfer of the segment file through the network (e.g., between a server such as the caching network **110** and the consumption node (i.e., display device, mobile device, and the like). As discussed above, the system delay factor may include all system wide factors which may impact the rate at which media data arrives at a consumption node, including, but not limited to, client, server, and network delays. Evaluation of video quality may determine the file transfer delay factor, which may only account for network characteristics impacting the actual transfer of the segment file from the server to the computing device (e.g., network performance issues, packet retransmissions necessitated by transmission losses, etc.).

The file transfer delay factor associated with the segment file may be based upon, at least in part, a transfer time for the segment file of the streaming media product between server computer such as a cache server **110** and a display device, such as a remote receiver, a stationary display device, a mobile display device, and the like. Additionally/alternatively, a file transfer delay may be determined between server computer such as cache server **110** and an intermediate node such as the mobile core **112,** and/or between the intermediate node (e.g., the mobile core **112**) and a display device such as a mobile device **118.** As such, file transfer delays through various segments of the media distribution system **100** may also be characterized.

According to an embodiment, the file transfer delay factor may be determined based upon the relationship:

$$DFft = Dr(t) - [t2 - t1]$$

Wherein:

DFft is the file transfer delay factor;
Dr(t) is the drain time of the media data of the segment file;
t**1** is the start time of reception of a segment file (e.g., sf**1**); and
t**2** is the completion time of reception of the segment file (e.g., sf**1**).

Continuing with the above-stated example, and referring to FIGS. 7 through 9, as shown in each case the time difference between completion of reception of the segment file sf**1** and the beginning of reception of the segment file sf**1** is less than the drain time (i.e., Dr(t)**1**) of the media data of segment file sf**1**. As such, in each embodiment depicted in FIGS. 7 through 9, the file transfer delay factor may be positive, indicating that the file transfer of segment file sf**1** is less than the drain time of the media data included within segment file sf**1**. As such, file transfer delays should not impede consumption of the streaming media product.

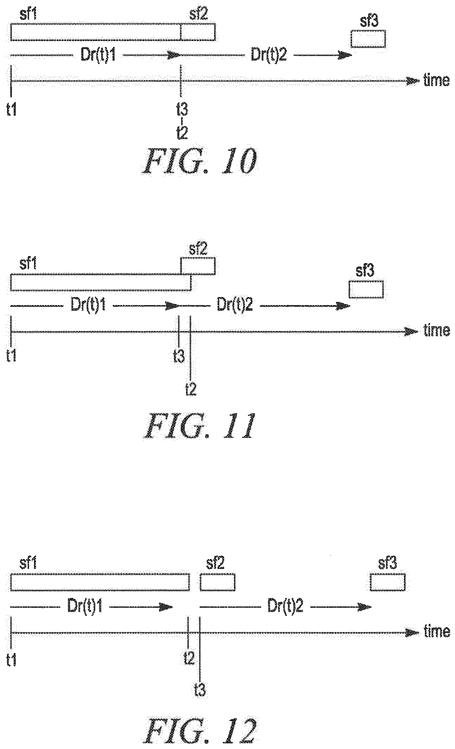

Referring also so FIG. 10, the situation is shown in which the file transfer time of segment file sf**1** is generally equal to the drain time (i.e., Dr(t)**1**) of segment file sf**1**. As such, the file transfer delay factor may be generally zero, indicating a general balance between the reception of media data and the consumption data. In a generally balanced condition, the file transfer delay factor may not impede consumption of the streaming media product. However, as with a zero system delay factor, an increase in the file transfer delay factor may result in an underflow condition, which may potentially disrupt the consumption of the streaming media product.

Referring next to FIGS. 11 and 12, in each embodiment the file transfer time for segment file sf**1** is greater than the drain time (i.e., Dr(t)**1**) of the media data included within segment file sf**1**. As such, it may take longer to complete reception of segment file sf**1** than the consumption of the media included within segment file sf**1**. The situation depicted in FIG. 11 and 12 may indicate an underflow condition, in which media data may be consumed at a faster rate than media data is arriving at the consumption node (e.g., television, computing device, mobile device **118,** and the like).

Similar to the system delay factor, information necessary for determining the file transfer delay factor **604** may be received to evaluate video quality, e.g., from a video quality probe **120** intercepting network traffic on the media distribution system or executing on a computing device or display device acting as part of the network. Reception of information relating to the file transfer delay factor from intermediate node may allow localized network problems that may impede consumption of the streaming media product to be determined. In the case of adaptive streaming protocols, the file transfer delay factor may be updated at the completion of reception of each segment file (e.g., sf**1**, sf**2**, sf**3**).

Each of the system delay factor and the file transfer delay factor may generally provide an indicator of how long a data stream should be buffered at its nominal bit rate to prevent display underruns (i.e., interruptions in consumption of the streaming media product). For example, as discussed above, underflow conditions may impede the consumption of the streaming media product, however typically at least a portion of the streaming media product may be buffered on the consumption node (e.g., stored on storage device associated with display device such as a computer, television or mobile device) prior to beginning consumption of the streaming media product. As such, transient underflows, and/or underflows less than the buffered data, may not impede consumption of the streaming media product. However, building a buffer results in a delay before a user may begin consuming the streaming media product. Accordingly, it may only be desirable to build-up the minimum buffer that is likely to enable consumption of the complete streaming media product without any disruptions in consumption. Determination **602, 604** of the system delay factor and the file transfer delay factor may enable the minimum buffer size to be determined, e.g., based upon, at least in part, underflow, balanced, or overflow conditions associated with segment files of the streaming media product. Additionally, the system delay factor and the file transfer delay factor, alone and/or considered together, may also provide a measure of the network latency that must be inducted from buffering, which is required to accommodate stream jitter and prevent loss. While it is not a requirement of the present disclosure, generally for typical stream rates of between about 0.04 Mb/s and 2 Mb/s, the system delay factor and the file transfer delay factor may be determined **602, 604** with a resolution of tenths of a second.

Evaluate video quality **510** may also comprise determining **606, 608** a media loss rate or media delivery composite for the segment file of the streaming media product. The media delivery composite **608** may be based upon, at least in part, the system delay factor **602** associated with the segment file and the file transfer delay factor **604** associated with the segment file. According to one embodiment, the media delivery composite may be a composite of the system delay factor and the file transfer delay factor. As such, the media delivery composite **608** may, for example, provide an indicator of the condition of a media stream, provide a relative indicator of needed buffer depths at the consumer node due to file delivery time jitter as well as an indication of excessive file delivery times resulting in media underflow, etc. As such, the media delivery composite may allow problems to be identified with a streaming media server and/or client, as well as with the network over which the streaming media product is being consumed. The media delivery composite **608** may, therefore, be utilized to plan allocation of resources for improving the delivery of streaming media (e.g., network improvements, server improvements, etc.).

As mentioned, in one embodiment, the media delivery composite may include a composite of the system delay factor and the file transfer delay factor. For example, evaluate media quality may determine **606, 608** a media loss rate or delivery composite that may include both the sign and magnitude of each of the system delay factor and the file transfer delay factor. For example, the media delivery composite of 0 s, +9 s may indicate a zero system delay factor and a plus nine second file transfer delay factor. In one particular embodiment, evaluate video quality **510** may determine **606, 608** a real time, or instantaneous media loss rate or delivery composite. The instantaneous media delivery composite may, for example provide an indicator of a current state of the streaming media flow.

Evaluate video quality may also comprise determining **606** a media loss rate associated with the segment file of the streaming media product. The media loss rate may be the rate at which media data is not successfully transmitted between a server (e.g., cache server **110**) and the consumption node (e.g., a mobile device **118**). Media loss rate may be less important (e.g., and may even be zero) for ARQ (Automatic Repeat reQuest) protocols, such as TCP, in which packets not acknowledged as received may be retransmitted until reception of all packets is acknowledged. Evaluate video quality **510** may utilize the media loss rate in determining **606, 608** the media loss rate or an instantaneous delivery composite. For example, a relatively high media loss rate may devalue the media delivery composite, as a relatively high media loss rate may impede the consumption and/or quality of the streaming media product as consumed.

Evaluating video quality may associate **610** the media delivery composite with a state metric. For example, consistent with the general positive, zero, and negative possible conditions for each of the system delay factor and the file transfer delay factor, five general media delivery state metrics may be possible, as shown in Table 1:

Table 1

| State | DFsys | DFft | Result |
|---|---|---|---|
| 1 | - | - | Underflow |
| 2 | - | + | Underflow |
| 3 | + | + | Overflow |
| 4 | 0 | 0 | Balance |
| 5 | 0 | + | Balance |

As shown above, state **1** generally indicates a condition in which the system delay factor is in an underflow condition and the file transfer delay factor is also in an underflow condition (e.g., both the system delay factor and the file transfer delay factor are a negative value), which may be a condition as shown in FIGS. 11 and 12. State **2** indicates that the system delay factor is in an underflow condition (e.g., the system delay factor is a negative value), but that the file transfer delay factor is in an overflow condition (e.g., the file transfer delay factor is a positive value), which may be a condition as shown in FIG. 9. State **3** generally indicates that both the system delay factor and the file transfer delay factor are in an overflow condition (e.g., both the system delay factor and the file transfer delay factor have a positive value), as generally shown in FIG. 8. State **4** is a generally balanced state, with both the system delay factor and the file transfer delay factor being in a generally balanced state, as generally shown in FIG. 10. Finally, state **5** generally indicates a condition in which the system delay factor is in a generally balanced condition, and the file transfer delay factor is in an overflow condition (e.g., the file transfer delay factor has a positive value), as generally shown in FIG. 7. It should be appreciated herein that a zero value of the system delay factor and/or the file transfer delay factor may be used to indicate a generally balanced flow between the delivery and consumption of media data. As such, while the balanced condition may be indicated by the value zero, the generally balanced condition indicated thereby need not require a value of zero derived from either of the above system delay factor equation or the file transfer delay factor equation. Rather, a generally balanced condition may be indicated by a +/- margin (e.g., a window) around a zero value. For example, the margin indicating a generally balanced state may be +/-40% of the drain time (e.g., (Dr(t)**1**), or less. The margin indicating a generally balanced state may vary depending upon implementations, for example, in some embodiments the generally balanced state may be indicated by a margin of +/-20% of the drain time. Other values may similarly be utilized depending upon design criteria and user need.

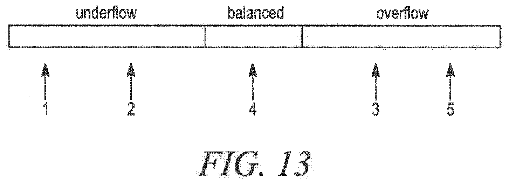

Referring to FIG. 13, evaluate video quality **510** may associate **610** the media delivery composite with a state metric (described above) by reference to a graphical display. For example, as shown, the five states may be shown graphically to facilitate easy reference and determination of a relative state of a streaming media flow. Consistent with the five state metrics described above, the state **1,** in which both the system delay factor and the file transfer delay factor are in an underflow condition may be indicated on the far left of the graphic, indicating a complete underflow condition. State **2,** in which the system delay factor indicates an underflow condition but the file transfer delay factor has a positive value, may be indicated to the left of center of the graphic, indicating a system-level underflow condition, but acceptable file transfer delay. State **3,** in which both the system delay factor and the file transfer delay factor are in an overflow condition is indicated to the right of center of the graphic, indicating a good status, but that, in some circumstances, excessive server resources may be expended by over-delivering media data (e.g., which resources could, in some situation be used to service other clients) and that excessive client resources may be expended by over-buffering media data (e.g., which may, in some circumstances unduly tax the client resources). State **4,** in which both the system delay factor and the file transfer delay factor are in a generally balanced condition is indicated generally in the center of the graphic, indicating that while the streaming media may be consumed without error, a shift of the system delay factor and/or the file transfer delay factor to an underflow condition may result in an impairment of consumption of the streaming media product. State **5,** in which the system delay factor is generally at balance and the file transfer delay factor is in an overflow condition (e.g., the file transfer delay factor has a positive value) is indicated on the right of the graphic, indicating that the streaming media product may be consumed without error, and that server and client resources may be appropriately utilized (e.g., the server may not be over-delivering media data, and the client may not be over buffering media data).

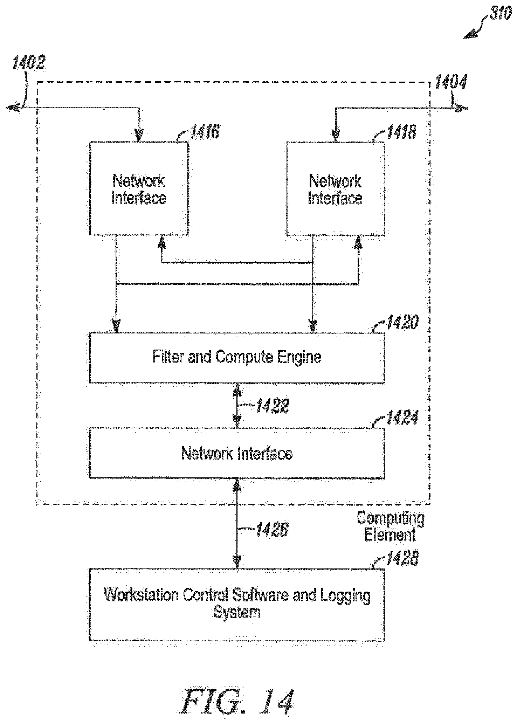

It should be noted that more than one network interface may be used to receive network traffic. For example, FIG. 14 illustrates computing element **310** (as used in FIG. 3C) with two network interfaces **1416** and **1418,** wherein computing element **310** is used for analyzing one or more streaming media flows. The two network interfaces **1416** and **1418** interface with the network link to be monitored via network connections **1402** and **1404.** As in FIG. 4, network link protocols that support such packet-based transmission include, but are not limited to, 802.3 (Ethernet), 802.4, 802.5, USB, ATM, SONET, 802.11, Fibrechannel, Firewire or 1394, Infiniband, Bluetooth, 802.11, 802.15, 802.16, 802.17, ZigBee, General Packet Radio System Tunneling Protocol (GTP), or DVB-ASI. In operation, data received from network connection **1404** is decoded via network interface **1418** and the resulting data is forwarded to the filter and compute engine **1420** and to the other network interface **1416.** Then, network interface **1416** forwards the data to the network connection **1402,** thus completing the connection from network interface **1404.** Thus, all data received from network interface **1404** is forwarded to network interface **1402** with a minimum of distortion while making all the same data available for analysis by other components of the computing element. Likewise, all data from network connection **1402** is forwarded to network connection **1404** while also being forwarded to the filter and compute engine **1420.** The result is a continuous full duplex connection between network connections **1402** and **1404** providing an uninterrupted network traffic flow while simultaneously providing all network data to the filter and compute engine 1420. Alternatively, as per FIG. 3A and FIG. 3B, the computing video quality element **310** may require only a single network interface, but otherwise performs as described above, with network data being forwarded to the filter and compute engine **1420.**

The filter and compute engine **1420** is configured via interface **1422** such that it can filter the desired streaming media flows from other network traffic types for further analysis. For example, to analyze MPEG-2 streaming video over UDP/IP protocols, the filter may be configured to accept only layer-2 packets with the IP protocol type and only IP frames with UDP protocol types and only UDP datagrams that encapsulate MPEG-2 transport streams. After performing the appropriate filtering function, the compute engine calculates the components that comprise the Index value for a given streaming media flow. The Index values, and other statistics regarding the flow, are forwarded to the network interface **1424** via interface **1422.** Then, network interface **1424** uses network **1426** used to convey the Index values to a data consumer such as an application running, for example, in a workstation consisting of control software and a logging system **1428,** collectively referred to as a "management" system. Network Interface **1424** need not be the same type as **1416** or **1418** (i.e., a RS-232 serial port). Its bandwidth via the choice of physical and link layer protocols may be scaled or sized to match the amount of data expected to be handled. It should be noted that network interface **1424,** network **1426,** and workstation (management system) **1428** may be physically co-located with the computing video quality element **310** and need not be external.

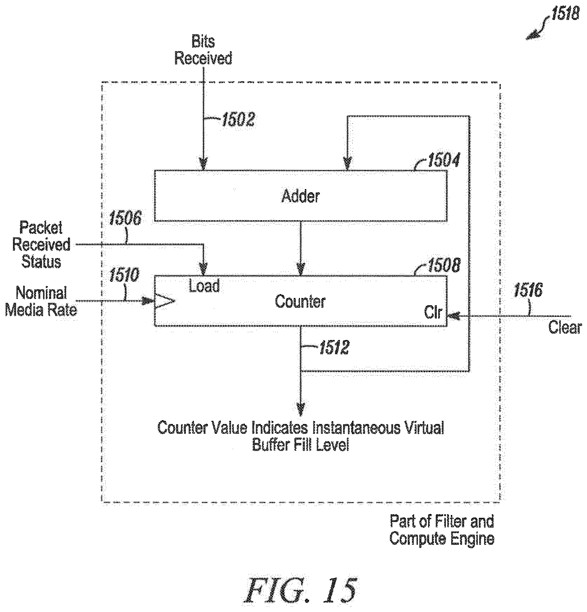

In one embodiment, the compute engine comprises at least one finite state machine counter as shown in FIG. 15. The finite state machine counter is used to compute an Instantaneous Flow Rate Balance (IFRB). Counter **1508** is loaded when a packet has been received via **1506.** The counter is loaded with the sum of the current count and the number of bits received in this packet **1502** from the adder **1504.** Counter **1508** decrements its count at each clock input pulse **1510** whose rate is set to the nominal streaming media rate. Further, counter **1508** is cleared at any time via the **1516** clear signal. The counter output **1512** indicates the number of bits that have been received at the point of test but not yet consumed, assuming that a virtual terminal device which consumes or "uses" the streaming media flow (such as a video decoder for a streaming video media case) drains the data received at a nominal media rate at this network location. Thus, the counter output **1508** represents the size of a buffer that would be needed to prevent data loss and absorb the network jitter growth due to data arriving via a packetized network. It should be noted that counter **1508** may also result in negative numbers during periods between a burst of data thus representing the size of a virtual terminal's buffer needed to be prefilled to avoid underflow. Adder **1504** and counter **1508** may also be combined into a single entity to simply track the net difference between bits received on the packetized network side and the bits out based upon an expected drain rate. The actual quantity being tracked may be bits or any derivative thereof (bytes, words, etc.). It is important to note that the bits counted are only those subject to the drain rate. Typically, this is the payload of the packet (i.e., no headers or overhead.)

For example, in the case of an MPEG-2 transport stream sent via Ethernet IP/UDP, the bits tracked would typically be the MPEG-2 transport stream packets contained within the Ethernet frame, excluding the IP/UDP headers and Ethernet CRC. The present disclosure further extends to using streaming media streams that are variable bit rate in nature. Variations in media bit rate may be accommodated by monitoring and updating the expected drain rate used in IFRB calculation along with the stream. Since this finite state machine is simple, it may operate at common media rate speeds and may be replicated easily and compactly if implemented in hardware such as an FPGA, ASIC, or discrete logic, making possible an array of such machines such that one may be dedicated to each streaming media flow. Furthermore, the filter and compute engine may also be configured to capture and track other streaming media flow parameters of interest such as an MPEG-2 transport steam's continuity counters to detect dropped or corrupted packets, stream identifiers, etc.

It should be noted that computing the Instantaneous Flow Rate Balance (IFRB), and thus DF, requires knowledge of the expected media drain rate either by prior knowledge or by measurement. The expected drain rate, and thus stream bitrate, may also be referred to as the media consumption rate, as this is the rate at which the receiver of the media stream must consume that stream. It is possible that the local estimation of the drain rate may drift or be offset with respect to the actual media streams' bitrate due to frequency drift or offset between the source of the media streams' clock and our local processing clock. This drift or offset causes monotonically increasing or decreasing IFRB and virtual buffer calculations, and may be mitigated by periodically clearing the current state of the IFRB and virtual buffer. Another approach utilizes a well-known method entailing Phase Locked Loops (PLL) or Delay Locked Loops (DLL) to remove the drift or offset.

Returning to the discussion of FIG. 14, streaming media flow parameters as described above may be forwarded via a network Interface **1422,** and network connection **1424,** and external network **1426,** or via any type data interface as they are captured or buffered in a memory in the filter and compute engine for later retrieval by a workstation **1428.** In some instances, the streaming media content itself may be presented to the workstation **1428** via the same path for additional analysis. They may be combined with a time stamp at either the filter and compute engine **1420** or the workstation 1428. Long-term logs may be maintained by **1428** for trend analysis, coincident analysis with other network events, the start and end of particular streaming media flows, etc. Alternatively, workstation **1428** may show an instantaneous view of streaming media parameters for human monitoring. High and low watermark values may be set in the computing video quality element **310** or in the workstation **1428** for the Index parameter or any measured parameter, such that if exceeded, will be logged or trigger an alarm; this functionality may be used to warn of possible impending faults such as deviations from nominal in the flow rates that could cause a network or terminal device buffer to overflow or underflow. The Index value indicates the network's instantaneous operating jitter margin. Additionally, the rate of sampling of such parameters may be reduced to decrease the load on external network **1426** during benign network conditions or increased to provide a more detailed analysis of an identified fault. Either the computing element or workstation **1428** may produce long-term analysis as well by performing additional computational operation on the IFRB.

In some instances, workstation **1428** functionality may be integrated with the filter and compute engine for a direct display of information to the user. It should be noted that a pure hardware, a pure software, and a hybrid hardware/software implementation of the filter and compute engine components is envisioned and should not be used to limit the scope of the present disclosure.

It should be noted that various kinds of interfaces may be used for establishing a packet-based communication session between the external networks (**1402** or **1404** or **1426**) and the computing element, such as (but not limited to) a gigabit Ethernet network controller or a 10/100 Mbit/s Ethernet network interface card. Moreover, one skilled in the art may envision using various current and future interfaces and, hence, the type of packetized network interface used should not be used to limit the scope for the present disclosure.

In one embodiment, bandwidth for the transportation of network parameters via external network **1426** as discussed above is allocated in an "on-demand" fashion, wherein full channel (network conduit) bandwidth is allocated and available to the data consumer. Filter and compute engine **1420** may track nearly any set of parameters or events, such as the last N-packets received or statistics acquired, storing it in a circular buffer. Thus, when a critical event occurs such as streaming media data loss, bandwidth would be allocated "on-demand" to report the tracking information leading up to the critical event to the workstation analysis device **1428** through the network interface **1424** and external network **1426.** Having pertinent information about what traffic the network was handling (not only at the time of the critical event but leading up to it as well) presented "on-demand" at the time of the critical event is very powerful. Having this information greatly reduces the "hunting" time required to identify the cause of the critical event. This information could be gathered remotely as well, given a suitable network type for external network **1426.** Expanding on the "on-demand" possibilities for parameter reporting, bandwidth may also be allocated "on-demand" on either network interfaces **1416** or **1418** in an in-band reporting fashion, facilitating the monitoring by equipment on the same distribution network as the streaming media.

If the network Interface **1424** is an ASI (Asynchronous Serial Interface, as in DVB-ASI) type and the streaming media content itself is presented to the Interface in such a way as to minimize instrument timing distortions, a conventional streaming media specific analyzer or monitor may be utilized to not only measure the stream's conformance to expected stream standards but also to indicate the influence of network behavior. In this configuration, the computing element may be thought of as a protocol converter as well.

The present disclosure's system may be used in debugging various embedded systems within the streaming media's transport network. Various equipment utilized in the transportation or creation of the streaming media may allow debugging and/or parameter manipulation via the transport network as well as provide its own statistical operational information (i.e., its own system "health"). This makes possible the cross-correlation of the system's overall state/health. The disclosure acquires such control information via a network channel and may use its filter and compute engine capabilities to provide either the raw or processed data to a Workstation Monitor/Logger as described for Index data above.

The present disclosure allows the implementer the ability to scale the amount of in-band or out-of-band measured or sampled data to pass through the system up to the maximum supported by the network conduit and down to nothing. Additionally, the present disclosure provides the ability to scale with improvements in network conduit technology. For example, the faster the network conduit, the more measurements or sampled data can pass. Moreover, as high-speed systems continue to evolve, their network conduit's bandwidth is usually increased proportionately to facilitate the use of the high-speed system itself (i.e., a faster network conduit is part of the main feature-set of the system; bandwidth is thereby increased by necessity). The present disclosure accommodates such increases in bandwidth associated with the network conduit and utilizes such high-speed systems to extract measurements or sampled data at a faster rate.

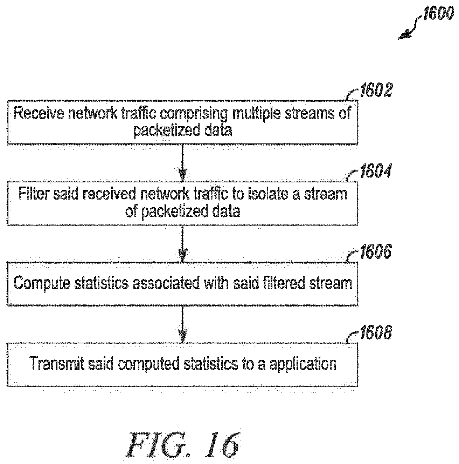

FIG. 16 illustrates a method **1600** associated with an embodiment of the present disclosure. In step **1602,** network traffic is received by a network interface, wherein the traffic comprises one or more streams of packetized data. Next, in step **1604,** the received traffic is filtered to isolate at least one stream of packetized data. In step **1606,** an Index is computed for the filtered stream of packetized data. In one preferred embodiment, the Index, known as the Media Delivery Index (MDI), consists of two parts: the Delay Factor (DF) and the Media Loss Rate (MLR). The DF represents the Instantaneous Flow Rate Balance (IFRB) and is derived in the computing element as described earlier. The MLR represents the number of lost or corrupted media packets and is readily derived from tracking the Continuity Counter (CC) for the MPEG-2 transport stream application or from a sequence counter or the like for protocols, such as RTP, which support the same. The MDI (DF:MLR) then represents the two key factors which describe the dynamic behavior of streaming media over packetized networks: packet jitter growth and packet loss. This Index provides at-a-glance determination of traffic impairment as well as an indication of the operating margin of a network. Then, in step **1608,** the computed statistics are forwarded to a data consumer, such as one running in a workstation. In one embodiment, a quality of service (QOS) metering scheme is implemented based upon adjusting traffic priority between the forwarded computed network statistics and the streaming network traffic. In addition, or alternatively, the system may itself perform an analysis of the incoming stream. Embodiments of the system may also take steps to remediate any detected errors in the incoming stream, such as by the use of conventional Forward Error Correction techniques.

Embodiments of the disclosure may also capture data associated with user's actions, which may prove useful to the service provider or third party in diagnosing QOS issues and/or to otherwise enhance the customer's experience. For example, the system may capture user commands such as channel changes, application changes, and the like and then compute statistics associated with this captured data. For example, the system may compute and record the time elapsed between when the channel change command is entered, and when the selected channel begins streaming through the user's STB. On mobile devices, the system may compute the time spent on video content streamed from various video sources or using various mobile applications. The system may be able to identify time spent viewing video from different sources and whether the same video content was accessed from a plurality of sources. For example a television episode may be available from both Netflix™ and Amazon Prime. If an end user accesses an episode from one source and then changes applications to watch the same episode with a different source this information may be correlated with measured video Quality of Service.

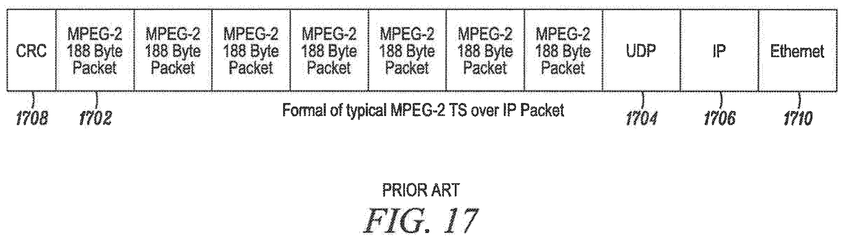

An incoming packet stream of video data may be in nominally any desired format suitable for transmission over a packetized network. In exemplary embodiments, the video stream is in the conventional MPEG-2 TS (Motion Pictures Expert Group-2 Transport Stream) format, such as shown in FIG. 17. As shown, the content may be contained in a series of 188-byte MPEG-2 packets **1702,** which are encapsulated in a UDP (User Datagram Protocol) datagram and IP headers **1704** and **1706.** The completed IP over Ethernet packet includes provisions for a CRC (Cyclic Redundancy Check) **1708,** in the Ethernet protocol **1710.** The content may be further encapsulated in GTP for transmission over the cellular network.

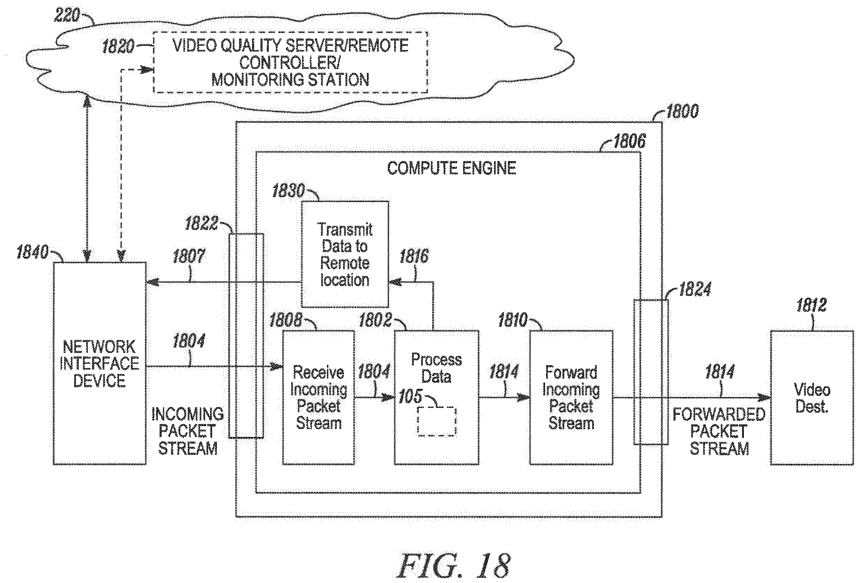

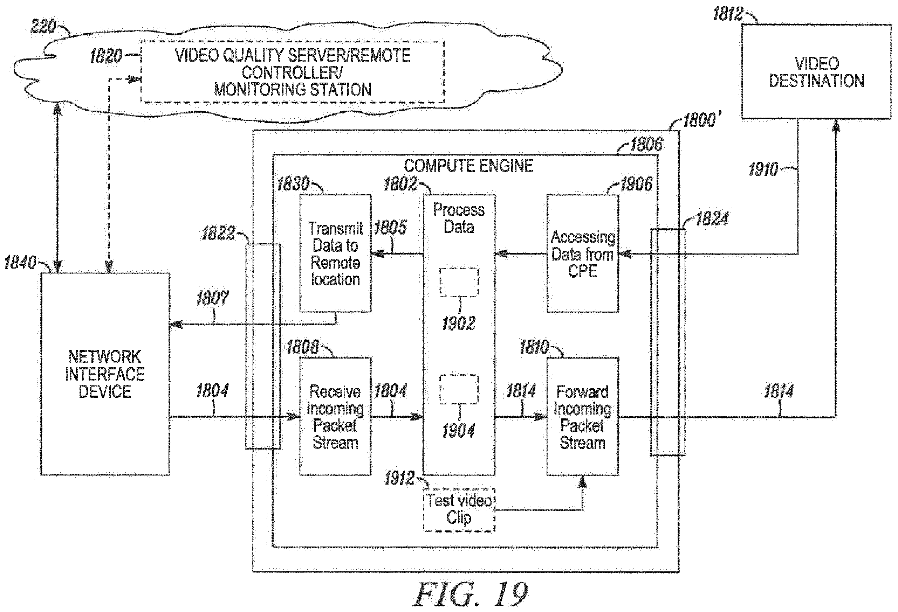

Referring to FIG. 18, a processing module **1802** may affect any number of operations useful in determining the QOS of incoming packet stream **1804.** For example, this processing may include calculating the MDI of incoming packet stream **1804,** calculating system delay factor, file transfer delay factor, media loss rate and the like. Alternatively, processing module **1802** may simply make (and optionally store) a copy of incoming packet stream **1804** for later review and analysis. The processed data may be stored within an optional memory or database **1902** (FIG. 19) for later retrieval, such as upon return of evaluated video quality element **510** to the service provider. Alternatively, the processed/captured data may be transmitted (e.g., streamed) to a remote location or to the service provider for analysis, as will be discussed herein with reference to alternate compute video quality element **510'**.

Still further, incoming packet streams **1804** that have been identified as suffering impairments may be "repaired", such as by an optional error correction module **1904** associated with processing module **1802**. Error correction module **1904** may thus include any of various error correction means, such as conventional Forward Error Correction (FEC) algorithms. Error correction module **1904** may then operate in concert with conventional upstream equipment, which may add repair information (e.g., FEC flows), which may then be used by error correction module **1904** along with the original stream to reconstruct the unimpaired flow. FEC flows thus may be provided by the service provider in a conventional manner, e.g., using some bandwidth that may otherwise be available for other services provided to the user, such as high speed data or voice services. Error correction module **1904** may then use the FEC flows to repair any impairments at the user's premises. It is expected that in many applications, repairing the streams **1804** in this manner may be more cost effective than eliminating the source of the impairments, such as by replacing wiring or other facilities at the user's premises.

Embodiments of the disclosure may thus transmit information regarding the quality of the incoming stream to remote (e.g., upstream) locations, while simultaneously repairing the stream. Moreover, the stream repair may be affected dynamically, e.g., when the incoming stream quality drops below a predetermined threshold, as determined by either the processing module **1802,** or by the video quality server **122,** which may comprise a remote controller and monitoring station **1820**. Such dynamic repair may also be used to dynamically control the FEC flow, e.g., to eliminate the FEC flow (and thus free up bandwidth for other services) when the quality of the incoming stream is satisfactory. Thus, by tracking the dynamic performance of a video flow through its Quality of Service parameters, these embodiments may request the additional repair flow dynamically and thus impact the other services only if needed. Processing options will be described in greater detail herein with respect to various optional embodiments.

As a further option, compute engine **1806'** may capture **1906** user data **1910** from video destination **1812** (e.g., from the user's mobile device **118**). Examples of such user data **1910** include user commands such as selection of video content (i.e., channel changes) along with the delay experienced by the user from the moment he presses the channel change button on his remote to the time the channel starts streaming. User data **1910** may also include the user's use of so-called "trick mode" commands such as rewind, fast forward, pause and stop. Data may include information about the mobile device **118,** operating system, application being used, free space on device, a log of user interactions, and the like.

This user data is processed (e.g., captured) by processing module **1802,** and may then be stored in optional non-volatile memory or database **1902,** such as in the form of a log. In addition, or alternatively, this user data may be forwarded via transmission module **1806** to remote video quality server **122** as discussed hereinabove.

Communication with the video quality server **122** and remote controller/monitoring station may be two-way, or duplex, to permit data transfer to be initiated either by compute engine **1806'** or by remote controller and video monitoring station **1820**. For example, data transfer may be initiated by compute engine **1806,** in which data is forwarded automatically, e.g., at a predetermined interval or upon a triggering event such as receipt of a particular user command at the process data module **1802**. Alternatively, or in addition, data transfer may be initiated by remote controller and video monitoring station **1820,** such as by polling system compute video quality element **510', 1800'**. This polling ability may also be used to effect various other actions, such as reprogramming or rebooting system **1800'** remotely.

As a further option, a video test clip **1912** of known quality parameters may be stored within system **1800'** for forwarding by transmission module **1914** to another system **1800,1800',** located within the customer's LAN (e.g., at a location closer to video destination **1812)** as described in greater detail herein with respect to FIG. 19. The quality of the video clip **1912** may then be monitored by the other system **1800, 1800',** to help determine whether QOS problems lie in the CPE disposed between the two systems.

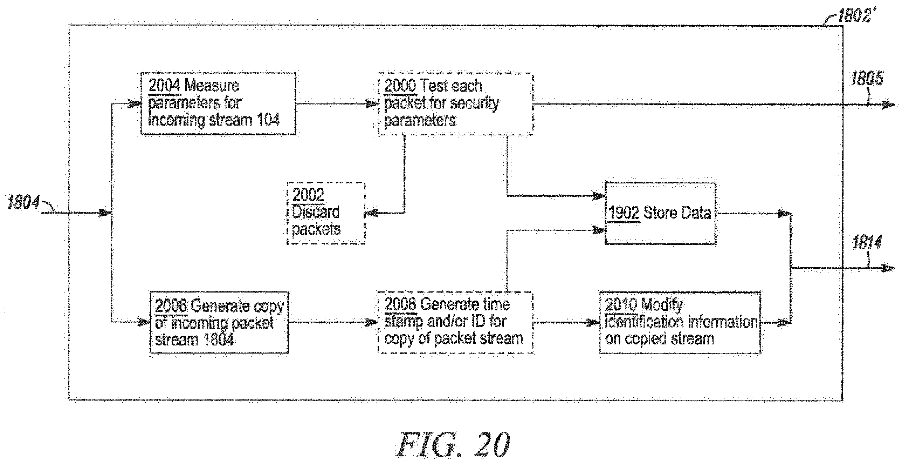

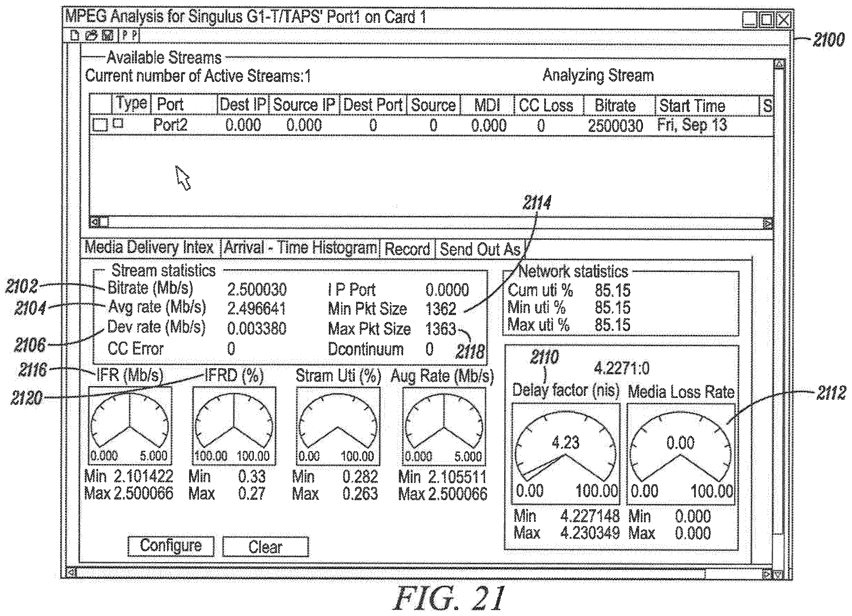

Turning now to the embodiment of FIG. 20, some of the operations affected by processing module **1802** are shown in detail. Parameters associated with the incoming stream **1804** may be measured/analyzed **2002**. The parameters may include any of those parameters disclosed in Technical Report 101 290 by the European Telecommunications Standards Institute (ETSI), including the quality parameters discussed herein with respect to FIG. 21. Some of these parameters are listed in the following Table 2. Parameters listed under Priorities 1 and 2 relate to the packet stream, and parameters under Priority 3 relate to specific applications associated therewith.

TABLE-2

| Priority 1 | Priority 2 | Priority 3 |
|---|---|---|
| TS_sync_loss (Transport Stream sync loss) | Transport_error | NIT_error (Network Information Tables error) |
| Sync_byte_error | CRC_error (Cyclic Redundancy Check error | NIT_actual_error |
| PAT_error (Program Association Table error) | PCR_error (Program Clock Reference error) | NIT_other_error |
| PAT_error_2 | PCR_repetition_error | SI_repetition_error (Service Information repetition error) |
| Continuity_count_error | PCR_accuracy_error | Buffer_error |
| PMT_error (Program Map Table error) | PTS_error (Presentation Time Stamps Error | Unreferenced_PID |
| PID_error (Packet Identifier error) | | SDT_error (System Target Decoder error) |
| | | SDT_actual_error |
| | | SDT_other_error |
| | | EIT_error (Event Information Table error) |
| | | EIT_actual_error |
| | | EIT_other_error |
| | | RST_error (Running Status Table error) |
| | | TDT_error (Time and Date Table error) |
| | | NIT_other |
| | | SDT_other |
| | | EIT_P/F_other |
| | | EIT_schedule_other |
| | | EIT_schedule_actual |

Optionally, the packets of video stream data **1804** may be analyzed **2004** for security parameters, with packets that fail to meet predetermined security parameters being discarded **2002.** Examples of such security parameters are listed in the following Table 3.

Table 3

| Authentication Header (AH): | Encapsulated Security Payload (ESP): |
|---|---|
| Next Header | Security Parameters Index (SPI) |
| Payload Length | Sequence Number, Payload Data |
| Security Parameters Index (SPI) | Padding |
| Sequence Number | Pad Length |
| Authentication Data | Next Header |
| | Authentication Data |

Data on the measured parameters **2004, 2006** may be stored **2008** (e.g., in optional database **1902,** FIG. 19) for future access.

Processing module **1802** may also generate **2010** a copy of the incoming stream, as discussed above, optionally stamping **2012** the copied stream, e.g., with a time stamp and/or stream identification, and storing **2014** the copied stream in optional database **1902** (FIG. 19) for future reference. Alternatively, or in addition, the copied stream may itself be streamed to remote controller and video quality monitoring station **1820** by replacing **2016** the destination information in the IP headers of the copied stream's packets with destination information (e.g., an IP address) associated with remote controller and video quality monitoring station **1820.** This derived stream, along with information stored in database **1902,** may be forwarded **1816** via transmission module 1806 (FIG. 18) as discussed hereinabove.

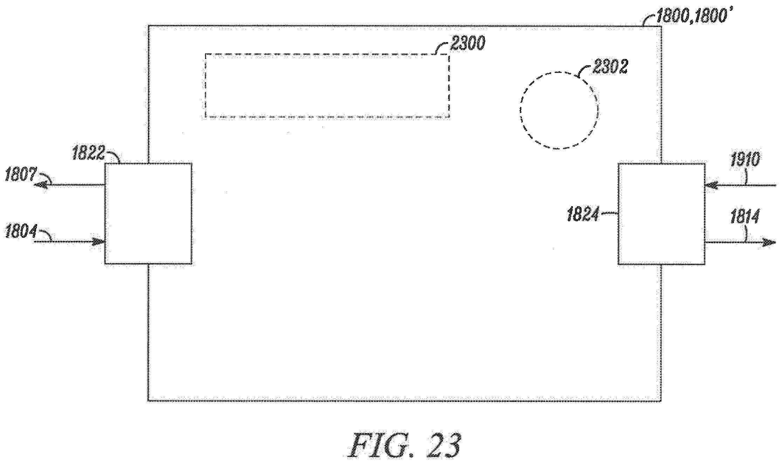

Turning now to FIG. 21, a screen display **2100** generated by a graphical user interface (GUI) associated with embodiments of the disclosure displays some of the possible parameters measured by processing module **1802, 1802'.** This screen **2100** may be viewed in remote controller and video monitoring station **1820** on a display **2300** (FIG. 23, discussed below) within system **310, 310',** and/or on a local display device such as a PDA or Smart Phone. These parameters may include the MDI value **2108,** which includes the Delay Factor (DF) **2110** and the Media Loss Rate (MLR) **2112.** This information may prove valuable to a service provider. For example, if the DF **2110** is high and the MLR **2112** is zero, then packets have not been lost even though significant packet jitter is present on the network. If the DF **2110** is low but MLR **2112** indicates packet loss, then the MPEG Transport Stream may be corrupted. If the MLR **2112** indicates packet loss and DF **2110** is high, packets are likely being lost in the network path.

Also displayed in this embodiment are the Bitrate **2102,** the Average Rate **2104,** and the Deviation **2106** (Dev) from the MPEG encoded bit rate, all in Megabytes per second (Mb/s). The Average Rate **2104** indicates whether the stream conforms to the specified rate over a measure of time. A relatively large Dev **2106** may indicate server configuration problems or stream encoding problems. The measured minimum packet size **2114** (Min Pkt Size) and maximum packet size **2118** (Max Pkt Size) may be checked to confirm that the expected packets and only the expected packets are being received. For example, an MPEG-2 constant bit stream with seven 188 byte Transport Stream packets per Ethernet packet with UDP/IP encapsulation should result in the stream's constant packet size of 1362 bytes. Packets of mixed sizes may indicate the presence of a misaddressed or non-MPEG stream. The Instantaneous Flow Rate (IFR) **2116** and the Instantaneous Flow Rate Deviation (IFRD) **2120** confirm a stream's nominal flow rate. As discussed above, nominally any parameters may be measured and displayed.

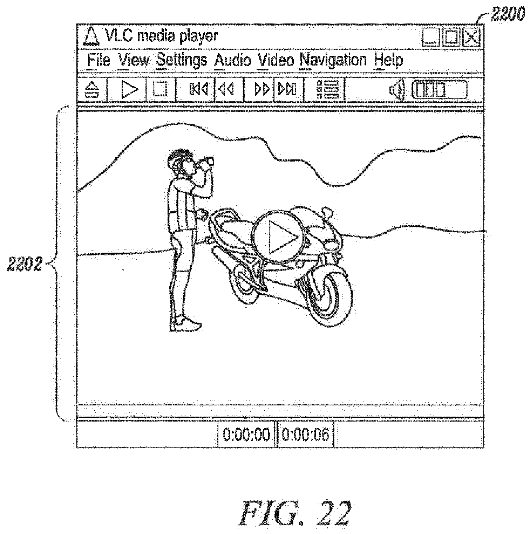

Turning now to FIG. 22, an exemplary GUI screen **2200** displays the derived video stream **2202** at remote controller and video monitoring station **1820,** which as described hereinabove, is a copy of nominally identical quality to that passing to video destination **1812.**

Referring now to FIG. 23, system **1800, 1800',** may be enclosed in a housing having ports **1822, 1824,** an optional display or screen **2300,** as discussed above, and an optional user actuatable input device such as a button **2302.** This button, for example, may be actuated by the user when experiencing problems with the quality of video. The compute engine **1806, 1806'** may store as user data, a log of the times and conditions under which the button **2302** was pressed within database **1902** (FIG. 19). Display screen **2300** may display various QOS information such as the measured quality and security parameters, allowing the user direct access to the benefits of system **1800, 1800'.** The display screen **2300** may also be helpful in the event the user is speaking over the telephone with a service technician, who may direct the user to read the information on the display screen **2300.**

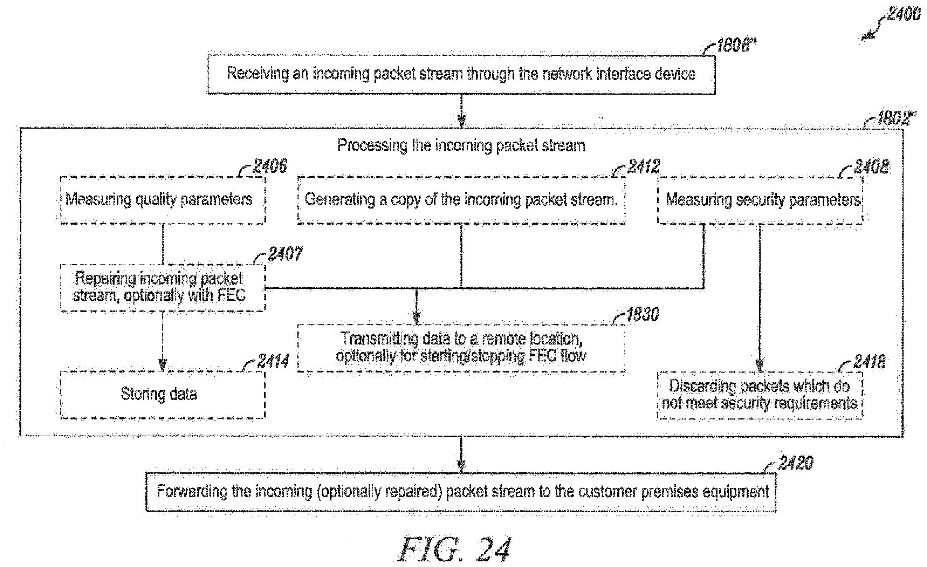

FIG. 24 illustrates a method of use **2400** associated with an embodiment of the present disclosure. In step **1800",** an incoming packet stream is received through an NID. Next, in step **1802",** the received packet stream is processed. Step **1802"** may include the optional steps of Measuring quality parameters **2406,** Repairing the incoming stream **2407,** e.g., with FEC, Generating a copy of the incoming packet stream **2412,** and Measuring security parameters **2408.** Next are the optional steps of Storing data **2414** and Transmitting data to a remote location **1830,** such as for dynamically signaling a service provider to start and stop the FEC as desired. The step of Measuring security parameters **2408** may lead to the step of discarding packets which do not meet security requirements **2418.** Step **2420** includes forwarding the incoming packet stream to video destination **1812** (FIG. 18).

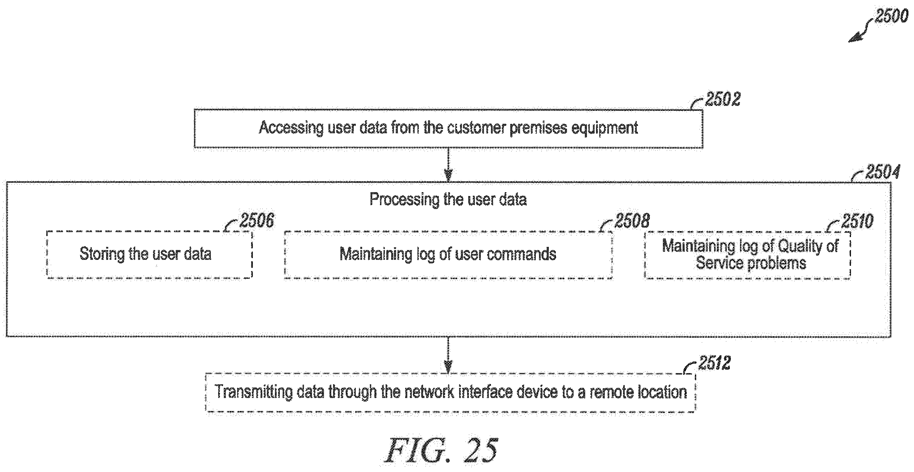

Turning to FIG. 25, optional method **2500** associated with embodiments of the present disclosure includes capturing **2502,** user data from the customer premises equipment. The user data is then processed **2504.** Step **2504** may include the optional steps of Storing **2506** the user data, Maintaining **2508** a log of user commands, and Maintaining **2510** a log of QOS Problems. Data may then be transmitted **2512** to a remote location.

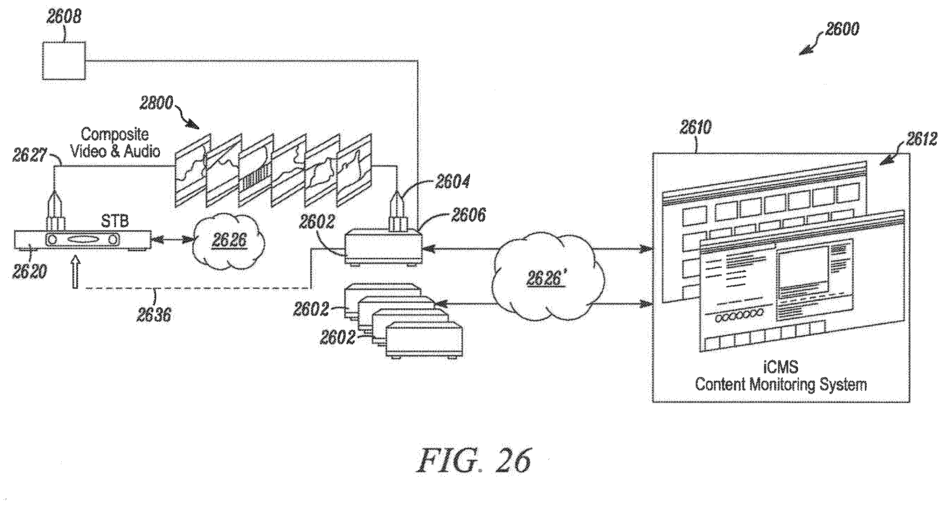

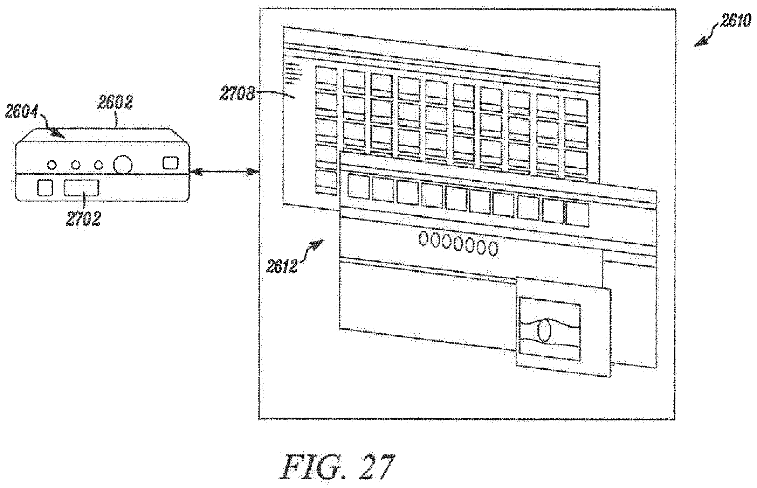

Turning now to FIG. 26, an embodiment of the present disclosure includes a system **2600** for monitoring user quality-of-experience (QoE) for audio-video (AV) streams transported over a content distribution network **2626.** This network **2626** may include Video on Demand (VoD) over the Internet, over a cellular network, and the like. As shown, system **2600** includes one or more AV probes **2602** having an AV input port **2604,** and an AV output port **2606,** and a network interface port (such as shown at **2702** in FIG. 27). The AV probe **2602** is configured for deployment at a node of the AV network, between an AV tuner **2620** such as a Set Top Box (STB), and AV destination customer premises equipment (CPE) **2608** such as a television. System **2600** also includes at least one processing engine **2610** coupled to the network interface port of the probes **2602** via a communications network **2626'.**

It should be recognized that communications network **2626'** may be separate and distinct from the aforementioned content distribution network **2626,** or alternatively, may be substantially the same network, and/or may share common elements. For example, portions (or substantially all) of both networks **2626, 2626'** may include the Internet. Alternatively, networks **2626, 2626'** may include a conventional bi-directional CATV network, in which AV content flows to the user in one direction, and user instructions, such as VoD selections and the like, flow on the same network in the opposite direction.

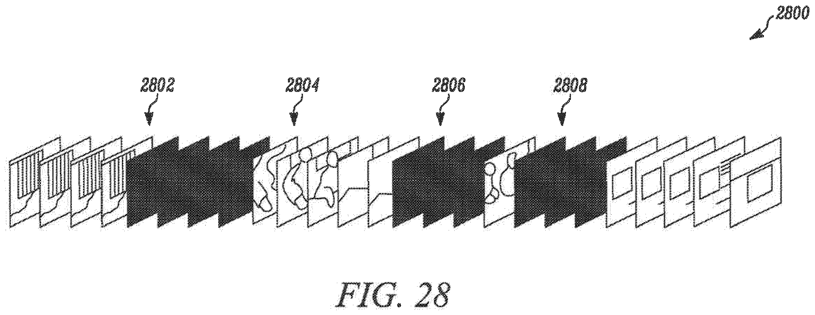

AV probe **2602** may be configured for receiving an incoming AV stream **2627** from AV tuner **2620** through input port **2604** at a native frame rate. As will be discussed in greater detail herein, AV probe **2602** may be configured to capture thumbnails **2628** of the incoming AV stream **2627** at a sampling rate which is less than the native frame rate, to form a thumbnail stream **2800** (FIG. 28), and to apply timestamps to the thumbnails **2628** of the thumbnail stream **2800**. AV probe **1202** may also be configured to transmit the captured thumbnail stream **2800** (e.g., through network port **2702**, FIG. 27) to monitoring engine **2624** substantially in real-time, via network **2626**. Probe **2602** may also be configured to forward the native incoming AV stream **2627** through the AV output port **2606** substantially in real-time, e.g., for use by CPE (e.g., television) **2622**.

Monitoring engine **2610** may take the form of computer readable program code disposed on a computer readable medium such as a ROM (Read Only Memory) device incorporated within one or more computers or servers. As shown, this monitoring engine **2610** may be disposed remotely from the one or more probes **2602**, being communicably coupled thereto via network **2626'**. Monitoring engine **2624** may be configured to receive and process the thumbnail stream **2800** (FIG. 28) to transform thumbnail stream **2800** into a visual representation of AV data **2632**, e.g., substantially in real-time. In particular embodiments, the AV data representation **2632** may include video (AV) content verification data, including advertisement insertion data, is discussed in greater detail herein.

In the aforementioned embodiment, AV input port and network interface port are shown and described as separate and distinct elements **2614** and **2618**. It should be recognized, however, that in some embodiments, these ports may be effectively combined into a single device. For example, AV input port **2614** may be configured for bi-directional operation, to transmit thumbnail stream **2800** back to AV tuner **2620** where it may then be transmitted via network **2626** to monitoring engine **2610**.

Moreover, optionally, probe **2602** may be configured to capture user data and to transmit this captured data to the monitoring engine **2610**. For example, probes **2602** deployed in a user's premises as shown, may be configured to receive user input such as channel selection, VoD selection, and/or the amount of time spent viewing such content, via a conventional remote control device. This user input may then be communicated to AV tuner **2620**, such as by a conventional IR blaster shown in phantom at **2636**, to permit the tuner to operate in a conventional manner, i.e., to tune the user's STB **2620** to the particular channel desired by the user. This approach may thus enable user data, including audience metrics such as the aforementioned channels/content viewed and the amount of time spent viewing such content, etc., to be conveniently captured by the probe **2602** and forwarded, along with the various thumbnail streams **2800**, to monitoring engine **2610** for use in visual representation **2704**.

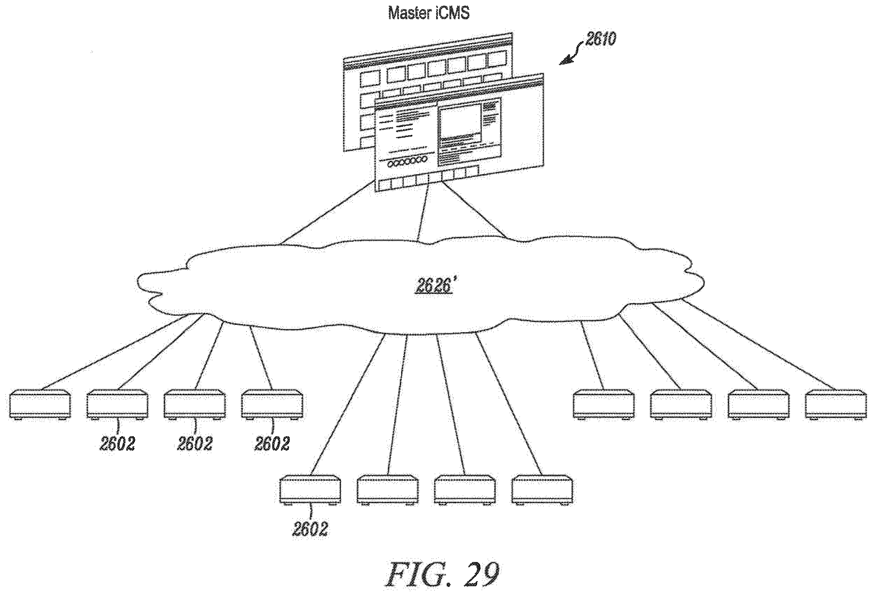

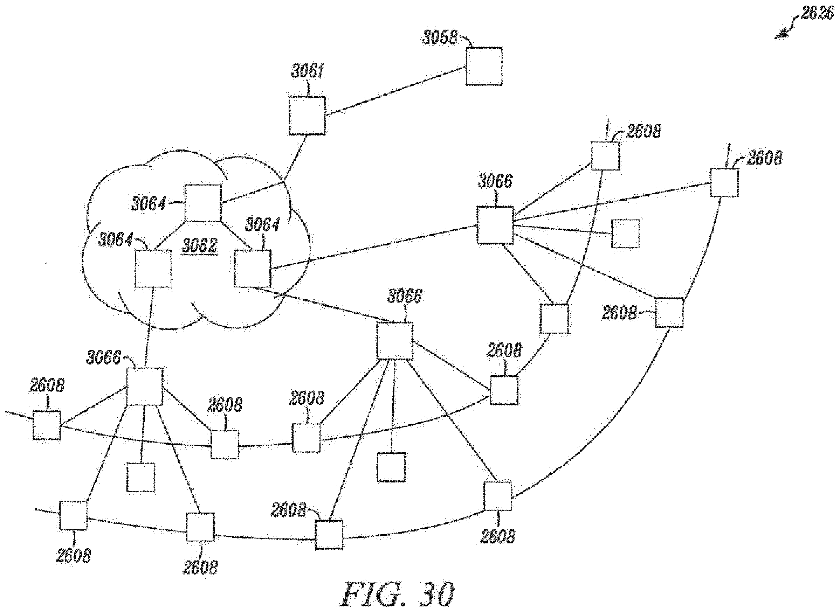

System **2600** may thus be used for baseband video and audio fault monitoring (live and/or historical), baseband video auditing and reporting, channel monitoring/scheduling, via distributed management, as well as for advertisement insertion monitoring. For example, various embodiments of the present disclosure may be used for monitoring advertisements in real-time, including start and stop times of advertisements, verifying that avails were present at scheduled times, detecting SCTE-35 advertisement cue signals including pre-rolls and program in/out information, monitoring presence and timing of incoming splice messages, monitoring presence and timing of outgoing splice messages, monitoring splice event IDs, generating AV quality metrics, and combinations thereof, as will be discussed in greater detail herein. Moreover, as will be discussed with respect to FIGS. 29 and 30, these capabilities may be affected using multiple probes **2602**, across multiple AV streams/channels which are optionally changed by either the user as discussed above, or centrally upon commands distributed to the probes from monitoring engine **2610**.

Turning now to FIG. 27, aspects of system **2600** will be described in greater detail. In particular embodiments, video quality probe **2602** may include AV input port(s) **2604**, e.g., in the form of conventional composite or component inputs, and a network interface port **2702**, e.g., in the form of a conventional RJXX port. Video quality probe **2602** may also include a data storage device, e.g., in the form of a disk drive, flash drive or other memory device, configured to store and/or archive the various thumbnail streams **2800**, for DVTA (Digital Video Thumbnail Archiving). Alternatively, or in addition, video quality probe **2602** may be configured for substantially real-time transmission of thumbnail streams **2800** for DVTA at monitoring engine **2610**. Probe **2602** may thus be configured to monitor substantially in real-time, video (AV) streams **2627** (FIG. 26), e.g., by capturing a series of thumbnails **2800** thereof. Probe **2602** may thus be configured for remote baseband video (AV) monitoring in real-time, including black screen and freeze frame detection, audio channel level detection, video intensity level detection, storing the captured thumbnails for auditing, remote real-time visual inspection, and/or historical and offline content inspection (e.g., advertisement insertion verification as discussed below).

In particular representative embodiments, for example, probe **2602** may be capable of capturing video thumbnails at up to 8 thumbnails or more per second, and for storing up to 30 minutes of jpeg thumbnails in the probe, at a capture rate of 1 thumbnail per second for approximately 1800 samples. These captured thumbnails and statistics/measurements may be subsequently uploaded to monitoring engine **2610** as discussed hereinabove. As also mentioned above, probe **2602** may be used, e.g., upon instructions sent from monitoring engine **2610**, to control the STB **2620**,

e.g., via IR Blaster **2636** or similar control means. In this manner, probe **2602** may be used to perform various additional functions, such as scanning channels, changing channels, locking to a particular channel, remotely power cycling STB **2620,** and/or capturing various audience metrics based on user selections.

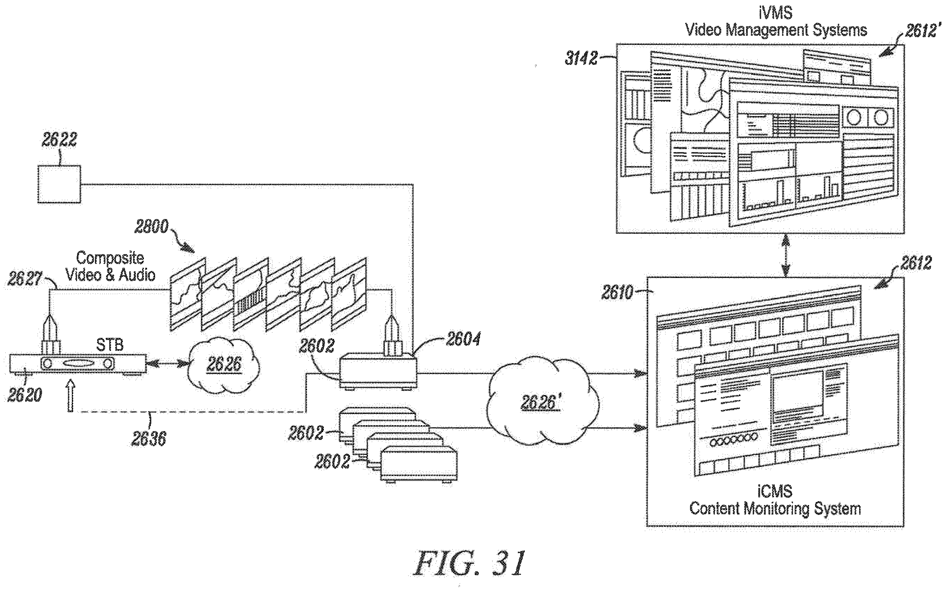

As also shown, monitoring engine **2610** may be configured to generate a visual representation or transformation of captured data that may include, for example, a mosaic view **2708** that shows simultaneous thumbnail views from multiple probes **2602.** Alternatively mosaic view **2708** may show sequential thumbnails from a single probe **2602.** Visual representation may thus provide a graphical representation of the foregoing data including baseband video and audio levels, metrics/statistics, with alarming at minimum and maximum thresholds, video frame statistics, reports, logs with time stamps and/or marked with comments, and thumbnails such as to verify content. Monitoring engine **2610** may also be optionally configured for integration with an AV management module **3142** (FIG. 31) as is discussed in greater detail herein.

Referring now to FIG. 28, an exemplary captured thumbnail stream **2800** is shown. Once this stream has been captured, probe **2602** may inspect the stream to generate the various metrics/functions described herein. This inspection may be accomplished using substantially any conventional video detection approach, such as comparing the pixels of adjacent thumbnails to determine the number of pixel changes therebetween. This inspection may also include comparing the thumbnails to the various embedded markers used for insertion of advertisements or other content.

For example, when monitoring advertisement insertion, a probe **2602** may inspect stream **2800** to identify the end of a first advertisement at **2802,** and the beginning of a second advertisement at **2804,** followed by black screens at **2806** and **2808.** This inspection may provide verification that both the first and second advertisements were in fact inserted into the original AV stream **2627** (FIG. 26) from which thumbnail stream **2800** was derived. This inspection may also reveal, for example, that an undesirably high number of black screens occurred between **2802** and **2804,** e.g., to indicate a late splice of the second advertisement. As mentioned hereinabove, such late splicing may be undesirable, as it generally means that a portion of the advertisement, and/or subsequent content, was cut off, and consequently, a refund of fees may be due, such as to an advertiser whose advertisement was cut short. This inspection may thus be used to capture a wide range of metrics and to display visual representations thereof, including delivery status, content outages, bit rates, advertisement splice performance including start and end of splice, early or late start or end of splice, black frame performance, including appropriate distribution of black frames pre- and post- splice, freeze frames, and audio levels during the advertisement, for generation of audio level histograms (pre-, during and post-).

As another example, when monitoring baseband video and audio, an inspection of stream **2800** may indicate the presence of good content at **2802,** followed by black screens before a program change at **2804,** which was followed by additional black screens at **2806** and **2808.** This inspection thus may provide for example, verification of the presence of good content, while also indicating an undesirably high number of black screens between **2802** and **2804,** and a desirable number of black screens at **2806** and **2808.** In this manner, such an inspection may be used to capture metrics that are used to generate visual representations of the baseband AV stream **2627** (FIG. 26) substantially in real-time, for video and audio faults, black screen detection, intensity levels, and freeze frame, etc.

In various embodiments, the incoming AV stream **2627** (FIG. 26) thumbnails are captured (i.e., the stream **2627** is sampled) at a sampling rate that is about half the native frame rate or less. For example, the native frame rate of a conventional AV stream **2627** in the U.S. is 30 frames per second, while the native frame rate in Europe and Asia is generally 25 frames per second. So, for example, if the native frame rate of stream **2627** is 30 frames per second (fps), probe **2602** may capture thumbnails for use in stream **2800,** at a sampling rate of 15 fps or less. In particular applications, a sampling rate of about one third the native frame rate or less, may be desired. Stream **2800** may also include a captured audio sample associated with the various thumbnails. The results of each of these inspections may then be transformed into visual representations **2632** (FIG. 27) as described herein.

In addition, the sampling rate may be varied, to permit some content to be sampled at a higher rate that other content. For example, to further conserve resources, the sampling rate may be adjusted to a relatively low rate of 1 fps for a television show, and then adjusted to a higher rate (and thus higher resolution) of 8 fps for advertisements, e.g., upon receipt of an SCTE-35 advertisement cue signal. This capture of thumbnails at a frame rate that is substantially lower than the native frame rate, enables the AV stream **2627** to be accurately monitored using a fraction of the resources that would be required to monitor AV streams in a conventional manner at their native frame rates. This relatively high efficiency may be further enhanced by this adjustment of the sampling rates to emphasize higher resolution when monitoring selected content such as advertisements, which may be particularly sensitive to miscues, black screens, etc., due to their relatively short duration and high cost.

Turning now to FIGS. 29 and 30, as mentioned above, substantially any number of probes **2602** may be deployed to send thumbnail streams **2800** to monitoring engine **2610,** either substantially in real-time or delayed. As shown in FIG. 29, these probes **2602** may be configured to send streams **2800** via communications network **2626'.** Moreover, as shown in FIG. 30, these probes **2602** may be placed at any number of locations within content distribution network **2626,** which locations may be distributed laterally, e.g., at various end user STBs **2620** (FIG. 26), and hierarchically within network **2626.** This use of multiple probes **2602** may provide for distributed data capture, which may then be aggregated at one or more central locations (e.g., at engine **2610**) for monitoring. This approach thus provides for a relatively broad and deep view of the performance of network **2626,** which facilitates such activities as channel scheduling in which various probes **2602** may monitor specific channels at specific times. This configuration may also be used to monitor and log the load balance within network **2626,** by tracking the distribution of users tuning in to particular channels across the network. Still further, the hierarchical placement of probes **2602** may be used to monitor a particular AV stream **2627** at various locations throughout its transport. Monitoring engine **2610** may thus aggregate and compare the streams **2800** received from multiple probes, disposed at various hierarchical levels within network **2626,** and tuned to the same channel for the same AV content. This data may then be aggregated to generate metrics associated with the quality of the AV stream **2627** along its transport to an end user.

Alternatively, or in addition, data pertaining to the transport stream itself, including aspects thereof that may be associated with traffic, bottlenecks, etc., within network **2626,** may be obtained in a conventional manner. This data may, for example, be obtained by an iVMS™ Video Management System commercially available from IneoQuest Technologies, Inc. (Mansfield, Mass.), such as shown as AV management module **3142** (FIG. 31). This transport stream data may be correlated to the data aggregated by monitoring engine **2610** to produce a composite visual transformation **2632** as discussed herein with reference to FIG. 31.

Such hierarchical placement of probes **2602** within the content distribution network **2626** is shown, for example, in FIG. 30, in which a representative content distribution network **2626** may include a content originator **3058** such as a broadcasting network, which transmits content to a packetized or non-packetized data source (e.g., VoD headend) **3061,** such as a cable television (CATV) company or the like. Data source **3061** may be configured to forward a Transport Stream (TS), such as packetized video, via suitable link to a network core **3062,** which may include some combination of asynchronous transfer mode (ATM), frame relay, IP (e.g., Internet), and/or conventional MPEG-2 transport stream networks. As shown, the TS may pass through various network elements, such as one or more routers **3064,** and/or peripheral elements **3066** such as DSLAMs (Digital Subscriber Line Access Multiplexers), before arriving at an end user's tuner **2620.** Those skilled in the art will recognize that a DSLAM may be a network element, usually located at a telephone company central office that demultiplexes signals received via network **2626,** and distributes them to end users via Digital Subscriber Line (DSL) connections.

As mentioned hereinabove, the AV stream supplied by content originator **3058** typically includes various markers embedded in the native frame rate that are used by the CATV company or VoD provider, e.g., at head end **3061** or at other nodes within the network **2626,** to splice in content such as programming and advertisements targeted towards their local end users. Examples of such markers include those commonly known as "avails", SCTE-35 advertisement cue signals including pre-rolls and program in/out information, incoming and outgoing splice messages, and splice event IDs, etc.

Probes **2602** (FIG. 29) may be placed nominally anywhere within network **2626,** e.g., at substantially any of the aforementioned network nodes, to effect the aforementioned monitoring. In this regard, it should be recognized that the TS may be decoded into a native stream **2627** by an AV tuner deployed at any number of the aforementioned network nodes, such as to facilitate the aforementioned monitoring and/or content insertion functions. For example, content transmitted by a source **3058** such as a television network may be typically received and decoded by a CATV company at head end 3061 for insertion of local advertisements, etc. A probe **2602** may thus be placed at head end **3061** to verify the quality of the content received from source **3058.** Alternatively, probes **2602** may be spaced further downstream, such as with or within network elements/nodes **3064** of network core **3062,** at peripheral network elements/nodes 3066, and/or at locations therebetween. Probes **2602** may thus be deployed to receive the decoded native stream **2627** at node **3061,** or substantially any of the other nodes. In this manner, any number of probes **2602** may be effectively deployed between an AV tuner, e.g., associated with the particular node, and the AV destination customer premises equipment (CPE) **2622.**

Moreover, it should be recognized that the various probes deployed throughout network **2626** may be operated remotely, such as to monitor a range of channels. For example, a CATV operator may program various probes **2602** disposed along network **2626** to monitor e.g., any advertisements playing on a particular network (e.g., ABC or CNN). Alternatively, probes **2602** may be placed in scan mode, e.g., either in synchronicity with other probes **2602,** or independently of other probes, to monitor a range of channels at various intervals.

In the aforementioned embodiments, probes **2602** have been shown as discrete, stand-alone devices that are separate and distinct from AV tuner **2620** (FIG. 26) and from network elements/nodes **3061, 3064, 3066, 2622,** etc., and which may be inserted in series with an existing network link, such as using fiber, copper, or wireless interfaces. It should be recognized, however, that in alternative embodiments, probes **2602** may be incorporated (e.g., co-located), within a network element/node **3061, 3064, 3066,** etc., with or without an AV tuner.

Turning now to FIG. 31, as mentioned above, monitoring engine **2610** may include, or be otherwise integrated with an AV management module **3142.** This module **3142** may be co-located with, or disposed remotely from monitoring engine **2610.** In particular embodiments, as discussed hereinabove, module **3142** may be an iVMS™ Video Management System (IneoQuest) which collects and aggregates data pertaining to one or more transport streams as they are conveyed through content distribution network **2626**. In addition, module **3142** may be configured to receive data from a plurality of monitoring engines **2610** and to correlate this data with that of the various transport streams. In this manner, data from multiple probes **2602** which have been aggregated at a particular monitoring engine **2610** may be further aggregated at module **3142** for a relatively comprehensive analysis of content distribution network **2626**. For example, data from probes **2602** deployed along substantially the entire length of a typical TS route through network **2626,** may be conveniently aggregated with conventional transport stream data to provide a user with a visual transformations **2632'** corresponding to AV data/quality along substantially the entire length of the TS route, e.g., from head-end **3061** to users' CPE **2608.**

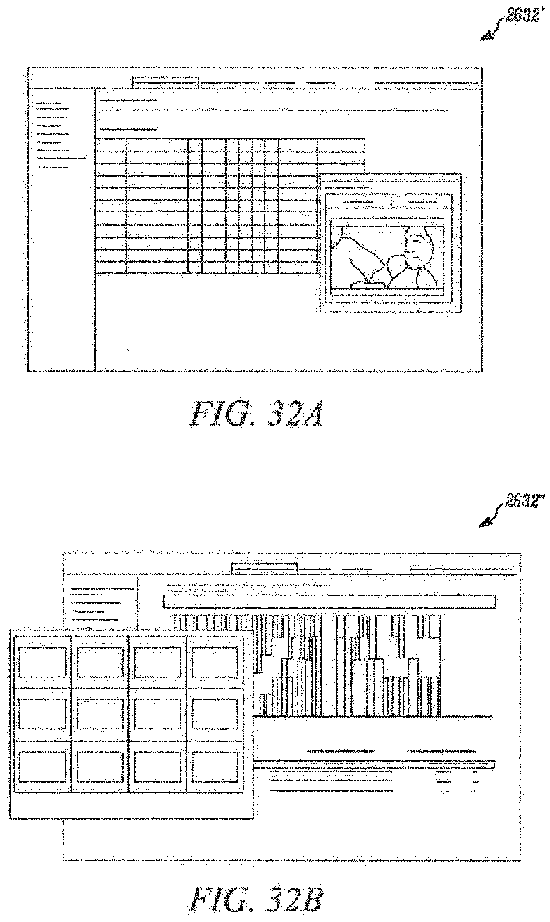

Referring now to FIGS. 32A, 32B, representative examples of the various transformations generated by monitoring engine **2610** and/or management module **3142** are shown and described. For example, visual transformation **2632'** may include data in a tabular format with representations of individual thumbnails. Visual transformation **2632"** may include a mosaic of various thumbnails associated with one or more captured streams **2800,** e.g., associated with a single AV channel or multiple channels. Alternatively, the thumbnail mosaic may include substantially the same thumbnail captured at multiple points within the distribution network **2626**. Transformation **2612"** may also include reporting capabilities such as histograms or charts which summarize the captured data, e.g., pertaining to audio or visual levels within the captured thumbnails, etc. Moreover, in particular embodiments, transformation **2612"** may include metrics associated with particular transport streams, such as provided by management module **3142.**

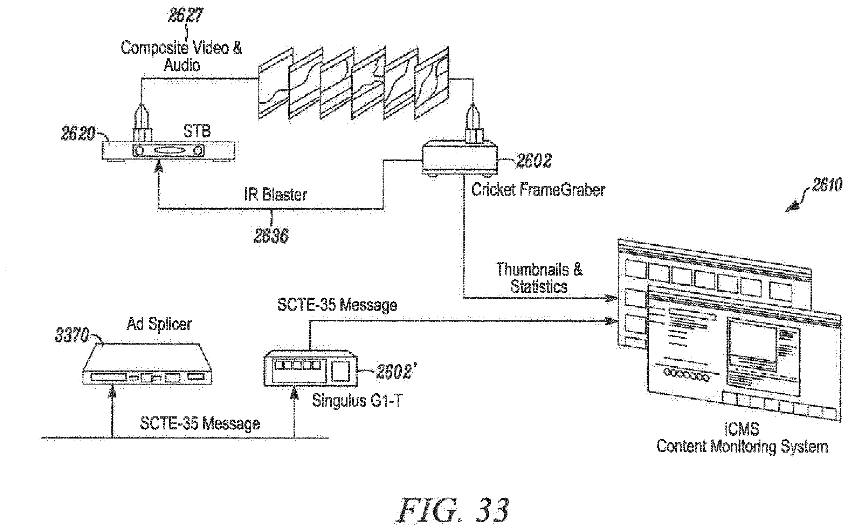

Turning now to FIG. 33, it should be recognized, in light of the instant disclosure, that any number of devices known to those skilled in the art may be configured to accomplish the aforementioned functions associated with probe **2602**. Examples of such devices may include, but are not limited to, the Singulus G10™, Geminus G10™, Geminus G2X™, Singulus G1-T™., Geminus G1-T™, IQMediaMonitor™, and IQDialogue™, devices, all commercially available from IneoQuest. For example, a Singulus G1-T™, shown at **2602'** may be used to monitor the insertion of advertisements as effected by a conventional advertisement splicer **3370** that may be deployed, for example, at head end **3061** of content distribution network **2626** (Fig. 30). The data captured by probe **2602',** including thumbnail stream **2800** (FIG. 28) generated thereby, may thus be combined with data captured by one or more probes **2602,** at monitoring engine **2610**.

It should be recognized that various advertisement servers and/or advertisement splicers **3370** may include a lineup of which advertisement is to be inserted where (including which time zone) and when. Monitoring engine **2610** and/or management system **3142** may capture that lineup and then compare it with the thumbnail streams **2800** captured at the particular locations and times, for verification.

In some embodiments, advertisement splicers **3370** may be configured to provide one or more of a customer ad schedule and ad verification files. One or more components of system **2600** (e.g., monitoring engine **2610**) may be used to automatically compare, on a periodic basis, some or all of the customer's ad schedule files and ad verification files from ad splicers **3370** to the actual SCTE35 tones that occurred during that time period. Using this information, system **2600** may be configured to generate a result set or Ad Run report configured to indicate whether an advertisement was displayed correctly, and if not, a reason for a display error. This report may indicate to the customer the advertisements that played and which advertisements did not. The Ad Run report may also include specific information regarding the reason for the failure, including, but not limited to, a missed tone, etc.

In some embodiments, system **2600** may be configured to measure an audio level associated with a given AV stream for comparison purposes. For example, audio levels from the output of the STB may be measured and directed through an averaging filter in the AV probe in order to set an alarm, which may be sent to the management server. In some embodiments, the management server may also receive an indication of the loudness. In the server, a comparison may be performed between the dialog normalization (i.e., dialnorm) values that have been decoded from the AV stream with the measured audio levels to identify audio level shifts that may be in error and to identify the video that was playing at that time (the dialnorm value may refer to the control signal or meta data used to create a relatively consistent consumer dialog level between various programs and channels). The data may be compared to an ad schedule similar to those discussed above. In this way, system **2600** may be used to compare actual audio levels with dialnorm values, and to make the threshold user configurable.

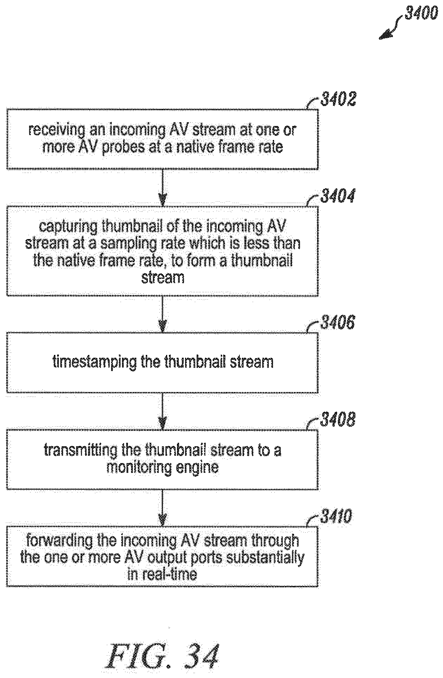

Referring now to FIG. 34, an exemplary method **3400** for monitoring at least one audio-video (AV) stream transported over a network in accordance with the present disclosure is provided. Method **3400** may include receiving an incoming AV stream at one or more AV probes at a native frame rate (**3402**) and capturing thumbnails of the incoming AV stream at a sampling rate which is less than the native frame rate, to form a thumbnail stream (**3404**). Method **3400** may further include timestamping the thumbnail stream (**3406**), transmitting the thumbnail stream to a monitoring engine (**3408**), and forwarding the incoming AV stream through the one or more AV output ports substantially in real-time **(3410).** Numerous other operations are also within the scope of the present disclosure.

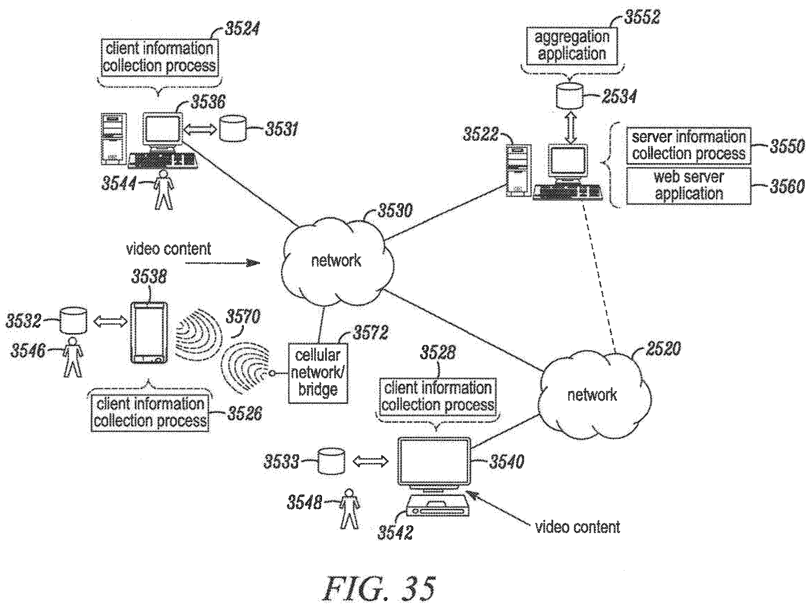

Referring to FIG. 35, there is shown server information sharing process **3550** that may reside on and may be executed by server computer **3522,** which may be connected to network **3530** (e.g., the Internet or a local area network). Examples of server computer **3522** may include, but are not limited to: a personal computer, a server computer, a series of server computers, a mini computer, and a mainframe computer. Server computer **3522** may be a web server (or a series of servers) running a network operating system, examples of which may include but are not limited to: Microsoft®, Windows®, XP Server®, Novell®, NetWare®, Red Hat® and Linux®, for example. Microsoft and Windows are registered trademarks of Microsoft Corporation in the United States, other countries or both; Novell and NetWare are registered trademarks of Novell Corporation in the United States, other countries or both; Red Hat is a registered trademark of Red Hat Corporation in the United States, other countries or both; and Linux is a registered trademark of Linus Torvalds in the United States, other countries or both.

As will be discussed below in greater detail, server information sharing process **3550** may receive, by a computing device, video content information associated with video content. Server information sharing process **3550** may also receive, by the computing device, end destination information associated with a reception instance of the video content. Server information sharing process **3550** may selectively aggregate at least a portion of the video content information and at least a portion of the end destination information to generate aggregated information.

The instruction sets and subroutines of server information sharing process **3550,** which may include one or more software modules, and which may be stored on storage device **2534** coupled to server computer **3522,** may be executed by one or more processors (not shown) and one or more memory modules (not shown) incorporated into server computer **3522.** Storage device **2534** may include but is not limited to: a hard disk drive; a solid state drive, a tape drive; an optical drive; a RAID array; a random access memory (RAM); and a read-only memory (ROM).

Server computer **3522** may execute web server application **3560,** examples of which may include but are not limited to: Microsoft IIS, Novell Webserver™, or Apache®, Webserver™, that allows for HTTP (i.e., HyperText Transfer Protocol) access to server computer **3522** via network **3530** (Webserver is a trademark of Novell Corporation in the United States, other countries, or both; and Apache is a registered trademark of Apache Software Foundation in the United States, other countries, or both), hosting of one or more web pages and/or web sites, and the like. Network **3530** may be connected to one or more secondary networks (e.g., network **3520),** examples of which may include but are not limited to: a local area network; a wide area network; or an intranet, for example.

Server information collection process **3550** (alone, or in combination with one or more of web server application **3560** and aggregation application **3552)** may receive video content information messages and/or end destination information messages from one or more client information collection processes (e.g., client information collection processes **3524, 3526, 3528** such as those running video quality probes **120,** virtual video quality probe **210,** mobile video quality probes and the like. Aggregation application **3552** may include a data storage and management application, for example, but not limited to, a database application such as SQL Server™, MySQL™, and Oracle™ database applications. Additionally, server information collection process **3550** (alone, or in combination with one or more of web server application **3560** and aggregation application **3552)** may provide information based upon, at least in part, the video content information and/or the end destination information, e.g., via a web page or collection of web pages. Server information collection process **3550** may be a stand-alone application. Additionally/alternatively, server information collection process **3550** may interact with web server application **3560** and/or may be incorporated into web server application **3560** as a module or component of web server application.

The instruction sets and subroutines of client information collection processes **3524, 3526, 3528,** (which may include one or more software modules) which may be stored on storage devices **3531, 3532, 3533** (respectively) coupled to computing devices **3536, 3538, 3540**/3542 (respectively), may be executed by one or more processors (not shown) and one or more memory modules (not shown) incorporated into computing devices **3536, 3538, 3540**/3542 (respectively). Storage devices **3531, 3532, 3533** may include but are not limited to: hard disk drives; solid state drives, tape drives; optical drives; RAID arrays; random access memories (RAM); read-only memories (ROM), compact flash (CF) storage devices, secure digital (SD) storage devices, and a memory stick storage devices. Computing devices **3536, 3538, 3540**/3542 may include, be associated with, and/or incorporated into one or more video delivery devices. Examples of computing devices **3536, 3538, 3540**/3542 may include, but are not limited to, personal computer **3536,** mobile media device **3538** (which may include, but is not limited to, a portable media player, smart phone, tablet computer, a portable video game device, and the like), and television **3540** and/or television set-top box **3542.** Computing devices **3536, 3538, 3540**/3542 may be capable of being connected to a data network (e.g., network **3530,** network **3520).**

Using computing devices **3536, 3538, 3540**/3542 (and/or a video delivery device associated with computing devices **3536, 3538, 3540**/3542) users **3544, 3546, 3548** consume video content. For example, using personal computer **3536,** user **3544** may consume video content in the form of video included on a web page (e.g., embedded streaming video, webcasts, podcasts, and the like), video content stored on storage device **3531,** internet protocol television, internet based video on demand (e.g., Hulu™), or the like. Similarly, using mobile media device **3538,** user **3546** may consume video content included on a web page, video content stored on storage device **3531,** internet based video on demand, or the like. User **3548,** via television **3540** and/or television set-top box **3542,** may consume television broadcast video content (e.g., airwave broadcast delivery, cable based delivery, satellite based delivery, or the like), video on demand video content, and the like. It will be appreciated that various additional/alternative video content may be consumed via the exemplary devices and/or via other video delivery devices that will be appreciated by those having skill in the art.

The various computing devices may be capable of being directly or indirectly coupled to network **3520** (or network **3530**). For example, personal computer **3536** is shown directly coupled to network **3530** via a hardwired network connection. Similarly, a personal computer (such as a laptop computer) may be wirelessly coupled to network **3530** (or network **3520)** via a wireless communication channel established between the laptop computer and a wireless access point (i.e., WAP), which may be coupled to network **3530.** The WAP may be, for example, an IEEE 802.11a, 802.11b, 802.11g, Wi-Fi, and/or Bluetooth device that is capable of establishing the wireless communication channel between the laptop computer and the WAP. Mobile media device **3538** is shown wirelessly coupled to network **3530** via wireless communication channel **3550** established between mobile media device **3538** and cellular network/bridge **3552,** which is shown directly coupled to network **3530.**

As is known in the art, all of the IEEE 802.11x specifications may use Ethernet protocol and carrier sense multiple access with collision avoidance (i.e., CSMA/CA) for path sharing. The various 802.11x specifications may use phase-shift keying (i.e., PSK) modulation or complementary code keying (i.e., CCK) modulation, for example. As is known in the art, Bluetooth is a telecommunications industry specification that allows e.g., mobile phones, computers, and personal digital assistants to be interconnected using a short-range wireless connection. As is known in the art, GPRS Tunnelling Protocol (GTP) is a set of Internet based protocols used to carry general packet radio service (GPRS) within mobile networks that allows for communication between gateway and serving GPRS support nodes that facilitate activation of user session, adjusting quality of service parameters and the like.

Computing devices **3536, 3538, 3540/3542** may each execute an operating system, examples of which may include but are not limited to Microsoft Windows, Microsoft Windows CE®, Red Hat Linux, etc., or a custom operating system (Windows CE is a registered trademark of Microsoft Corporation in the United States, other countries, or both).

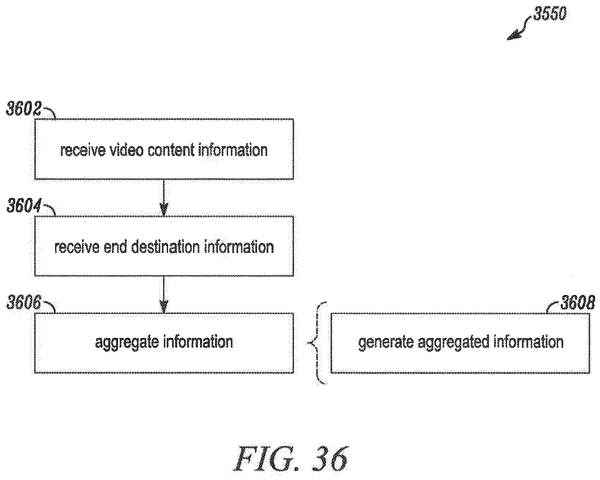

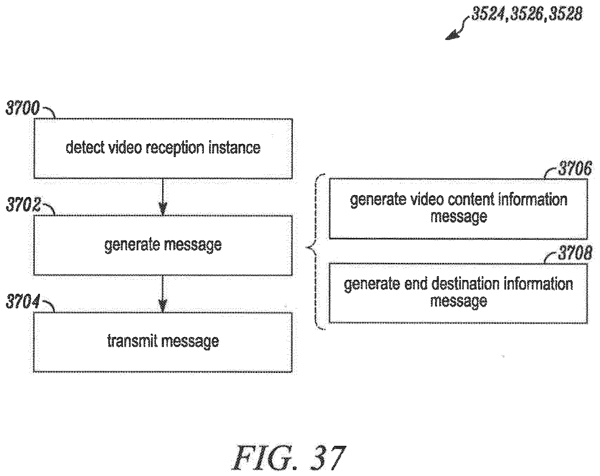

Referring also to FIGS. 36 and 37, server information collection process **3550** may generally receive video content information associated with video content. Additionally server information collection process **3550** may receive end destination information associated with a reception instance of the video content. Further, server information collection process **3550** may selectively aggregate **3552** at least a portion of the video content information, at least a portion of the end destination information, and at least a portion of the user behavior information.

For example, user **3548** may consume video content by watch a television broadcast program (e.g., an episode of a specific television program "30 Rock") via television **3540** and/or set-top box **3542.** The television broadcast program may be provided to television **3540**/set-top box **3542** via a cable transmission provided by specific cable television provider (e.g. Comcast Corporation). The television broadcast program may be provided directly to television **3540** and/or to television **3540** via set-top box **3542,** thereby allowing user **3548** to watch the episode of the specific television program (e.g. "30 Rock"). When user **3548** selects the specific television program ("30 Rock"), (e.g., by selecting the television channel currently airing the specific program), client information collection process **3528** may detect a video reception instance.

The video reception instance may include, for example, user **3548** selecting and actively viewing (e.g., displaying on television **3540)** the specific television program (e.g. the desired episode of "30 Rock"). However, according to system and/or user preferences (e.g., which may be determined by client information collection process **3528** and/or set by user **3548,** e.g., via graphical user interface displayed via television **3540)** a reception instance may also include, for example, reception of the video content via the cable broadcast transmission and recording to the video content, e.g., by a digital video recorder incorporated into set-top box **3542,** and/or associated with television **3540,** without user **3548** actively viewing (e.g., displaying on television **3540)** the video content. Accordingly, the video reception instance may generally include the reception of the video content (e.g., the specific episode of "30 Rock) by a particular video delivery device (e.g., by television **3540**/set-top box **3542).**

Further, assume that user **3548** views a live broadcast of the specific episode of "30 Rock" while simultaneously recording the same episode of "30 Rock" (e.g., via a digital video recorder, or the like) being viewed via the live broadcast. User **3548's** viewing of the live broadcast of the episode of "30 Rock" may be a first reception instance. User **3548** may, e.g., at a later time, view the recording of the episode of "30 Rock" (e.g., via the digital video recorder). The subsequent viewing of the recording of the episode of "30 Rock" may be a second reception instance. Similarly, user **3548** may view a live broadcast of a re-run of the same episode of "30 rock." The viewing of the re-run of the episode of "30 Rock" may be a third reception instance.

While the video content of the foregoing example may include a television program (e.g., and episode of "30 Rock") delivered via a cable broadcast network (e.g., provided by a specific cable television provider such as Comcast Corporation), as discussed previously other video content is also contemplated. For example, the video content may include, but is not limited to, a television broad cast, video on a web page, video on demand products (e.g., provided by a cable service provider, and internet video on demand service, or the like), a video conference, or other video content.

The user may be watching the television program (e.g. an episode of "30 Rock") on a mobile device using a Video on Demand application such as Netflix™ or Amazon Prime. Depending on the video Quality of Service perceived by the user, the user may choose to stop watching or switch between applications for watching a given television program. This user behavior information may be correlated with the video Quality of Service associated with the different viewing instances.

Upon client information collection process **3528** detecting **3700** a reception instance of video content, client information collection process **3528** may generate **3702** one or more messages. Client information collection process **3528** may generate **3702** the one or more messages automatically upon detection **3700** of the reception instance. Additionally/alternatively, upon detecting **3700** the video reception instance, client information collection process **3528** may generate **3702** the one or more messages in response to a user input. For example, a remote control device associated with television **3540** and/or set-top box **3542** may include a button (e.g., a "send information" button) for generating the one or more messages. Upon user **3548** pressing the button, client information collection process **3528** may receive a signal (e.g., via television **3540** and/or set-top box **3542)** causing client information collection process **3528** to generate **3702** the one or more messages.

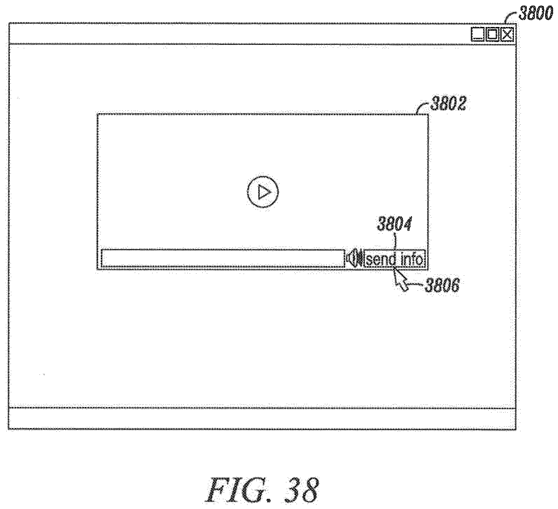

In various other embodiments, the user may similarly provide an input causing the client information collection process to generate **3702** one or more messages. For example, and referring to FIG. 38, user **3544** may view a video on a web page (e.g., web page **3800**). A graphical user interface associated with video display **3802** may include "send info" button **3804**. User **3544** may select, via onscreen pointer **3806** (which may be controlled by a pointing device such as a mouse; not shown), send info button **3804**. Selecting send info button **3894** may result in client information process **3524** generating **3792** one or more messages.

Generating **3702** the one or more messages may include generating **3706** one or more video content messages, including video content information. Further, generating **3702** the one or more messages may include generating **3708** one or more end destination messages including end destination information associated with a reception instance. While the foregoing describes generating one or more video content messages including video content information and generating one or more end destination messages including end destination information associated with a reception instance, it should be appreciated that generating **3702** the one or more messages may include generating a single message including both video content information and end destination information associated with a reception instance.

Generally, video content information may include information that may be intrinsic to the particular piece of video content. As such, video content information may include, for example, the identification of the video content, a service provider identifier associated with the particular transmission of the particular piece of video content. Continuing with the above stated example, assume that user **3548** is watching the specific video program (e.g. the second episode of the fourth season of "30 Rock)," which is airing on Oct. 22, 2014, on channel 7, broadcast by a company in a specific location (e.g. Comcast in Massachusetts). Accordingly, generating **3708** one or more video content information messages may include generating a message including one or more of an identifier of the particular piece of video content (e.g., the second episode of the fourth season of "30 Rock" as aired on Oct. 22, 2014) and a service provider identifier (e.g., channel 7, broadcast by Comcast in Massachusetts). Additional/alternative information about the particular piece of content may also be included. In the case of, e.g., video one a web site, video content information may include, for example, a video identifier, the web site from which the video is viewed, an identity of the internet service provider through which the web page including the video content is accessed, etc.

Generally, end destination information associated with the reception instance may include information that may depend upon the consumption of the video content. For example, end destination information associated with the reception instance may include a geographic location of the video delivery device (e.g., which may include and/or be associated with the computing device executing the client information collection process). The geographic location of the video delivery device may be determined based upon, at least in part, one or more of: a user input (e.g., an initial setup of the client information collection process may request and receive a user input of a location such as an address), a detected location (e.g., based upon an associated GPS receiver, cellular telephone broadcast tower triangulation, Wi-Fi access point location, or the like), and IP address of a network connection (e.g., via which the computing device may be coupled to network **3530** or network **3520),** or the like. Additionally, the end destination information associated with the reception instance may include a start time and a stop time of the reception instance (e.g., start and stop time of viewing of the video content and/or recording of the video content), a time at which the client information collection process generates **3702** the message, and indicator of whether the video content is viewed at a time of broadcast or is viewed at a later time (e.g., a recording of the broadcast if viewed), and the like. Additionally, the end destination information associated with the reception instance may include detailed information regarding the type of viewing device, operating system, available space, viewing application, and the like.

Additionally, the end destination information associated with the reception instance may include experience information. Experience information may include information regarding a quality of the reception instance of the video content (e.g., poor/high quality video, disruptions due to latency and lost packets, etc.) and/or information including user created comments relating to the video content and/or the reception instance of the video content. Information regarding the quality of the reception instance of the video content may be generated by the client information collection process based upon detected lost packets, detected latency, and the like. Additionally/alternatively, the client information collection process may allow, and/or prompt, a user to enter a subjective evaluation of the reception instance of the video content.

Additionally, the end destination information associated with the reception instance may include user behavior information such as start and stop viewing times in relation to other reception instances, changing of applications of devices used for viewing, user-communicated video quality, user selected early session termination, and user selected trick modes such as fast forward and rewind, and the like. In an illustrative example, a user may be viewing a television episode on a mobile device **3528** receiving the episode from Netflix™ over the cellular network and then switch to watching that episode on a computing device connected by a LAN.

Additionally/alternatively the client information collection process may allow a user to generate comments relating to the video content itself and/or relating to the reception instance of the video content.

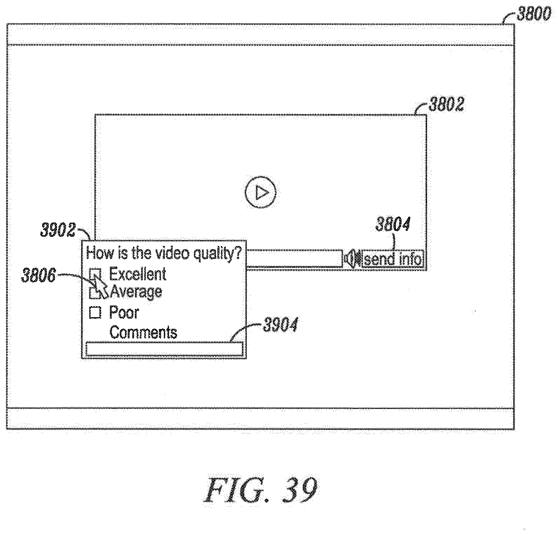

For example, and referring also to FIG. 39, client information collection process **3524** may (alone or in combination with another application, such as a web browser) generate information dialog box **3902.** While information dialog box **3902** is shown including three options (namely, "Excellent," "Average," and "Poor") which may be selected by user **3544** (e.g., using on screen pointer **3806** controlled by a pointing device) to indicate user **3544's** subjective opinion of the quality of the reception instance of the video content, this should not be construed as a limitation of the present disclosure, and the number and nature of options may vary according to design criteria and user need. Additionally, information dialog box **3902** may include comment block **3904.** User **3544** may input comments (e.g., using a keyboard or other input device, not shown) in comment block **3904,** relating to the video content (e.g., "this video is hysterical") and/or the reception instance of the video content (e.g., "the video and sound are really out of sync"). Client information collection process **3524** may include at least a portion of the experience information (e.g., user **3544's** video quality selection and user **3544's** comments) in the one or more generated **3702** messages.

Continuing with the above-stated example, user **3548** may be viewing a live broadcast of the second episode of the fourth season of "30 Rock" at 9:30 pm on Thursday, Oct. 22, 2014 via television **3540** and/or set-top box **3542.** Client information collection process **3528** may generate **3702** one or more end destination information messages associated with the reception instance. The generated **3708** end destination message may include the geographic location of television **3540** and/or set-top box **3542** (e.g., 13 Storybook Ln., Boston, Mass., based upon an address input), a start time of the video content (e.g., 9:30 pm EST, on Thursday, Oct. 22, 2014). Additionally, the end destination information associated with the reception instance may include experience information. For example, client information collection process **3528** may allow (e.g., via an onscreen display) user **3548** to input information concerning the video quality of the reception (e.g., using a remote control device associated with television **3540** and/or set-top box **3542** and/or an onscreen graphical user interface). For example, assume that while watching the episode of "30 Rock" user **3548** notices that the video is not properly synchronized with the audio at several points in the episode. Via an onscreen graphical user interface and using the remote control, user **3548** may provide an input (e.g., by selecting from a menu provided via the graphical user interface) indicating that there were some problems with the quality of the video content. Further, user **3548** may provide the comment (e.g., again via an onscreen graphical user interface and using the remote control) that the episode is "the funniest episode yet." The generated **3708** end destination message may include the experience information input by user **3548.**

Upon generating **3702** the one or more messages, client information collection process **3528** may transmit **3704** the one or more messages, e.g., to server information collection process **3550.** Video content information and end destination information may be transmitted **3704** as a single message and/or may include one or more discrete messages (e.g., one or more messages for video content information and one or more messages for end destination information, or separate messages for each component, etc.).

The one or more generated **3702** messages may be transmitted to server information collection process **3550** and/or to web server application **3560.** The one or more generated messages may include, for example, and HTTP message, e.g., which may be received by web server application **3560** and/or server information collection process **3550.** Various addition and/or alternative message types and/or message formats may be suitably utilized.

As discussed above, and with particular reference to FIG. 36, server information collection process **3550** may generally receive **3602** video content information associated with video content. Additionally server information collection process **3550** may receive **3604** end destination information associated with a reception instance of the video content. Further, server information collection process **3550** may selectively aggregate **3606** at least a portion of the video content information and at least a portion of the end destination information.

Receiving the video content information and receiving the end destination information may include receiving one or more of the video content information and the end destination information from a computing device associated with the reception instance of the video content. As discussed above, a computing device (e.g., which may be included in, and/or associated with, a video delivery device such as personal computer **3536,** mobile media device **3538,** television **3540** and/or television set-top box **3542)** may execute a client information collection process (e.g., client information collection process **3524, 3526, 3528),** which may transmit **3704** one or more messages including video content information and/or end destination information associated with a reception instance, either automatically and/or in response to a user input.

The video content information may include one or more of an identity of the video content and a service provider identifier associated with a transmission of the video content. Continuing with the above-example, server information collection process **3550** (alone and/or in conjunction with web server application **3560**) may receive **3602** video content information including video content identification (e.g., the second episode of the fourth season of "30 Rock" that aired at 9:30 pm on Thursday, Oct. 22, 2014). Additionally server information collection process **3550** may receive **3602** video content information including a service provider identifier associated with a transmission of the video content (e.g., Comcast in Massachusetts). Additional video content information may also be included, such as the channel on which the video content aired (e.g., channel 7), and the like. Additionally, at least a portion of the video content information may be determined by server information collection process **3550** (alone and/or in combination with one or more additional applications, e.g., web server application **3560**). For example, if the episode number was not included in the received **3602** video content information, server information collection process **3550** may determine the episode number, e.g., based upon a television schedule look-up, or the like.

The end destination information received **3604** by server information collection process **3550** may include one or more of a location of an end destination associated with the reception instance of the video content, a time associated with the reception instance of the video content, and experience information associated with the reception instance of the video content. For example, and still continuing with the above example, server information collection process **3550** may receive end destination information including and end destination for consumption of the video content, namely the geographic location of television **3540** and/or set-top box **3542** (i.e., 13 Storybook Ln., Boston, Mass.). Additionally, server information collection process **3550** may receive a time of 9:30 pm EST associated with the reception instance of user **3548** viewing the live airing of the episode of "30 Rock."

Server information collection process **3550** may also receive **3604** experience information associated with the reception instance of the video content. The experience information may include information relating to a quality of the reception instance of the video content. For example, in the above-example, user **3548** found that at several point the video and audio were poorly synchronized. Accordingly, user **3548** provided an input indicating that there were some problems with the quality of the video content. Server information collection process **3550** may receive **3604** experience information associated with the reception instance of the episode of "30 Rock" indicating that there were some problems with the quality of the video.

The experience information received by server information collection process **3550** may include a user created comment relating to one or more of the video content and the reception instance of the video content. Still continuing with the above stated example, server information collection process **3550** may receive **3604** end destination information including the comment "the funniest episode yet."

Server information collection process **3550** (alone, and/or in conjunction with one or more of web server application **3560** and aggregation application **3552**) may also selectively aggregate **3606** at least a portion of the video content information and at least a portion of the end destination information to generate **3608** aggregated information. Selectively aggregating **3606** at least a portion of the video content information and at least a portion of the end destination information may include storing at least a portion of the video content information and at least a portion of the end destination information in a database (e.g., which may include parsing the information into predetermined fields). Information received **3602, 3604** from many users (e.g., users **3544, 3546, 3548**) may be commonly aggregated relative to a single video content and/or relative to a plurality of video content.

Accordingly, information collection process may provide real-time, near real-time, and/or historical reporting of video issues on channels, programs, service providers and the like in geographic regions, as well as registering key view experiences based on one or more of location, channel, program, service provider or the like.

The aforementioned embodiments may use conventional standards for digital program/advertisement insertion, to provide advertisement auditing and reporting, including visual advertisement splice performance, quality, and service assurance. These embodiments enable the captured data to be filtered for particular content/advertisement events, while correlating advertisement splice messages, video content metrics, and captured thumbnails. Reports may thus be generated for advertisers and program content providers which include the aforementioned metrics, including advertisement times, geographic zones, channels, and audience metrics, etc.

The system described herein, allows for the tracking of video quality, as experienced by the end user, from the video source throughout the network, including the mobile core, at an individual video session level of awareness. In addition to the video quality for the individual session, additional information about the subscriber, type of subscriber, video content, user device, application, provider level of service, geography, demographics of viewer, content type and source, subscription and cellular services, network routing, cell towers, cell nodes, and the like may be tracked on an individual video session level of awareness or merged with video quality data from other data sources. Video quality related to individual sessions may then be aggregated based on additional information to track video quality with respect to a given attribute such as video quality within the mobile core such as by cell node, cell tower and the like, rather than simply tracking the general transmission speed of that part of the network over the mobile infrastructure as is currently done.

The ability to track video quality on an individual video session level of awareness at multiple points within the media distribution system 100 and across a plurality of distinct networks, such as the internet and the mobile core, may facilitate the identification of sources of video quality degradation such as network traffic shaping policies (i.e. video flows limited to 3G), bandwidth limitations between various locations within the media distribution network **100,** video quality problems with particular device types, capacity at cache servers at particular hours, and the like. In a non-limiting example, a traffic policy that limits the flow of video data to a certain throughput, such as 56K, may result in video quality degradations such as buffer underflows and the like where the underflows are a result of explicit traffic shaping policies rather than actual bandwidth limitations in the network.

In a non-limiting example, information identifying video quality degradation resulting from band width limitations between a cache server and a mobile core may be used to inform decisions regarding the construction and location of new cache distribution servers closer to the points in the network with the greatest load. Cache distribution servers may be moved downstream based on analysis of video traffic patterns such as within the mobile core, at smart cells, at cell towers, and the like.

In a non-limiting example, the integration of user behavior and video quality may be used to assess business performance and planning. Mobile customers experiencing poor video quality of service, QoS, and quality of experience, QoE, may drop one or more of the providers such as content providers, mobile service providers, and the like. A subsequent analysis of lost customers may facilitate in the identification of one or more contributory causes to the customer loss. If a customer drops the services of the mobile provider, the analysis may facilitate the mobile provider in identifying whether a contributory source was poor incoming video data or poor internal infrastructure. If a customer drops a content provider such as Netflix™, the analysis may facilitate the content provider in identifying whether a contributory source was at the head end, at particular cache servers, in the mobile delivery network, and the like. This information may facilitate the company in identifying improved customer retention policies, capital upgrade initiatives, negotiations with other members of the media distribution network, and the like. Additionally, insight into customers' selections of media content and source may facilitate the identification of new services, pricing, and the like.

In another non-limiting example, it may be possible to combine temporal information with information on viewed content, such as advertisements, and customer location and movement based on cell tower access, and transitions between cells. This information may be used for targeting advertisements, planning infrastructure upgrades and the like. If there is high video usage along certain geographic pathways, cache servers could be linked to the mobile core in such a way as to support a high quality video experience for mobile device users. In a non-limiting example, it may be possible to combine temporal information with information on viewed content for future network planning. If a given cache server is predictably overloaded at certain times of the week it may be desirable to access material from other cache servers during this time frame.

In some embodiments, a virtual video quality probe **210** may operate on the end user device such as a mobile device **118.** The virtual video quality probe **210** may monitor and aggregate TCP/HTTP level statistics of the mobile device **118.** The virtual video quality probe **210** may sit in line between the applications and the TCP/HTTP stack on the mobile device **118** and monitor the requests. Because of the monitoring at this level the virtual video quality probe **210** may be able to detect a stale or corrupt manifest.

In a non-limiting example, the combination of information from a cache server and information derived from a user device such as a mobile device **118** may provide additional insight. A large amount of information about the video quality may be captured at the cache server as well as some information about the session such as user account, application, device and the like. However, if requests for video data stop coming into the cache, additional information from the device is needed to determine the cause. The device may provide information regarding such as whether the video requests stopped because the user paused the operation of because the application crashed, and the like.

It should be understood that any of the features described with respect to one of the embodiments described herein may be similarly applied to any of the other embodiments described herein without departing from the scope of the present disclosure.

The flowchart and block diagrams in the figures illustrate the architecture, functionality, and operation of possible implementations of systems, methods and computer program products according to various embodiments of aspects of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

While only a few embodiments of the present invention have been shown and described, it will be obvious to those skilled in the art that many changes and modifications may be made thereunto without departing from the scope of the present invention as described in the following claims.

The methods and systems described herein may be deployed in part or in whole through a machine that executes computer software, program codes, and/or instructions on a processor. The present invention may be implemented as a method on the machine, as a system or apparatus as part of or in relation to the machine, or as a computer program product embodied in a computer readable medium executing on one or more of the machines. In embodiments, the processor may be part of a server, cloud server, client, network infrastructure, mobile computing platform, stationary computing platform, or other computing platform. A processor may be any kind of computational or processing device capable of executing program instructions, codes, binary instructions and the like. The processor may be or may include a signal processor, digital processor, embedded processor, microprocessor or any variant such as a co-processor (math co-processor, graphic co-processor, communication co-processor and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions and the like described herein may be implemented in one or more thread. The thread may spawn other threads that may have assigned priorities associated with them; the processor may execute these threads based on priority or any other order based on instructions provided in the program code. The processor, or any machine utilizing one, may include memory that stores methods, codes, instructions and programs as described herein and elsewhere. The processor may access a storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache and the like.

A processor may include one or more cores that may enhance speed and performance of a multiprocessor. In embodiments, the process may be a dual core processor, quad core processors, other chip-level multiprocessor and the like that combine two or more independent cores (called a die).

The methods and systems described herein may be deployed in part or in whole through a machine that executes computer software on a server, client, firewall, gateway, hub, router, or other such computer and/or networking hardware. The software program may be associated with a server that may include a file server, print server, domain server, internet server, intranet server, cloud server, and other variants such as secondary server, host server, distributed server and the like. The server may include one or more of memories, processors, computer readable media, storage media, ports (physical and virtual), communication devices, and interfaces capable of accessing other servers, clients, machines, and devices through a wired or a wireless medium, and the like. The methods, programs, or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers, social networks, and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The software program may be associated with a client that may include a file client, print client, domain client, internet client, intranet client and other variants such as secondary client, host client, distributed client and the like. The client may include one or more of memories, processors, computer readable media, storage media, ports (physical and virtual), communication devices, and interfaces capable of accessing other clients, servers, machines, and devices through a wired or a wireless medium, and the like. The methods, programs, or codes as described herein and elsewhere may be executed by the client. In addition, other devices required for execution of methods as described in this application may be considered as a part of the infrastructure associated with the client.

The client may provide an interface to other devices including, without limitation, servers, other clients, printers, database servers, print servers, file servers, communication servers, distributed servers and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

The methods and systems described herein may be deployed in part or in whole through network infrastructures. The network infrastructure may include elements such as computing devices, servers, routers, hubs, firewalls, clients, personal computers, communication devices, routing devices and other active and passive devices, modules and/or components as known in the art. The computing and/or non-computing device(s) associated with the network infrastructure may include, apart from other components, a storage medium such as flash memory, buffer, stack, RAM, ROM and the like. The processes, methods, program codes, instructions described herein and elsewhere may be executed by one or more of the network infrastructural elements. The methods and systems described herein may be adapted for use with any kind of private, community, or hybrid cloud computing network or cloud computing environment, including those which involve features of software as a service (SaaS), platform as a service (PaaS), and/or infrastructure as a service (IaaS).

The methods, program codes, and instructions described herein and elsewhere may be implemented on a cellular network having multiple cells. The cellular network may either be frequency division multiple access (FDMA) network or code division multiple access (CDMA) network. The cellular network may include mobile devices, cell sites, base stations, repeaters, antennas, towers, and the like. The cell network may be a GSM, GPRS, 3G, EVDO, mesh, or other networks types.

The methods, program codes, and instructions described herein and elsewhere may be implemented on or through mobile devices. The mobile devices may include navigation devices, cell phones, mobile phones, mobile personal digital assistants, laptops, palmtops, netbooks, pagers, electronic books readers, music players and the like. These devices may include, apart from other components, a storage medium such as a flash memory, buffer, RAM, ROM and one or more computing devices. The computing devices associated with mobile devices may be enabled to execute program codes, methods, and instructions stored thereon. Alternatively, the mobile devices may be configured to execute instructions in collaboration with other devices. The mobile devices may communicate with base stations interfaced with servers and configured to execute program codes. The mobile devices may communicate on a peer-to-peer network, mesh network, or other communications network. The program code may be stored on the storage medium associated with the server and executed by a computing device embedded within the server. The base station may include a computing device and a storage medium. The storage device may store program codes and instructions executed by the computing devices associated with the base station.

The computer software, program codes, and/or instructions may be stored and/or accessed on machine readable media that may include: computer components, devices, and recording media that retain digital data used for computing for some interval of time; semiconductor storage known as random access memory (RAM); mass storage typically for more permanent storage, such as optical discs, forms of magnetic storage like hard disks, tapes, drums, cards and other types; processor registers, cache memory, volatile memory, non-volatile memory; optical storage such as CD, DVD; removable media such as flash memory (e.g. USB sticks or keys), floppy disks, magnetic tape, paper tape, punch cards, standalone RAM disks, Zip drives, removable mass storage, off-line, and the like; other computer memory such as dynamic memory, static memory, read/write storage, mutable storage, read only, random access, sequential access, location addressable, file addressable, content addressable, network attached storage, storage area network, bar codes, magnetic ink, and the like.

The methods and systems described herein may transform physical and/or or intangible items from one state to another. The methods and systems described herein may also transform data representing physical and/or intangible items from one state to another.

The elements described and depicted herein, including in flow charts and block diagrams throughout the figures, imply logical boundaries between the elements. However, according to software or hardware engineering practices, the depicted elements and the functions thereof may be implemented on machines through computer executable media having a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices having artificial intelligence, computing devices, networking equipment, servers, routers and the like. Furthermore, the elements depicted in the flow chart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. All such variations and modifications are intended to fall within the scope of this disclosure. As such, the depiction and/or description of an order for various steps should not be understood to require a particular order of execution for those steps, unless required by a particular application, or explicitly stated or otherwise clear from the context.

The methods and/or processes described above, and steps associated therewith, may be realized in hardware, software or any combination of hardware and software suitable for a particular application. The hardware may include a computer, which may be a dedicated computing device, specific computing device or particular aspect or component of a specific computing device. The processes may be realized in one or more microprocessors, microcontrollers, embedded microcontrollers, programmable digital signal processors or other programmable device, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine-readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions.

Thus, in one aspect, methods described above and combinations thereof may be embodied in computer executable code that, when executing on one or more computing devices, performs the steps thereof. In another aspect, the methods may be embodied in systems that perform the steps thereof, and may be distributed across devices in a number of ways, or all of the functionality may be integrated into a dedicated, standalone device or other hardware. In another aspect, the means for performing the steps associated with the processes described above may include any of the hardware and/or software described above. All such permutations and combinations are intended to fall within the scope of the present disclosure.

While the disclosure has been disclosed in connection with the preferred embodiments shown and described in detail, various modifications and improvements thereon will become readily apparent to those skilled in the art.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. No language in the specification should be construed as indicating any non-claimed element as essential to the practice of the disclosure.

While the foregoing written description enables one of ordinary skill to make and use what is considered presently to be the best mode thereof, those of ordinary skill will understand and appreciate the existence of variations, combinations, and equivalents of the specific embodiment, method, and examples herein.

**Claims**

1. A method for monitoring the video quality of audio visual content transmitted over a mobile video delivery network facility as a mobile video delivery network facility traffic stream comprising mobile packets, comprising:

   tapping into said mobile video delivery network facility traffic stream in at least two locations using a mobile video quality probe in each of the at least two locations, said mobile video quality probe inspecting each mobile packet;
   organizing traffic of the tapped mobile video delivery network traffic stream into at least one individual common video session identified at both of the at least two locations;
   determining a video quality parameter associated with both of the at least two locations for the at least one individual common video session wherein the video quality parameter is at least one of packet jitter growth, packet loss, instantaneous flow rate balance (IFRB), delay between packets, a jitter statistic, a total time required to receive all packets needed to fully assemble a segment, a statistic of errors in key frames, a measure of HTTP transport quality and a measure of DNS resolution performance;
   aggregating the video quality parameter from the at least two locations; extracting context information from mobile packets of the tapped mobile video delivery network traffic stream for the at least one individual video session, wherein the context information relates both to the mobile video delivery network thereby including at least one of a cell tower, smart node, and serving gateway node, and to user information thereby including at least one of user, subscriber level, device type, application, and content provider; and

transmitting the context information and aggregated video quality parameter to a video quality server.

2. The method of claim 1 wherein the individual video session is associated with at least one of a unique device, a unique user and a unique mobile account.

3. The method of claim 1 wherein at least one of the at least two locations is in at least one of an LTE mobile core between an S5/S8 interface and an S11 interface and the LTE mobile core between an S1 interface and the S5/S8 interface.

4. The method of claim 3 wherein the at least one of the at least two locations in the LTE mobile core is a virtual probe.

5. The method of claim 4, wherein the virtual probe is disposed within a small cell hardware device within a core mobile video delivery network facility.

6. The method of claim 3 wherein at least one of the at least two locations is outside of the LTE mobile core.

7. The method of claim 6, wherein the location outside the LTE mobile core is one of a group of video sources including: a stream ingestion location, cache distribution network, head-end, edge distribution location and Adaptive Bit Rate Sources (ABR).

8. The method of claim 7 further comprising:

monitoring a server that is a source of video traffic for a video session delivered over a mobile video delivery network facility using a passive monitor;
monitoring the server that is the source of video traffic using an active monitor that pulls media segments from the server using the mobile video delivery network facility;
reporting information from the passive monitor and the active monitor to a remote collection and computing system; and
at the remote collection and computing system, correlating response times from the active monitor and the passive monitor to determiner performance of at least one of mobile video delivery network facility and a content delivery network (CDN) facility with respect to at least one metric.

9. A method of claim 8 wherein at least one of the at least two locations is on a mobile viewing device and wherein the at least one metric is selected from the group consisting of caching performance and network response time, a media delivery composite metric, a measure of quality of experience, a measure or real-time capacity of a cell tower to deliver video traffic, a quality-of-service tag, and an indicator of prioritization applied to said mobile viewing device.

10. The method of claim 6 wherein at least one of the at least two locations is on a mobile viewing device.

11. The method of claim 10 wherein the mobile viewing device is using a software development kit SDK.

12. The method of claim 10 further comprising:

monitoring at least the location on a mobile viewing device for at least one behavioral metric; and
reporting the at least one behavioral metric to a collection application.

13. The method of claim 12, wherein the at least one behavioral metric is selected from the group consisting of TCP video access time exceeded, TCP video access failure, buffer fill time exceeded, buffer full condition not met, download rate, video terminated by server, video terminated by network, video sessions counted, video startup time exceeded, video startup time failure, service access time exceeded, service access failure, DNS lookup time exceeded, DNS lookup failures, user-communicated video quality, user selected early session termination, and user selected trick modes.

14. The method of claim 1 wherein the video quality server is one of physical server and a virtual server.

15. The method of claim 1 further comprising:

aggregating user information parameters for the at least one individual video session wherein the user information parameters include location of user, subscriber level, device type, application, user interactions with application; user interactions with device and content provider; and

transmitting at least one user information parameter to said video quality server.

**Patentansprüche**

1. Verfahren zum Überwachen der Videoqualität von audiovisuellem Inhalt, der über eine Einrichtung eines mobilen Videolieferungsnetzes als mobile Pakete umfassender Verkehrsstrom einer Einrichtung eines mobilen Videolieferungsnetzes übertragen wird, das Folgendes beinhaltet:

Anzapfen des genannten Verkehrsstroms der Einrichtung eines mobilen Videolieferungsnetzes an wenigstens zwei Stellen mit einer mobilen Videoqualitätssonde an jeder der wenigstens zwei Stellen, wobei die genannte mobile Videoqualitätssonde jedes mobile Paket inspiziert;

Organisieren von Verkehr des angezapften mobilen Videolieferungsnetz-Verkehrsstroms in wenigstens eine individuelle gemeinsame Videositzung, die an beiden der wenigstens zwei Stellen identifiziert wird;

Bestimmen eines mit beiden der wenigstens zwei Stellen assoziierten Videoqualitätsparameters für die wenigstens eine individuelle gemeinsame Videositzung, wobei der Videoqualitätsparameter wenigstens eines aus Paket-Jitter-Wachstum, Paketverlust, IFRB-(Instantaneous Flow Rate Balance)-Verzögerung zwischen Paketen, Jitter-Statistik, Gesamtzeit, die zum Empfangen aller zum völligen Zusammensetzen eines Segments benötigten Pakete nötig ist, Statistik von Fehlern in Schlüssel-Frames, einem Maß für die HTTP-Transportqualität und einem Maß für die DNS-Auflösungsleistung ist;

Aggregieren des Videoqualitätsparameters von den wenigstens zwei Stellen;

Extrahieren von Kontextinformationen von mobilen Paketen des angezapften mobilen Videolieferungsnetz-Verkehrsstroms für die wenigstens eine individuelle Videositzung, wobei sich die Kontextinformationen sowohl auf das mobile Videolieferungsnetz beziehen, so dass sie wenigstens eines aus einem Mobilfunkmast, einem Smart-Knoten und einem Serving-Gateway-Knoten beinhalten, und sich auf Benutzerinformationen beziehen, so dass sie wenigstens eines aus Benutzer, Teilnehmerebene, Gerätetyp, Anwendung und Inhaltsanbieter beinhalten; und

Übertragen der Kontextinformationen und des aggregierten Videoqualitätsparameters auf einen Videoqualitätsserver.

2. Verfahren nach Anspruch 1, wobei die individuelle Videositzung mit wenigstens einem aus einem eindeutigen Gerät, einem eindeutigen Benutzer und einem eindeutigen Mobilfunkkonto assoziiert ist.

3. Verfahren nach Anspruch 1, wobei wenigstens eine der wenigstens zwei Stellen in einem LTE-Mobilfunkkern zwischen einer S5/S8 Schnittstelle und einer S11-Schnittstelle und/oder dem LTE-Mobilfunkkern zwischen einer S1-Schnittstelle und der S5/S8-Schnittstelle ist.

4. Verfahren nach Anspruch 3, wobei die wenigstens eine der wenigstens zwei Stellen im LTE-Mobilfunkkern eine virtuelle Sonde ist.

5. Verfahren nach Anspruch 4, wobei die virtuelle Sonde in einem kleinzelligen Hardware-Gerät mit einer Einrichtung eines Mobilfunk-Videolieferungskernnetzes angeordnet ist.

6. Verfahren nach Anspruch 3, wobei sich wenigstens eine der wenigstens zwei Stellen außerhalb des LTE-Mobilfunkkerns befindet.

7. Verfahren nach Anspruch 6, wobei die Stelle außerhalb des LTE-Mobilfunkkerns ein Mitglied einer Gruppe von Videoquellen ist, die Folgendes beinhaltet: einen Stromaufnahmeort, ein Cache-Verteilungsnetzwerk, ein Head-End, einen Edge-Verteilungsort und ABR-(Adaptive Bit Rate)-Quellen.

8. Verfahren nach Anspruch 7, das ferner Folgendes beinhaltet:

Überwachen eines Servers, der eine Videoverkehrsquelle für eine Videositzung ist, die über eine Einrichtung eines Mobilfunk-Videolieferungsnetzes mit einem passiven Monitor geliefert wird;

Überwachen des Servers, der die Videodatenquelle ist, mit einem aktiven Monitor, der Mediensegmente aus dem Server mittels der Einrichtung für ein Mobilfunk-Lieferungsnetz zieht;

Melden von Informationen von dem passiven Monitor und dem aktiven Monitor an ein fernes Sammel- und Computersystem; und

Korrelieren, am fernen Sammel- und Computersystem, von Antwortzeiten von dem aktiven Monitor und dem passiven Monitor zum Bestimmen von Leistung von wenigstens einer Einrichtung eines Mobilfunk-Videolieferungsnetzes und einer CDN-(Content Delivery Network)-Einrichtung mit Bezug auf wenigstens eine Metrik.

9. Verfahren nach Anspruch 8, wobei wenigstens eine der wenigstens zwei Stellen auf einem mobilen Sichtgerät ist und wobei die wenigstens eine Metrik ausgewählt ist aus der Gruppe bestehend aus Caching-Leistung und Netzwerkansprechzeit, einer zusammengesetzten Medienlieferungsmetrik, einem Maß für Erfahrungsqualität, einem Maß oder Echtzeitkapazität eines Mobilfunkmasts zum Liefern von Videoverkehr, einem Dienstgüte-Tag und einem Priorisierungsindikator, angewendet auf das genannte mobile Sichtgerät.

10. Verfahren nach Anspruch 6, wobei wenigstens eine der wenigstens zwei Stellen auf einem mobilen Sichtgerät ist.

11. Verfahren nach Anspruch 10, wobei das mobile Sichtgerät einen Software-Entwicklungskit SDK benutzt.

12. Verfahren nach Anspruch 10, das ferner Folgendes beinhaltet:

Überwachen wenigstens der Stelle auf einem mobilen Sichtgerät für wenigstens eine Verhaltensmetrik; und Melden der wenigstens einen Verhaltensmetrik an eine Sammelanwendung.

13. Verfahren nach Anspruch 12, wobei die wenigstens eine Verhaltensmetrik ausgewählt ist aus der Gruppe bestehend aus überschrittener TCP-Videozugriffszeit, erfolglosem TCP-Videozugriff, überschrittener Pufferfüllzeit, nicht erfüllter Puffer-Voll-Bedingung, Download-Rate, Serverterminiertem Video, Netzwerk-terminiertem Video, gezählten Videositzungen, überschrittener Videostartzeit, erfolgloser Videostartzeit, überschrittener Dienstzugriffszeit, erfolgloser Dienstzugriff, überschrittener DNS-Nachschlagzeit, DNS-Nachschlagfehlversuchen, vom Benutzer übermittelter Videoqualität, vom Benutzer gewählter früher Sitzungsbeendigung und vom Benutzer gewählten Trick-Modi.

14. Verfahren nach Anspruch 1, wobei der Videoqualitätsserver ein physischer Server oder ein virtueller Server ist.

15. Verfahren nach Anspruch 1, das ferner Folgendes beinhaltet:

Aggregieren von Benutzerinformationsparametern für die wenigstens eine individuelle Videositzung, wobei die Benutzerinformationsparameter Benutzerstandort, Teilnehmerebene, Gerätetyp, Anwendung, Benutzerinteraktionen mit der Anwendung; Benutzerinteraktionen mit Gerät und Inhaltsanbieter beinhalten; und Übertragen von wenigstens einem Benutzerinformationsparameter zu dem genannten Videoqualitätsserver.

## Revendications

1. Procédé de surveillance de la qualité vidéo d'un contenu visuel audio transmis sur une installation de réseau de distribution vidéo mobile en tant que flux de trafic d'installation de réseau de distribution vidéo mobile comprenant des paquets mobiles, comprenant :

un sondage dans ledit flux de trafic d'installation de réseau de distribution vidéo mobile à au moins deux emplacements en utilisant une sonde de qualité vidéo mobile dans chacun des au moins deux emplacements, ladite sonde de qualité vidéo mobile inspectant chaque paquet mobile ;
l'organisation du trafic du flux de trafic d'installation de réseau de distribution vidéo mobile sondé en au moins une session vidéo commune individuelle identifiée aux deux des au moins deux emplacements ;
la détermination d'un paramètre de qualité vidéo associé aux deux des au moins deux emplacements pour l'au moins une session vidéo commune individuelle, le paramètre de qualité vidéo étant au moins un d'une croissance de gigue de paquet, d'une perte de paquet, d'un équilibre de débit de flux instantané (IFRB), d'un retard entre les paquets, d'une statistique de gigue, d'un temps total requis pour recevoir tous les paquets nécessaires pour assembler complètement un segment, une statistique d'erreurs dans des trames clés, une mesure de qualité de transport HTTP et une mesure de performance de résolution DNS ;
l'agrégation du paramètre de qualité vidéo provenant des au moins deux emplacements ;
l'extraction d'informations de contexte à partir de paquets mobiles du flux de trafic d'installation de réseau de distribution vidéo mobile sondé pour l'au moins une session vidéo individuelle, dans lequel les informations de contexte se rapportent à la fois au réseau de distribution vidéo mobile comportant ainsi au moins une d'une station cellulaire, d'un nœud intelligent, et d'un nœud de passerelle de desserte, et à des informations d'utilisateur comportant ainsi au moins un d'un utilisateur, d'un niveau d'abonné, d'un type de dispositif, d'une application, et d'un fournisseur de contenu ; et

la transmission des informations de contexte et paramètre de qualité vidéo agrégé à un serveur de qualité vidéo.

2. Procédé selon la revendication 1 dans lequel la session vidéo individuelle est associée à au moins un d'un dispositif unique, d'un utilisateur unique et d'un compte mobile unique.

3. Procédé selon la revendication 1 dans lequel au moins un des au moins deux emplacements est situé dans au moins un d'un cœur mobile LTE entre une interface S5/S8 et une interface S11 et du cœur mobiles LTE entre une interface SI et l'interface S5/S8.

4. Procédé selon la revendication 3 dans lequel l'au moins un des au moins deux emplacements dans le cœur mobile LTE est une sonde virtuelle.

5. Procédé selon la revendication 4 dans lequel la sonde virtuelle est disposée dans un dispositif matériel de petite cellule au sein d'une installation de réseau de distribution vidéo mobile centrale.

6. Procédé selon la revendication 3 dans lequel au moins un des au moins deux emplacements est situé à l'extérieur du cœur mobile LTE.

7. Procédé selon la revendication 6, dans lequel l'emplacement extérieur au cœur mobile LTE est un d'un groupe de sources vidéo comportant un emplacement d'ingestion de flux, un réseau de distribution de cache, une tête de réseau, un emplacement de distribution périphérique et des sources à débit binaire adaptatif (ABR).

8. Procédé selon la revendication 7 comprenant en outre :

la surveillance d'un serveur qui est une source de trafic vidéo pour une session vidéo délivrée sur une installation de réseau de distribution vidéo mobile en utilisant un dispositif de surveillance passif ;
la surveillance du serveur qui est la source du trafic vidéo dans un dispositif de surveillance actif qui extrait des segments multimédia du serveur utilisant l'installation de réseau de distribution vidéo mobile ;
la communication d'informations en provenance du dispositif de surveillance passif et du dispositif de surveillance actif à un système de collecte et de calcul distant ; et
au niveau du système de collecte et de calcul distant, la corrélation de temps de réponse provenant du dispositif de surveillance actif et du dispositif de surveillance passif pour déterminer la performance d'au moins une d'une installation de réseau de distribution vidéo mobile et d'une installation de réseau de distribution de contenu (CDN) relativement à au moins une métrique.

9. Procédé selon la revendication 8 dans lequel au moins un des au moins deux emplacements est situé sur un dispositif de visualisation mobile et dans lequel l'au moins une métrique est sélectionnée dans le groupe consistant en performance de mise en cache et temps de réponse de réseau, métrique composite de distribution multimédia, mesure de qualité d'expérience, mesure de la capacité en temps réel d'une station cellulaire à redistribuer un trafic vidéo, étiquette de qualité de service, et indicateur de priorisation appliqué audit dispositif de visualisation mobile.

10. Procédé selon la revendication 6 dans lequel au moins un des au moins deux emplacements est situé sur un dispositif de visualisation mobile.

11. Procédé selon la revendication 10 dans lequel le dispositif de visualisation mobile utilise un kit de développement logiciel SDK.

12. Procédé selon la revendication 10 comprenant en outre :

la surveillance au moins de l'emplacement sur un dispositif de visualisation mobile à la recherche d'au moins une métrique comportementale ; et
la communication de l'au moins une métrique comportementale à une application de collecte.

13. Procédé selon la revendication 12, dans lequel l'au moins une métrique comportementale est sélectionnée dans le groupe consistant en temps d'accès vidéo TCP dépassé, échec d'accès vidéo TCP, temps de remplissage de mémoire tampon dépassé, condition de mémoire tampon remplie non satisfaite, débit de téléchargement, vidéo terminée par le serveur, vidéo terminée par le réseau, sessions vidéo comptées, temps de démarrage vidéo dépassé, échec de temps de démarrage vidéo, temps d'accès au service dépassé, échec d'accès au service, temps de consultation DNS dépassé, échec de consultation DNS, qualité vidéo communiquée par l'utilisateur, terminaison de session précoce sélectionnée par l'utilisateur, modes de lecture spéciale sélectionnés par l'utilisateur.

14. Procédé selon la revendication 1 dans lequel le serveur de qualité vidéo est un d'un serveur physique et d'un serveur virtuel.

15. Procédé selon la revendication 1 comprenant en outre :

l'agrégation de paramètres d'information d'utilisateur pour l'au moins une session vidéo individuelle, les paramètres d'information d'utilisateur comportant l'emplacement de l'utilisateur, le niveau d'abonné, le type de dispositif, l'application, les interactions de l'utilisateur avec l'application ; les interactions de l'utilisateur avec le dispositif et le fournisseur de contenu ; et
la transmission d'au moins un paramètre d'informations d'utilisateur audit serveur de qualité vidéo.

*FIG. 1*

*FIG. 2*

Network
Connection *302* → Network Switch/Router ← *304* Network
Connection
*306*

*308* — Mirror Port
*310*

Computing Element

**FIG. 3A**

Network
Connection *312* → Passive Network Tap ← *314* Network
Connection
*316*

*318* — Tap Port
*310*

Computing Element

**FIG. 3B**

Network
Connection *320* → Computing Element ← *322* Network
Connection
*310*

**FIG. 3C**

*FIG. 4*

EP 3 425 909 B1

208

502

INSPECT MOBILE PACKETS

504

FILTER SINGLE PDP CONTEXT

506

EXTRACT CONTEXT

508

EVALUATE VIDEO QUALITY

510

COMPUTE VIDEO STATISTICS

512

REPORT VIDEO DATA

MOBILE VIDEO QUALITY PROBE

*FIG. 5*

FIG. 6

FIG. 7

FIG. 8

FIG. 9

47

*FIG. 10*

*FIG. 11*

*FIG. 12*

*FIG. 13*

_310_

_1402_

_1404_

_1416_

Network Interface

_1418_

Network Interface

_1420_

Filter and Compute Engine

_1422_

_1424_

Network Interface

Computing Element

_1426_

_1428_

Workstation Control Software and Logging System

FIG. 14

*1518*

Bits
Received

~1502

1504

Adder

1506

Packet
Received
Status

1510

Nominal
Media Rate

Load

1508

Counter

Clr

1516

Clear

1512

Counter Value Indicates Instantaneous Virtual
Buffer Fill Level

Part of Filter and
Compute Engine

*FIG. 15*

FIG. 16

| CRC | MPEG-2 188 Byte Packet | MPEG-2 188 Byte Packet | MPEG-2 188 Byte Packet | MPEG-2 188 Byte Packet | MPEG-2 188 Byte Packet | MPEG-2 188 Byte Packet | MPEG-2 188 Byte Packet | UDP | IP | Ethernet |
|---|---|---|---|---|---|---|---|---|---|---|

*1708*  *1702*  Format of typical MPEG-2 TS over IP Packet  *1704*  *1706*  *1710*

PRIOR ART

*FIG. 17*

FIG. 18

*FIG. 19*

*FIG. 20*

EP 3 425 909 B1

MPEG Analysis for Singulus G1-T/TAPS' Port1 on Card 1 — 2100

Available Streams
Current number of Active Streams:1          Analyzing Stream

| | Type | Port | Dest IP | Source IP | Dest Port | Source | MDI | CC Loss | Bitrate | Start Time | S |
|---|---|---|---|---|---|---|---|---|---|---|---|
| □ □ | | Port2 | 0.000 | 0.000 | 0 | 0 | 0.000 | 0 | 2500030 | Fri, Sep 13 | |

2114

Media Delivery Intex | Arrival - Time Histogram | Record | Send Out As

**Stream statistics**

2102 — Bitrate (Mb/s)    2.500030      I P Port      0.0000
2104 — Avg rate (Mb/s)   2.496641      Min Pkt Size  1362
2106 — Dev rate (Mb/s)   0.003380      Max Pkt Size  1363
         CC Error         0            Dcontinuum    0    2118

**Network statistics**

Cum uti %    85.15
Min uti %    85.15
Max uti %    85.15

2116 — IFR (Mb/s)    IFRD (%)    Stram Uti (%)    Aug Rate (Mb/s)
2120

| IFR (Mb/s) | IFRD (%) | Stram Uti (%) | Aug Rate (Mb/s) |
|---|---|---|---|
| 0.000  5.000 | 100.00  100.00 | 0.00  100.00 | 0.000  5.000 |
| Min  2.101422 | Min  0.33 | Min  0.282 | Min  2.105511 |
| Max 2.500066 | Max  0.27 | Max  0.263 | Max 2.500066 |

2110          4.2271:0
Delay factor (nis)    Media Loss Rate    — 2112

| Delay factor (nis) | Media Loss Rate |
|---|---|
| 4.23 | 0.00 |
| 0.00  100.00 | 0.00  100.00 |
| Min  4.227148 | Min  0.000 |
| Max  4.230349 | Max  0.000 |

Configure    Clear

*FIG. 21*

EP 3 425 909 B1

FIG. 22

*FIG. 23*

EP 3 425 909 B1

*FIG. 24*

EP 3 425 909 B1

2500

2502 Accessing user data from the customer premises equipment

2504 Processing the user data

2506 Storing the user data

2508 Maintaining log of user commands

2510 Maintaining log of Quality of Service problems

2512 Transmitting data through the network interface device to a remote location

FIG. 25

*FIG. 26*

*FIG. 27*

FIG. 28

Master iCMS

_2610_

_2626'_

_2602_  _2602_  _2602_

_2602_

FIG. 29

EP 3 425 909 B1

FIG. 30

*FIG. 31*

2632'

*FIG. 32A*

2632"

*FIG. 32B*

2610

2602

Cricket FrameGraber

Thumbnails & Statistics

2627
Composite Video & Audio

STB

IR Blaster

2636

2620

iCMS
Content Monitoring System

SCTE-35 Message

2602'

Singulus G1-T

Ad Splicer

3370

SCTE-35 Message

*FIG. 33*

3400

3402

receiving an incoming AV stream at one or
more AV probes at a native frame rate

3404

capturing thumbnail of the incoming AV
stream at a sampling rate which is less than
the native frame rate, to form a thumbnail
stream

3406

timestamping the thumbnail stream

3408

transmitting the thumbnail stream to a
monitoring engine

3410

forwarding the incoming AV stream through
the one or more AV output ports substantially
in real-time

FIG. 34

*FIG. 35*

3524
client information
collection process

3536

3531

3544

3552
aggregation
application

2534

3522

server information
collection process — 3550

web server
application — 3560

3530
network

video content →

3538

3532

3546

3570

3526
client information
collection process

3572
cellular
network/
bridge

3528
client information
collection process

2520
network

3533

3548

3540

3542

video content

EP 3 425 909 B1

71

_3550_

_3602_
receive video content information

_3604_
receive end destination information

_3606_
aggregate information

_3608_
generate aggregated information

*FIG. 36*

*3524,3526,3528*

3700
detect video reception instance

3702
generate message

3704
transmit message

3706
generate video content information message

3708
generate end destination information message

*FIG. 37*

*3800*

*3802*

*3804*

send info

*3806*

*FIG. 38*

EP 3 425 909 B1

FIG. 39

75

**EP 3 425 909 B1**

## REFERENCES CITED IN THE DESCRIPTION

**Patent documents cited in the description**

- US 2009300688 A1

- US 2009097413 A1

**Non-patent literature cited in the description**

- Technical Report 101 290. European Telecommunications Standards Institute (ETSI)